(19) **Europäisches Patentamt / European Patent Office / Office européen des brevets**

(11) **EP 3 812 747 B1**

(12) **EUROPEAN PATENT SPECIFICATION**

(45) Date of publication and mention
of the grant of the patent:
**07.05.2025 Bulletin 2025/19**

(21) Application number: **19823701.8**

(22) Date of filing: **19.06.2019**

(51) International Patent Classification (IPC):
**G01N 21/88** *(2006.01)* **G01B 11/30** *(2006.01)*
**G06T 7/00** *(2017.01)*

(52) Cooperative Patent Classification (CPC):
**G06T 7/0004; G01N 21/8806; G01N 21/8851;**
G01N 2021/8829; G01N 2021/8867;
G06T 2207/30156

(86) International application number:
**PCT/JP2019/024347**

(87) International publication number:
**WO 2019/244946 (26.12.2019 Gazette 2019/52)**

(54) **DEFECT IDENTIFYING METHOD, DEFECT IDENTIFYING DEVICE, DEFECT IDENTIFYING PROGRAM, AND RECORDING MEDIUM**

FEHLERIDENTIFIZIERUNGSVERFAHREN, FEHLERIDENTIFIZIERUNGSVORRICHTUNG, FEHLERIDENTIFIZIERUNGSPROGRAMM UND AUFZEICHNUNGSMEDIUM

PROCÉDÉ D'IDENTIFICATION DE DÉFAUT, DISPOSITIF D'IDENTIFICATION DE DÉFAUT, PROGRAMME D'IDENTIFICATION DE DÉFAUT ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2018 JP 2018118536**
**22.06.2018 JP 2018118537**
**22.06.2018 JP 2018118538**

(43) Date of publication of application:
**28.04.2021 Bulletin 2021/17**

(73) Proprietor: **Konica Minolta, Inc.**
**Tokyo 100-7015 (JP)**

(72) Inventor: **KASHIHARA, Masato**
**Tokyo 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
**JP-A- 2000 321 039    JP-A- 2001 235 319**
**JP-A- 2002 005 844    JP-A- 2004 191 070**
**JP-A- 2016 223 911    JP-A- 2016 223 911**
**JP-A- 2017 156 097    JP-A- H1 163 959**
**US-A1- 2015 130 927**

**Description**

Technical Field

The present invention relates to a defect identifying method, a defect identifying device, a defect identifying program, and a recording medium having the defect identifying program recorded, in which a defect generated on a surface of a measurement object is identified.

Background Art

In a surface defect identifying device disclosed in JP 9-318337 A, an illuminating means having a portal shape irradiates an inspection object with illumination having a bright-and-dark pattern formed therein, and an image of an inspection surface of the inspection object is captured by each of a plurality of image capturing devices having the same portal shape and installed with an image capturing device fixing means. Then, a luminance level of the inspection surface is measured by applying image processing to each of captured images, and defect inspection is performed by comparing the luminance level with a threshold value.

A surface defect inspection device disclosed in JP 8-86634 A irradiates an inspection object with illumination having a bright-and-dark pattern. An image capturing means acquires image data by capturing an image of a portion irradiated. Then, defect inspection is performed by analyzing the image data for each frequency component. Since the analysis is performed separately for each frequency component, it is possible to suppress erroneous detection of detecting an extremely thin uneven portion like orange peel as a defect, and a defect can be detected more precisely.

Patent Literature JP 2016223911 A discloses an inspection system which comprises an illuminating unit, time-correlation image generating unit, arithmetic processing unit, anomaly determination unit, and abnormal size detection unit. The time-correlation image generating unit generates a complex time-correlation image whose characteristic corresponds to a phase distribution of the complex time-correlation image. The abnormal size detection unit detects sizes based on the characteristic corresponding to a normal range of the phase distribution.

Citation List

Patent Literature

Patent Literature 1: JP 9-318337 A
Patent Literature 2: JP 8-86634 A

Summary of Invention

Technical Problem

However, a plurality of image capturing devices is required in a surface defect identifying device disclosed in JP 9-318337 A, which makes the device upsized and complex. Additionally, in a case of capturing images with the plurality of image capturing devices, there may be a case where control of the image capturing devices is complex and a time and labor are spent for image processing. Considering this, there may be a possibility that a lot of time and labor are spent for defect inspection work.

Additionally, in a case where a defect on a surface of an inspection object is detected by irradiating the inspection object with a bright-and-dark pattern like a surface defect inspection device of JP 8-86634 A, a luminance level of a defect portion in image data fluctuates between a center portion and an edge portion of an image capturing range due to characteristics of an image capturing means even though each defect has the same size and the same shape. Therefore, when a defect is detected by performing binarization with a preset threshold value, there may be a possibility that an uneven portion that is not a defect on a surface may be erroneously determined as a defect, depending on a position of a defect in a captured image. That is, there may be a possibility that a defect is erroneously detected depending on a position of each defect.

Accordingly, the present invention is directed to providing a defect identifying method, a defect identifying device, a defect identifying program, and a recording medium having the defect identifying program recorded, in which a defect on a surface can be accurately identified.

Solution to Problem

To achieve at least one of the above-described objects, a defect identifying method on which an aspect of the present invention is reflected is a defect identifying method as defined in claim 1, a defect identifying method as defined in claim 3 and a defect identifying method as defined in claim 5.

To achieve at least one of the above-described objects, a defect identifying device on which an aspect of the present invention is reflected is a defect identifying device as defined in claim 7, a defect identifying device as defined in claim 9 and a defect identifying device as defined in claim 11.

To achieve at least one of the above-described objects, a defect identifying program on which an aspect of the present invention is reflected is a defect identifying program as defined in claim 13, a defect identifying program as defined in claim 14 and a defect identifying program as defined in claim 15.

Advantageous Effects of Invention

According to the present invention, it is possible to provide the defect identifying method, the defect identifying device and the defect identifying program, in which a defect on a surface can be accurately identified.

Brief Description of Drawings

Fig. 1 is a schematic diagram illustrating a state in which defect identifying is performed by a defect identifying device according to the present invention for a vehicle that is an example of a measurement object.
Fig. 2 is a block diagram illustrating a configuration of the defect identifying device according to the present invention.
Fig. 3 is a schematic diagram illustrating an exemplary defect formed on a surface of the vehicle illustrated in Fig. 1.
Fig. 4 is a schematic plan view illustrating a state in which defect identifying is performed in the defect identifying device.
Fig. 5 is a diagram illustrating a captured image obtained by capturing an image of a portion irradiated with pattern illumination.
Fig. 6 is a diagram illustrating luminance distribution along a straight line passing through a bright portion defect and a dark portion defect illustrated in Fig. 5.
Fig. 7 is a diagram illustrating luminance distribution of defects having different sizes.
Fig. 8 is a diagram illustrating light propagation paths in a case where distances from an image capturing unit to defects are different.
Fig. 9 is a diagram illustrating an exemplary normalization database.
Fig. 10 is a table illustrating shape variables of a correction database.
Fig. 11 is a diagram illustrating an exemplary correction database.
Fig. 12 is a flowchart illustrating defect identifying operation of the defect identifying device.
Fig. 13 is a schematic view illustrating a state in which defect candidates are detected at different places of a vehicle.
Fig. 14 is a diagram illustrating luminance distribution of the defect candidates detected in the vehicle.
Fig. 15 is a diagram illustrating corrected luminance contrast obtained by correcting luminance contrast calculated from the luminance distribution illustrated in Fig. 14.
Fig. 16 is a diagram illustrating correction of luminance contrast of each of defect candidates at the time of identifying a defect.
Fig. 17 is a cross-sectional shape of each defect formed on a measurement object.
Fig. 18 is a diagram illustrating a threshold value database.
Fig. 19 is a schematic diagram of an evaluation database.
Fig. 20 is a block diagram illustrating a configuration of a defect identifying device according to a second embodiment.
Fig. 21 is a diagram illustrating a captured image where defect candidates are formed at different positions.
Fig. 22 is a schematic plan view illustrating a state of identifying defects in a case where there are defect candidates at different positions inside a captured image.
Fig. 23 is a diagram illustrating, on a captured image, intra-image position variables of a correction database.
Fig. 24 is a diagram illustrating an exemplary correction database.
Fig. 25 is a diagram illustrating intra-image position variables in a captured image of a correction database.
Fig. 26 is a diagram illustrating another exemplary correction database.
Fig. 27 is a diagram illustrating, on a captured image, intra-image position variables of another exemplary correction database.
Fig. 28 is a diagram illustrating still another exemplary correction database.

Fig. 29 is a flowchart illustrating defect identifying operation of the defect identifying device.

Fig. 30 is a diagram illustrating luminance distribution of the defect candidates of the captured image illustrated in Fig. 22.

Fig. 31 is a diagram illustrating corrected luminance contrast obtained by correcting luminance contrast calculated from the luminance distribution illustrated in Fig. 30.

Fig. 32 is a diagram illustrating correction of luminance contrast of each of defect candidates at the time of identifying a defect.

Fig. 33 is a diagram illustrating still another exemplary correction database.

Fig. 34 is a block diagram illustrating a configuration of a defect identifying device according to a fourth embodiment.

Fig. 35 is a schematic plan view illustrating a state in which defect identifying is performed in the defect identifying device.

Fig. 36 is a diagram illustrating positions of defect candidates in a bright portion of a bright-and-dark pattern of a captured image.

Fig. 37 is a diagram illustrating intra-pattern position variables of the correction database in a bright portion of the bright-and-dark pattern.

Fig. 38 is a diagram illustrating still another exemplary correction database.

Fig. 39 is a diagram illustrating, in a bright-and-dark pattern, intra-pattern position variables of the correction database illustrated in Fig. 38.

Fig. 40 is a diagram illustrating still another exemplary correction database.

Fig. 41 is a diagram illustrating, on a captured image, intra-pattern position variables of the correction database illustrated in Fig. 40.

Fig. 42 is a diagram illustrating still another exemplary correction database.

Fig. 43 is a flowchart illustrating defect identifying operation of the defect identifying device.

Fig. 44 is a diagram illustrating luminance distribution of the defect candidates in the captured image illustrated in Fig. 36.

Fig. 45 is a diagram illustrating corrected luminance contrast obtained by correcting luminance contrast calculated from the luminance distribution illustrated in Fig. 44.

Fig. 46 is a diagram illustrating correction of luminance contrast of each of defect candidates at the time of identifying a defect.

Fig. 47 is a diagram illustrating still another exemplary correction database.

Description of Embodiments

An embodiment of the present invention will be described with reference to the drawings. Note that, in each of the drawings, components denoted by the same reference signs are the same components. Additionally, as for the same component, a detailed description will be omitted as appropriate. Furthermore, a measurement object may be any object, but the measurement object is a vehicle CA in the present document.

<First Embodiment>

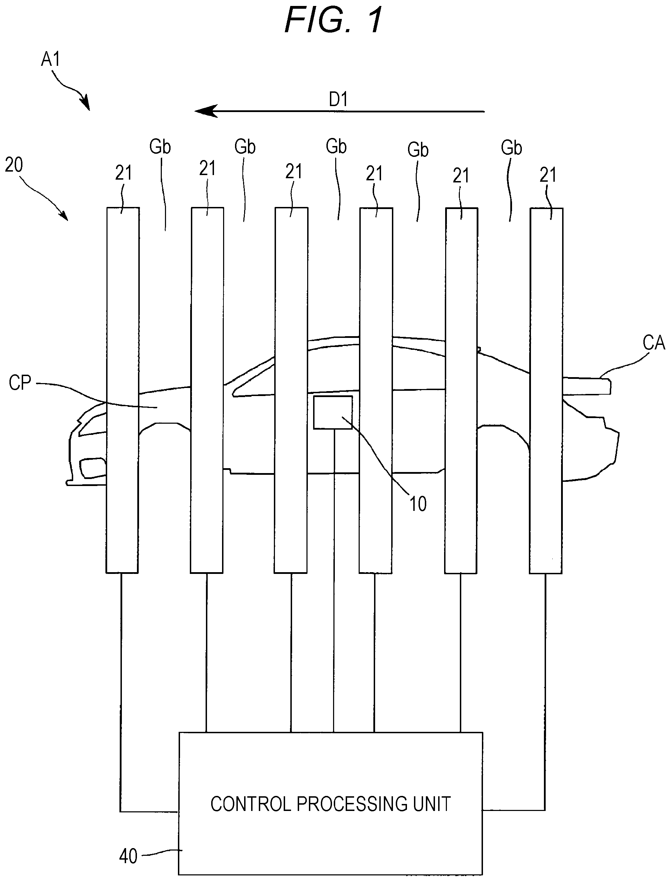

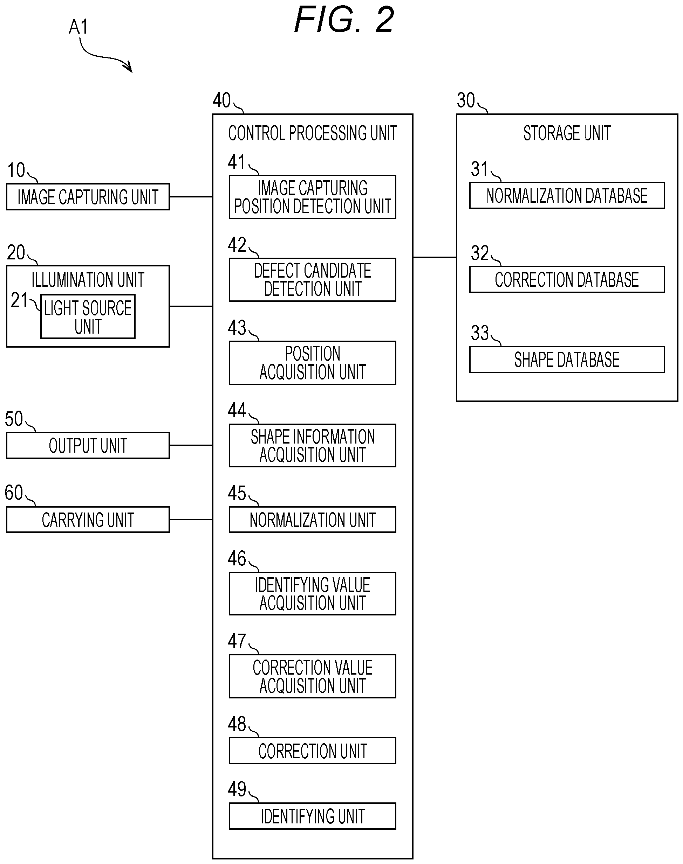

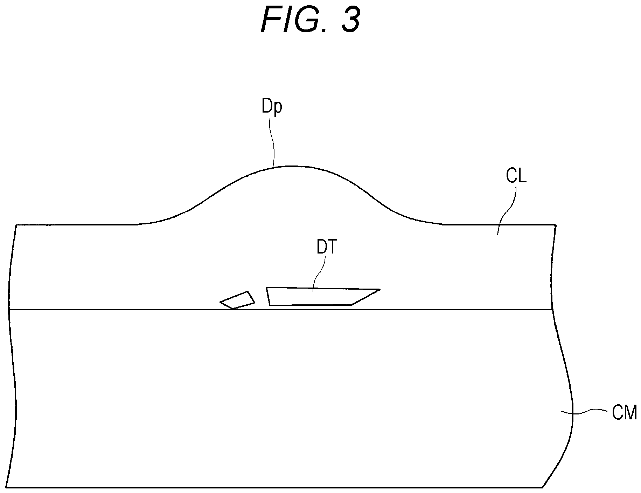

Fig. 1 is a schematic diagram illustrating a state in which defect identifying is performed by a defect identifying device according to the present invention for a vehicle that is an example of a measurement object. Fig. 2 is a block diagram illustrating a configuration of the defect identifying device according to the present invention. Fig. 3 is a schematic diagram illustrating an exemplary defect formed on a surface of the vehicle illustrated in Fig. 1. Note that Fig. 3 is a cross-sectional view of a surface of a vehicle CA, but hatching indicating the cross-section is omitted. As illustrated in Fig. 1, a defect identifying device A1 in the present embodiment identifies a defect on the surface of the vehicle CA that is an example of the measurement object. Additionally, in the defect identifying device A1 of the present embodiment, a defect on a side surface CP is identified while using the side surface CP of the vehicle CA as an inspection region. Note that there may be a case where the reference sign CP is recited as the inspection region CP or the side surface CP in the following description.

Normally, coating is applied to the surface of the vehicle CA. There may be a case where the coating of the vehicle CA has a single-layer structure or a two-layer structure. For example, in a case where the coating of the vehicle CA has the two-layer structure, a first coating layer may be a metallic layer CM and a second coating layer above the first coating layer may be a clear layer CL. Also, there may be a case where coating has a multi-layer structure. When the coating is applied to the surface of the vehicle CA, there may be a case where the surface protrudes more than a periphery thereof as illustrated in Fig. 3 due to a fact that an excessive coating material is applied or foreign matters DT such as dust and dirt enter between the metallic layer CM and the clear layer CL. Such a bulging portion will be defined as a defect Dp in the present embodiment. Note that examples of a defect on the surface of the vehicle CA include: a defect formed by an excessive flow of the coating material; a defect formed by the surface being blown by spaying force of the coating material, and the like.

Details thereof will be described later, but the defect identifying device A1 of the present embodiment can identify these defects as well. In the following description, the description will be provided, assuming that a defect Dp that bulges more than other portions is formed.

<Entire Configuration of Defect Identifying Device A1>

As illustrated in Fig. 2, the defect identifying device A1 includes an image capturing unit 10, an illumination unit 20, a storage unit 30, a control processing unit 40, an output unit 50, and a carrying unit 60. The defect identifying device A1 irradiates the side surface CP of the moving vehicle CA with illumination light from the illumination unit 20 (see Fig. 1). A captured image is generated by the image capturing unit 10 capturing an image of the surface of the inspection region CP irradiated with the illumination light. In the control processing unit 40, image processing is applied to the captured image, and presence or absence of a defect in the inspection region CP is identified.

<Regarding Image Capturing Unit 10>

The image capturing unit 10 includes an image capturing element such as a CMOS or a CCD. The image capturing unit 10 is a so-called camera, and a lens is provided on a front face of the image capturing unit 10. In the image capturing unit 10, the illumination light emitted from the illumination unit 20 and reflected at the inspection region CP is incident on the image capturing element, and an image of the incident light is formed at the image capturing element. The image capturing element generates, as a captured image, a picture of the incident light with which the image has been formed, and the image capturing unit 10 transmits the generated captured image to the control processing unit 40.

<Regarding Illumination Unit 20>

The illumination unit 20 emits the illumination light toward the inspection region CP of the vehicle CA that is moved in a movement direction D1. As described above, the vehicle CA is an example of the measurement object. Additionally, the inspection region CP is the side surface of the vehicle CA. The illumination unit 20 projects, to the inspection region CP, pattern illumination in which a bright portion and a dark portion having lower luminance than the bright portion are alternately arranged.

The illumination unit 20 will be described in detail. As illustrated in Fig. 1, the illumination unit 20 includes a plurality of light source units 21 (six light source units here). The six light source units 21 are arrayed along the movement direction D1 of the vehicle CA. Each of the light source units 21 has a rectangular parallelepiped shape extending in a direction orthogonal to the movement direction of the vehicle CA. Note that the light source units 21 are arrayed in a manner such that a bright portion B and a dark portion G are arrayed at a preset interval, for example, an equal interval in a captured image output from the image capturing unit 10.

In a light source unit 21, for example, a plurality of LEDs is two-dimensionally arrayed on a plane. In addition, a diffusion plate is arranged on front faces of the LEDs. Consequently, light emitted from the LEDs is diffused. Then, the light emitted from the plurality of LEDs emits planar light having substantially uniform luminance on the plane when the light is emitted from the diffusion plate. However, the configuration is not limited thereto. As the light source unit 21, an electric discharge light emitter such as a discharge tube or a planar light source such as an organic EL may also be used instead of the LEDs.

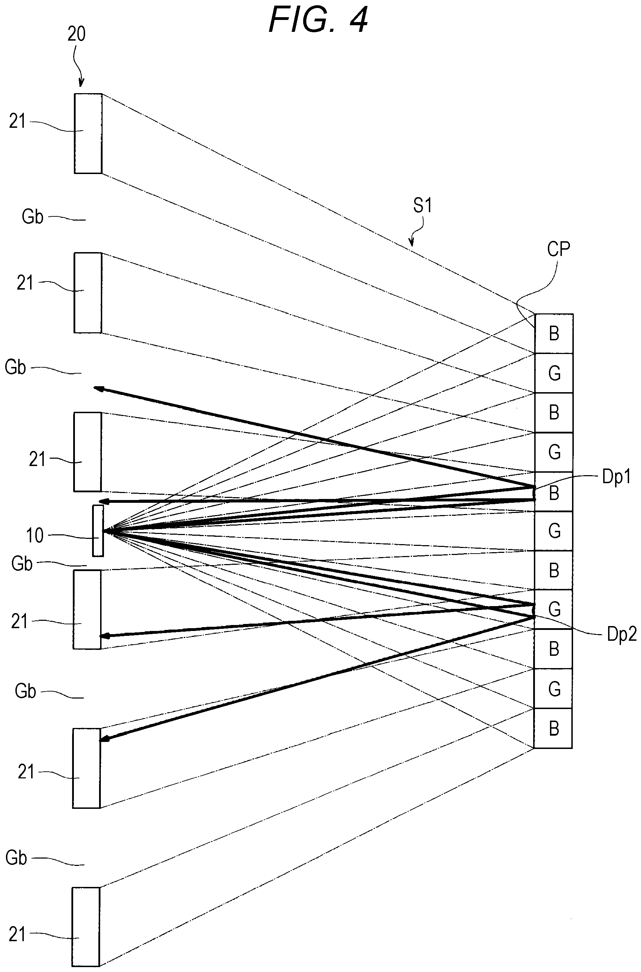

Each of the light source units 21 irradiates the side surface CP of the vehicle CA with rectangular light extending in a direction orthogonal to the movement direction D1. Then, the side surface CP of the vehicle CA is irradiated with the illumination light emitted from each of the six light source units 21. Consequently, a bright portion B irradiated with the light from the light source unit 21, and a dark portion G not irradiated with the light and having luminance lower than that of the bright portion B are alternately arrayed on the side surface CP of the vehicle CA (see Fig. 4). That is, the side surface CP of the vehicle CA is irradiated with stripe-like pattern illumination S1 in which a bright portion B and a dark portion G are alternately arranged. Note that a gap between the light source units 21 is defined as a dark band Gb in the following description.

As illustrated in Fig. 1, the image capturing unit 10 and the illumination unit 20 are arranged on the same side with respect to the vehicle CA. In addition, the image capturing unit 10 is arranged in the gap between the light source units 21 at a center of the illumination unit 20. That is, three light source units 21 are arranged in each of left and right sides of the image capturing unit 10.

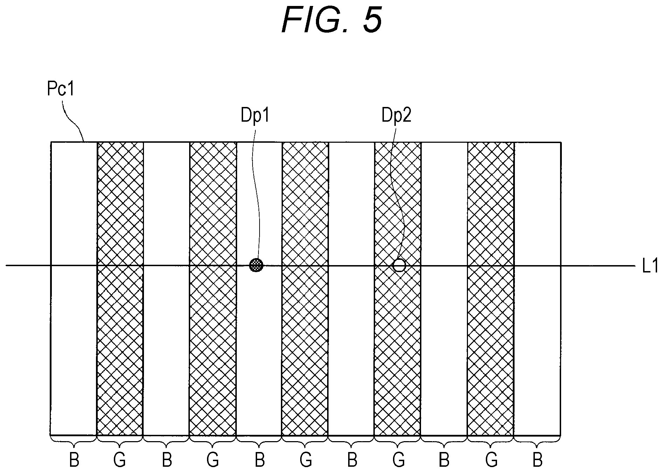

Here, a defect identifying method of the defect identifying device A1 will be described with reference to the drawings. Fig. 4 is a schematic plan view illustrating a state in which defect identifying is performed in the defect identifying device. Fig. 5 is a diagram illustrating a captured image obtained by capturing an image of a portion irradiated with pattern illumination. Note that Figs. 4 and 5 illustrate a case where the side surface CP of the vehicle CA has two defects (a bright portion defect Dp1 and a dark portion defect Dp2). In a captured image Pc1 illustrated in Fig. 5, a dark portion G is hatched.

The pattern illumination S1 emitted from the illumination unit 20 is reflected at the side surface CP of the vehicle CA and incident on the image capturing unit 10. Fig. 4 illustrates light propagation paths representing optical paths of the pattern illumination S1 emitted from the illumination unit 20. In Fig. 4, the light propagation path from each of the light source units 21 is indicated by a dash-dot-dash line. Additionally, a light propagation path reflected at a defect is indicated by a thick line. Note that, in the following description, there may be a case where the description is provided as necessary by using inverse ray trace of tracing back a light propagation path.

As illustrated in Fig. 4, the illumination unit 20 emits light from the six light source units 21, and irradiates the side surface CP of the vehicle CA with the stripe-like pattern illumination S1 in which a bright portion B and a dark portion G are alternately arranged. Then, the image capturing unit 10 captures an image of the side surface CP irradiated with the pattern illumination S1, and outputs the captured image Pc1 (see Fig. 5). The bright portion B and the dark portion G generated by the pattern illumination S1 are formed in the captured image Pc1. As illustrated in Fig.2, Fig. 4, and the like, the image capturing unit 10 outputs, as a captured image, a picture generated by the pattern illumination S1 reflected at the side surface CP. Therefore, a bright portion B of the captured image Pc1 is a picture of the light that has reached the image capturing unit 10 after the light from the light source unit 21 is reflected at the side surface CP. On the other hand, there is a gap between rays of the light that have reached the image capturing unit 10 from the light source units 21. That is, a dark portion G is a picture of the light that has been reflected at the side surface CP from the image capturing unit 10 and propagated inversely along the light propagation path that reaches the dark bands Gb.

In a case where the surface of the side surface CP is substantially smooth, light propagation paths are reflected equally at the side surface CP. Inside a bright portion B, luminance becomes uniform. Additionally, similarly in a dark portion G, luminance becomes uniform inside the dark portions G.

First, the case where a defect (bright portion defect Dp1) is formed in a bright portion B will be described. A light propagation path directed from the image capturing unit 10 toward the bright portion B including the bright portion defect Dp1 is also reflected at the bright portion defect Dp1. At this time, a surface of the bright portion defect Dp1 includes a portion in which an angle with respect to the image capturing unit 10 is different from a periphery thereof. Therefore, the light propagation path that reaches the bright portion defect Dp1 is irregularly reflected at the bright portion defect Dp1. As a result, a region of the illumination unit 20 on which the light propagation path reflected at the bright portion defect Dp1 is incident is deviated from a region of the illumination unit 20 on which a light propagation path reflected at the periphery of the bright portion defect Dp1 is incident (indicated by thick lines in Fig. 4). In addition, there may be a case where a region of the illumination unit 20 on which the light propagation path reflected at the bright portion defect Dp1 is incident is included in a dark band Gb. Therefore, there may be a case where a captured image of the bright portion defect Dp1 has a color different from that of the periphery, that is, luminance becomes lower (the color becomes darker in Fig. 5). Note that the luminance is not limited to luminance generally defined in a captured image captured by an image capturing device such as a digital camera. For example, a voltage value, a current value, or the like output from an image capturing element by photoelectric conversion may be included. That is, in the following description, the term "luminance" includes numerical values (e.g., a voltage value, a current value, and the like) corresponding to luminance generally defined in a captured image.

Furthermore, a case where a defect (dark portion defect Dp2) is formed in a dark portion G will be described. A light propagation path directed from the image capturing unit 10 toward the dark portion G including the dark portion defect Dp2 is also reflected at the dark portion defect Dp2. At this time, a surface of the dark portion defect Dp2 has a portion in which an angle with respect to the image capturing unit 10 is different from that of a periphery thereof. Therefore, the light propagation path that reaches the dark portion defect Dp2 is irregularly reflected at the dark portion defect Dp2. As a result, a region of the illumination unit 20 on which the light propagation path reflected at the dark portion defect Dp2 is incident is deviated from a region of the illumination unit 20 on which a light propagation path reflected at the periphery of the dark portion defect Dp2 is incident (indicated by thick lines in Fig. 4). In addition, there may be a case where a region of the illumination unit 20 on which the light propagation path reflected at the dark portion defect Dp2 is incident is included in a light source unit 21. Therefore, a captured image of the dark portion defect Dp2 has a color different from that of the periphery thereof, that is, luminance becomes higher (the color becomes whiter in Fig. 5).

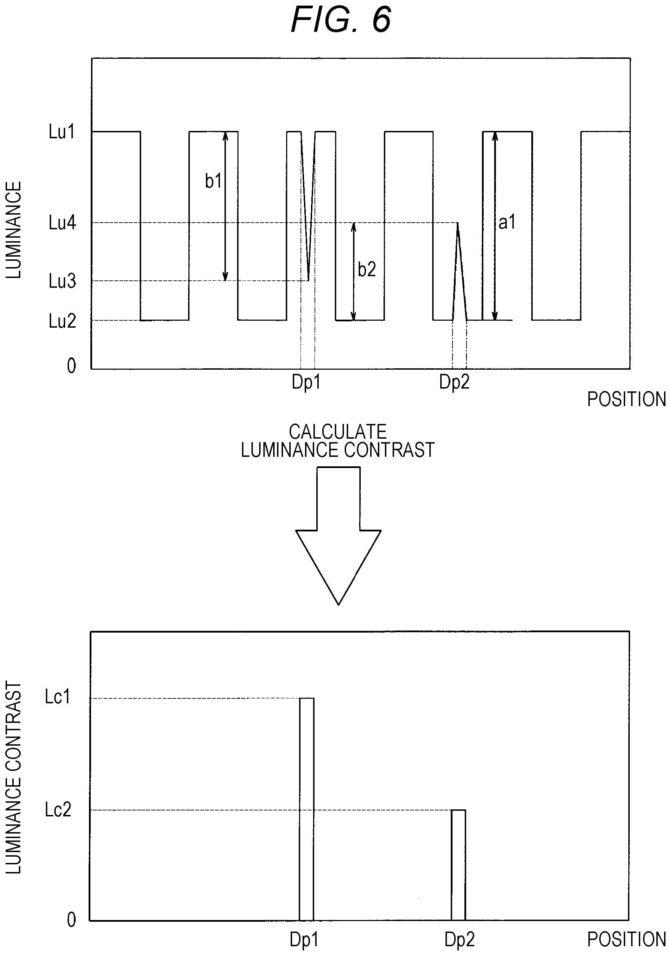

As described above, since the light (light propagation path) is irregularly reflected at a defect portion, the luminance is changed in comparison with that of the periphery thereof. A change amount of luminance (luminance contrast) used as an identifying value for identifying a defect in the defect identifying device A1 will be described with reference to the drawings. Fig. 6 is a diagram illustrating luminance distribution along a straight line passing through the bright portion defect and the dark portion defect illustrated in Fig. 5. The luminance distribution illustrated in Fig. 6 is distribution representing luminance after normalizing luminance of the captured image, and actually, luminance blur (noise) is generated due to a factor other than the defects. The control processing unit 40 performs normalization by removing influence other than the defects from the luminance of the captured image in a normalizing process by a normalization unit 45 described later.

First, a method of calculating luminance contrast of the bright portion defect Dp1 formed in the bright portion B will be described. As illustrated in Fig. 6, the luminance of the bright portion B is defined as bright portion luminance Lu1, the luminance of the dark portion G is defined as dark portion luminance Lu2, and the luminance of the bright portion defect Dp1 is defined as bright portion defect luminance Lu3. Note that the bright portion defect luminance Lu3 has a minimum value of luminance obtainable by the bright portion defect Dp1. However, not limited thereto, a different numerical value may also be adopted, as far as a size of the bright portion defect Dp1 can be identified by the value. Additionally, the luminance contrast of the bright portion defect Dp1 is defined as first luminance contrast Lc1.

A luminance difference a1 between a bright portion B and a dark portion G is expressed by Expression below.

$$a1 = Lu1 - Lu2$$

Additionally, a luminance difference b1 between the luminance of the bright portion defect Dp1 and luminance in the periphery thereof is expressed by Expression below.

$$b1 = Lu1 - Lu3$$

Then, the first luminance contrast Lc1 of the bright portion defect Dp1 is expressed by Expression below.

$$Lc1 = b1/a1 = (Lu1 - Lu3)/(Lu1 - Lu2)$$

Next, a method of calculating luminance contrast of the dark portion defect Dp2 formed in the dark portion G will be described. As illustrated in Fig. 6, luminance of the dark portion defect Dp2 is defined as dark portion defect luminance Lu4. Additionally, the luminance contrast of the dark portion defect Dp2 is defined as second luminance contrast Lc2. A luminance difference b2 between the luminance of the dark portion defect Dp2 and luminance in the periphery thereof is expressed by Expression below.

$$b2 = Lu4 - Lu2$$

Then, the second luminance contrast Lc2 of the dark portion defect Dp2 is expressed by Expression below.

$$Lc2 = b2/a1 = (Lu4 - Lu2)/(Lu1 - Lu2)$$

The control processing unit 40 identifies a defect by confirming whether the first luminance contrast Lc1 or the second luminance contrast Lc2 is a certain value (threshold value) or more. Note that there may be a case where the first luminance contrast Lc1 and the second luminance contrast Lc2 have different sizes even though the bright portion defect Dp1 and the dark portion defect Dp2 have the same size. Therefore, it is preferable to identify a defect by separating a case where a defect is formed in a bright portion B from a case where a defect is formed in a dark portion G. For example, changing a threshold value between the case of the bright portion defect Dp1 and the case of the dark portion defect Dp2 can be exemplified.

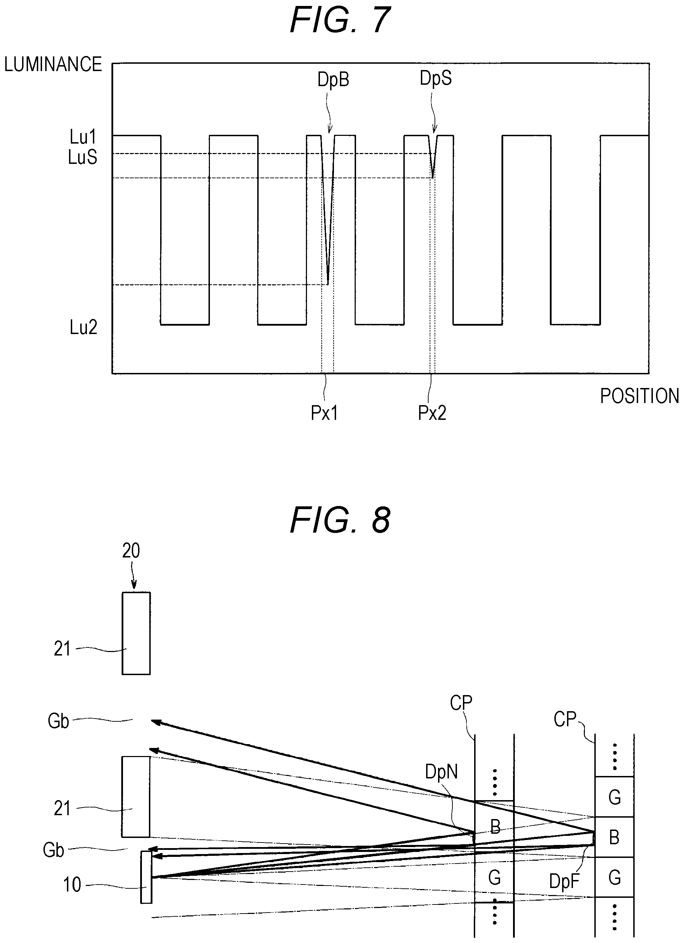

A description will be provided for a change of luminance caused by a size of a defect formed on the side surface CP of the vehicle CA. Fig. 7 is a diagram illustrating luminance distribution of defects having different sizes. As illustrated in Fig. 7, assume that a large defect DpB and a small defect DpS are formed in a portion where bright portions B are formed on the side surface CP of the vehicle CA. Since the large defect DpB has a wide region where light propagation paths are irregularly reflected, many light propagation paths reach a dark band Gb. On the other hand, since the small defect DpS has a narrow region where light propagation paths are irregularly reflected, the number of the light propagation paths reaching the dark band Gb is less than that of the large defect DpB. Therefore, the small defect DpS has luminance contrast smaller than that of the large defect DpB.

Thus, luminance fluctuates in accordance with a size of a defect. An uneven portion on the surface of the side surface CP of the vehicle CA, in which the luminance fluctuates, also includes a minute uneven portion not recognizable by a user. In a case of identifying such a minute uneven portion as a defect, a cost required for manufacture is increased. Accordingly, in the defect identifying device A1, an uneven portion having a certain size or more is identified as a defect. That is, the defect identifying device A1 identifies a defect in a case where luminance contrast is a certain level or more.

First, the control processing unit 40 of the defect identifying device A1 extracts an uneven portion having a possibility to be a defect (referred to as a defect candidate in the following description) from luminance fluctuation in a captured image. Then, the control processing unit 40 acquires luminance contrast indicating a change of the luminance between a defect candidate and a periphery thereof, and in a case where the luminance contrast is a certain value or more (threshold value or more), the defect candidate is identified as a defect. Note that the threshold value is a value same as or slightly lower than luminance contrast of a defect having a reference size and formed in a portion where a shape of the inspection region CP with respect to the image capturing unit 10 is to be a reference. The defect identifying method will be described in detail later.

Furthermore, luminance of a defect is also varied by a shape with respect to the image capturing unit 10 as for a portion of the inspection region CP where the defect is formed. Next, luminance variation in a defect caused by the shape of the inspection region CP with respect to the image capturing unit 10 will be described. Note that, here, as examples of the shape with respect to the image capturing unit 10 as for the inspection region CP where the defect is formed, it is possible to exemplify: a distance between the image capturing unit 10 and the defect formed in the inspection region CP; an angle of the inspection region CP with respect to the image capturing unit 10; and a distance deviation from a focus position of the image capturing unit 10 to the inspection region CP. Note that a matter other than these may also be included as the shape.

First, luminance variation in a defect caused by a distance from the image capturing unit will be described with reference to the drawings. Fig. 8 is a diagram illustrating light propagation paths in a case where distances from the image capturing unit to defects are different. Here, a defect near the image capturing unit 10 is defined as a near defect DpN, and a defect far from the image capturing unit 10 is defined as a far defect DpF. As illustrated in Fig. 8, comparing the near defect DpN with the far defect DpF, a light propagation path reflected at the near defect DpN is shorter than a light propagation path reflected at the far defect DpF.

Comparing the respective light propagation paths with each other, a region of the illumination unit 20 reached by the light propagation path reflected at the far defect DpF is wider than a region of the illumination unit 20 reached by the light propagation path reflected at the near defect DpN. Consequently, an amount of the light propagation path reflected at the far defect DpF and reaching a dark band Gb is less than an amount of the light propagation path reflected at the near defect DpN and reaching the dark band Gb. Therefore, luminance decrease caused by irregular reflection is more suppressed in the near defect DpN than in the far defect DpF. That is, in a case where the defects have the same size, the luminance contrast of the near defect DpN and the luminance contrast of the far defect DpF are varied from each other.

In Fig. 8, the description has been provided for the example in which the longer a distance to a defect is, the more increased the luminance contrast is, but not limited thereto. For example, in a case where a region of the illumination unit on which a light propagation path reflected at a defect is incident is located at a position in a boundary between a light source unit 21 and a dark band Gb, when a distance of the inspection region from the image capturing unit 10 is elongated, a part of a light propagation path reflected at the defect reaches an adjacent light source unit 21. Therefore, there may be a case where luminance contrast is increased by elongating the distance from the image capturing unit 10.

Next, a case where an angle of an inspection region CP with respect to the image capturing unit 10 is changed will be described. A light propagation path reflected at a defect formed in the inspection region CP facing the image capturing unit 10 differs from a light propagation path reflected at a defect formed in an inspection region inclined with respect to the image capturing unit 10. That is, assume that the light propagation path reflected at the defect formed in the inspection region facing the image capturing unit 10 is incident on a region $\alpha$ of the illumination unit 20, for example. Assume that the light propagation path reflected at the defect formed in the inspection region inclined with respect to the image capturing unit 10 is incident on a region $\beta$ of the illumination unit 20, for example. At this time, the region $\alpha$ and the region $\beta$ are different regions. In addition, in a case where the area of the region $\alpha$ and the area of the region $\beta$ overlapping with the light source unit 21 is different from the area of both regions overlapping with a dark band Gb, luminance contrast is different even though respective defects have the same size. That is to say, there may be a case where luminance contrast of a defect fluctuates due to a fact that an inspection region formed with a defect has a different angle with respect to the image capturing unit 10.

Additionally, the image capturing unit 10 is provided with an optical lens. In addition, there may be a case where the image capturing unit 10 captures an image while fixing a focal length and an f value in order to perform image capturing under the same conditions. In such a case, there may be a case where deviation from a focus position is caused by a distance of the defect from the image capturing unit 10. In such a case, there may be a case where a picture of the defect in a captured image is blurred (a picture having an unclear contour and spread out), and luminance contrast is changed.

In addition, the side surface CP of the vehicle CA that is the measurement object has a three-dimensional shape, and a distance from the image capturing unit 10, an angle with respect to the image capturing unit 10, and a distance from the focus position are changed depending on a place of the side surface CP. Therefore, the luminance contrast is varied by a shape of the side surface CP of the vehicle CA with respect to the image capturing unit 10. When the luminance contrast is varied by the shape of the side surface CP of the vehicle CA with respect to the image capturing unit 10, it may be difficult to correctly identify a defect. Accordingly, in the control processing unit 40 according to the present embodiment, the storage unit 30 includes a correction value that suppresses variation in luminance contrast caused by a shape, and a defect is identified by correcting the luminance contrast in accordance with the shape.

In an actual captured image, luminance may be varied by a cause other than a defect (uneven portion). In addition, the luminance of the captured image is normalized in the defect identifying device A1 in order to acquire correct luminance contrast, and luminance contrast that is an identifying value required for identifying a defect is obtained by using the normalized luminance. In the following, a description will be provided in detail for: the storage unit 30 that stores information required for identifying a defect; and the control processing unit 40.

<Regarding Storage Unit 30>

Returning to Fig. 2, the storage unit 30 will be described. The storage unit 30 is a memory that stores: a control program executed by the control processing unit 40; and various kinds of information. The storage unit 30 includes, for example, a read only memory (ROM) that is a nonvolatile storage element, an electrically erasable programmable read only memory (EEPROM) that is a rewritable nonvolatile storage element, and the like. The storage unit 30 includes a random access memory (RAM) or the like serving as a so-called working memory of the control processing unit 40 that stores information and the like generated during execution of the predetermined program.

The storage unit 30 stores a normalization database 31 including a parameter used to normalize luminance of a captured image, a correction database 32 that stores a correction value necessary for identifying a defect, and shape database 33 that stores shape information of the vehicle CA.

The shape information of an inspection object is information that quantifies external appearance of the vehicle CA. As described above, the inspection object is the vehicle CA in the present embodiment. The shape information includes information of a vehicle contour shape representing an outer contour surface shape of (a body of) the vehicle CA. In addition, in many cases, the external appearance of the vehicle CA is three-dimensionally changed. Therefore, here, the shape database 33 storing the shape information is formed by utilizing computer-aided design (CAD) data. Note that, in the present embodiment, the vehicle contour shape information is a numerical value representing the outer contour surface shape of the entire vehicle (entire vehicle body), but the vehicle contour shape information may be formed in a manner divided into respective portions of the vehicle CA, such as a right half of the vehicle body, a door portion, and a bumper portion.

In the defect identifying device A1, the image capturing unit 10 is located at a preset position. Therefore, the control processing unit 40 (a shape information acquisition unit 44 described later) can acquire information of a position and a shape with respect to the image capturing unit 10 on the basis of a position of the vehicle CA and the position of the image capturing unit 10.

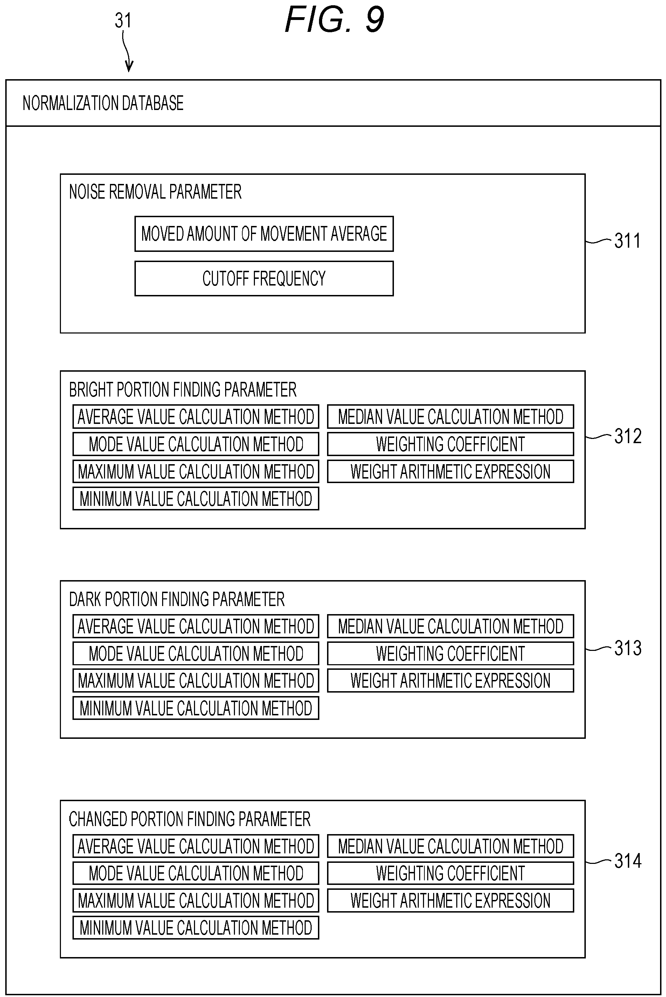

Fig. 9 is a diagram illustrating an exemplary normalization database. As illustrated in Fig. 9, the normalization database 31 includes a noise removal parameter 311 that removes noise from a captured image, a bright portion finding parameter 312 that finds a representative value of luminance of a bright portion B, a dark portion finding parameter 313 that finds a representative value of luminance of a dark portion G, and a changed portion finding parameter 314 that finds a representative value of luminance of a portion (defect candidate) in which luminance is changed. Each of the parameters of the normalization database 31 is provided per image capturing position in a captured image. That is, the normalization database 31 includes, for each image capturing position, the noise removal parameter 311, the bright portion finding parameter 312, the dark portion finding parameter 313, and the changed portion finding parameter 314.

Note that the noise removal parameter 311 may include, for example, a moved amount of a movement average and a cutoff frequency of a low pass filter. The bright portion finding parameter 312 may include, for example, an arithmetic method (expression) of calculating an average value, a mode value, a median value, a maximum value, and a minimum value of luminance of a bright portion B, a weighting coefficient, and an arithmetic method (expression) using the weighting coefficient. The dark portion finding parameter 313 may include, for example, an arithmetic method (expression) of calculating an average value, a mode value, a median value, a maximum value, and a minimum value of luminance of a dark portion G, a weighting coefficient, and an arithmetic method (expression) using the weighting coefficient. The changed portion finding parameter 314 may include an arithmetic method (expression) of calculating an average value, a mode value, a median value, a maximum value, and a minimum value of luminance of a portion in which luminance is changed, a weighting coefficient, and an arithmetic method (expression) using the weighting coefficient. Note that, besides these numerical values and arithmetic methods, it is possible to widely adopt numerical values and arithmetic methods (expressions) used for calculating an identifying value in order to identify a defect.

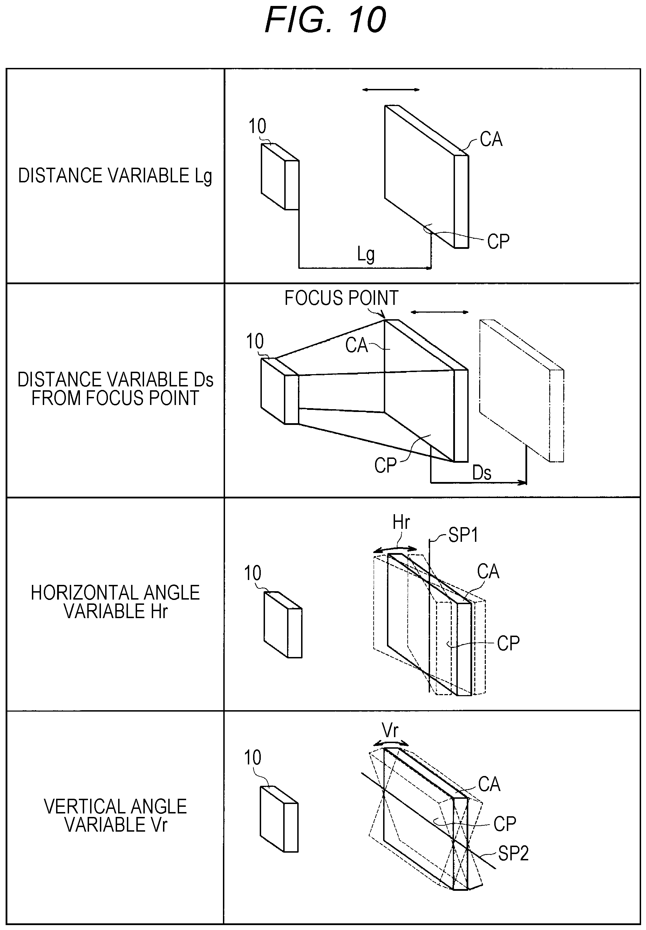

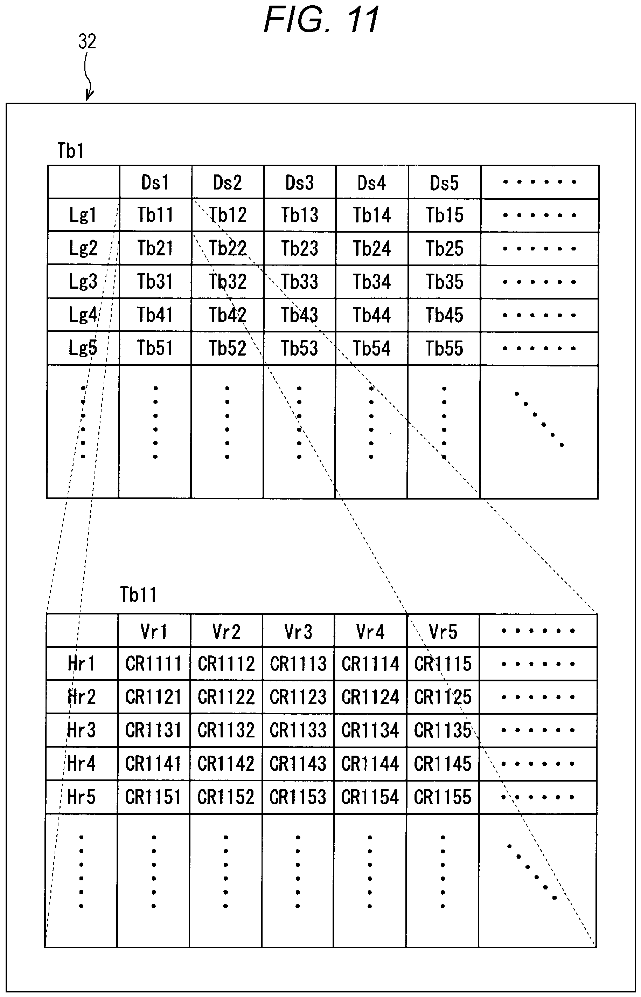

Next, the correction database 32 will be described. Fig. 10 is a table illustrating shape variables of the correction database. Fig. 11 is a diagram illustrating an exemplary correction database. In the correction database, a correction value includes, as shape variables, a distance variable Lg, a horizontal angle variable Hr, a vertical angle variable Vr, and a distance variable Ds from a focus point.

As illustrated in Fig. 10, the distance variable Lg of the inspection region CP is a distance to the inspection region CP in a reference state. For example, whether the distance is nearer or farther from the image capturing unit 10 than that in the reference state is adopted as the variable. At this time, it is a case where the inspection region CP is focused even in the inspection region CP apart from the reference state. Note that the inspection region CP arranged in a manner facing the image capturing unit 10 at a prescribed distance from the image capturing unit 10 is set as the reference state.

Additionally, as illustrated in Fig. 10, the horizontal angle variable Hr represents a rotation angle when rotated around a vertical axis Sp1 relative to the inspection region CP in the reference state. Additionally, the vertical angle variable Vr is a rotation angle when rotated around a horizontal axis Sp2 relative to the inspection region CP in the reference state. Note that, in the present embodiment, the angles from the reference state around the two orthogonal axes are adopted, but rotation around an axis other than these axes may also be included. Furthermore, the distance variable Ds from the focus point is a position where the inspection region CP is moved and placed apart from the reference state in a state in which the focus position is aligned with the inspection region CP in the reference state.

As illustrated in Fig. 11, the correction database 32 includes correction values correlated to the shape variables. The correction database 32 illustrated in Fig. 11 includes a first table Tb1 having correlation to distance variables Lg and distance variables Ds from the focus point. In addition, each record cell of the first table Tb1 includes a second table Tbij that stores correction values CRijkm (suffixes i, j, k, and m are integers) correlated to horizontal angle variables Hr and vertical angle variables Vr. Note that the suffixes i and j are variables representing distance variables Lg and distance variables Ds from the focus point, respectively. The suffixes k and m are variables representing horizontal angle variables Hr and vertical angle variables Vr, respectively.

Thus, the correction value CRijkm is settled on the basis of the four shape variables, that is, the distance variables Lg, the distance variables Ds from the focus point, the horizontal angle variables Hr, and the vertical angle variables Vr. Note that, as for each correction value CRijkm, it may be possible to use luminance contrast actually acquired by the defect identifying device A1 while using, as an inspection region CP, a flat plate or the like where a defect is formed. Also, it may be possible to utilize luminance contrast calculated by optical simulation by creating a model for each shape variable. Note that the correction database 32 has a configuration as illustrated in Fig. 11 for easy understanding, but the configuration is not limited thereto as far as the four variables can be changed at the same time in the database.

Furthermore, there may be a case where a correction value CRijkm can be hardly obtained directly from the correction database 32 on the basis of actual shape information. In such a case, a correction value may be acquired by performing interpolation using a correction value of shape information close to the actual shape information. Note that the correction database 32 illustrated in Fig. 11 is the exemplary database and not limited thereto. For example, a correction value may be provided as an arithmetic expression using a correction coefficient. Next, the control processing unit 40 that identifies a defect by using the correction database 32 and the shape database 33 stored in the storage unit 30 will be described in detail.

<Regarding Control Processing Unit 40>

Returning to Fig. 2, the control processing unit 40 will be described in detail. The control processing unit 40 controls the respective units of the defect identifying device A1. The control processing unit 40 is connected to the image capturing unit 10, the illumination unit 20, the storage unit 30, the output unit 50, and the carrying unit 60 and controls the respective units. The control processing unit 40 includes an arithmetic unit to execute arithmetic operation. The arithmetic unit is a circuit including an arithmetic circuit such as a CPU or an MPU. The arithmetic unit may perform the arithmetic operation in the circuit itself. Additionally, for example, a program read from the storage unit 30 or a program included in the arithmetic unit itself may be operated to perform the arithmetic operation. The control processing unit 40 controls the image capturing unit 10, the illumination unit 20, the output unit 50, and the carrying unit 60 on the basis of an arithmetic operation result of the arithmetic unit.

Additionally, the control processing unit 40 identifies presence or absence of a defect on a surface of an inspection region CP on the basis of a captured image. In a case where a defect of the surface is identified, the control processing unit 40 pinpoints a portion having the defect in the inspection region CP. Then, the control processing unit 40 causes the output unit 50 to display a place of the defect in the inspection region CP.

As illustrated in Fig. 2, the control processing unit 40 includes an image capturing position detection unit 41, a defect candidate detection unit 42, a position acquisition unit 43, the shape information acquisition unit 44, the normalization unit 45, and an identifying value acquisition unit 46, a correction value acquisition unit 47, a correction unit 48, and an identifying unit 49. Note that any of the above-described respective units of the control processing unit 40 may be an arithmetic circuit that performs processing arithmetic operation. Additionally, at least a part of the above-described respective units of the control processing unit 40 may be a program that is stored in the storage unit 30 and executes each processing executed in the control processing unit 40. Furthermore, in the case of a program, the program may be provided in a state recorded in a non-temporary recording medium and operated in the defect identifying device A1 including the control processing unit 40.

The image capturing position detection unit 41 detects an image capturing position that is a position where a captured image from the image capturing unit 10 is located on the side surface CP of the vehicle CA. The image capturing position detection unit 41 acquires, in advance, information of: a relative positional relation between the vehicle CA and the image capturing unit 10; and an image capturing range of the image capturing unit 10. In addition, an image capturing position that is a position on the side surface CP within the image capturing range captured in the captured image is acquired from such information.

The defect candidate detection unit 42 detects presence or absence of a defect candidate. When there is a defect candidate, the defect candidate detection unit 42 pinpoints a position of the defect candidate in the captured image. As processing of detecting a defect candidate by the defect candidate detection unit 42, it is possible to exemplify processing of detecting, as a defect candidate, a portion having a color different from a periphery thereof as described above.

Additionally, it may be possible to use matching processing of detecting a defect candidate by performing matching with information of a defect model provided in advance. Furthermore, a processing method capable of accurately detecting a defect candidate can also be adopted.

The position acquisition unit 43 acquires positional information of a defect candidate on the side surface CP of the vehicle CA on the basis of a position on the side surface of the vehicle CA in a captured image and positional information of the defect candidate in the captured image. The method of acquiring positional information by the position acquisition unit 43 will be further described. As described above, the position of the image capturing unit 10 is preset in the defect identifying device A1. The image capturing unit 10 has a predetermined angle of view, and can acquire a position of a defect candidate in the inspection region CP by combining a position of the defect candidate in a captured image with the angle of view of the image capturing unit 10.

The vehicle CA has an outer shape three-dimensionally deformed, and the shape thereof with respect to the image capturing unit 10 is not constant. Therefore, luminance of the defect candidate on the side surface CP is varied by a shape with respect to the image capturing unit 10 as for a place where a defect candidate is formed. Accordingly, the shape information acquisition unit 44 acquires, on the basis of positional information of the defect candidate on the side surface CP, information of the shape (shape information) with respect to the image capturing unit 10 as for a position on the side surface CP where the defect candidate is formed. As examples of the shape information, it is possible to exemplify an angle with respect to the image capturing unit 10, a distance from the image capturing unit 10, a deviation distance from a focus position of the image capturing unit 10, and the like, but not limited thereto. One of these may be provided, or information that indicates a shape characteristic and influences luminance may also be included in addition to these. The shape information acquisition unit 44 acquires, on the basis of the shape database 33 stored in the storage unit 30 and the positional information of the defect candidate on the side surface CP, the shape information with respect to the image capturing unit 10 as for the position where the defect candidate exists.

The normalization unit 45 normalizes luminance of a captured image. The luminance of the captured image fluctuates due to a defect (an uneven portion) as described above. Note that the normalization of the luminance is processing of removing, from luminance of a captured image, luminance variation caused by a factor such as noise and the like unnecessary in identifying a defect. That is, the luminance variation by a cause other than an uneven portion (defect candidate) is formed in a captured image (variation caused by an electric circuit and an optical device will be referred to as noise hereinafter). Accordingly, the normalization unit 45 calls parameters necessary for luminance normalization from the normalization database 31 including the parameters for each image capturing position, and normalizes the luminance.

The luminance normalization includes, for example, noise removal. Additionally, there may be case where luminance of a bright portion B and luminance of a dark portion G are varied. Such variation is also normalized by using a parameter, and a representative value of the luminance of the bright portion B, a representative value of the luminance of the dark portion G, and a representative value of the luminance in a changed portion (defect candidate) of the luminance are calculated. As the representative values of each luminance, it is possible to exemplify a mode value, an average value, a maximum value, a minimum value, a median value, and a calculated value using a prescribed weighting coefficient, but not limited thereto.

The identifying value acquisition unit 46 acquires an identifying value used to identify whether or not a defect candidate is a defect. In the identifying value acquisition unit 46, a change amount of the luminance of the defect candidate with respect to peripheral luminance (luminance contrast) is adopted as the identifying value. The identifying value acquisition unit 46 acquires, as the identifying value, the luminance contrast of the defect candidate from a normalized captured image and positional information of the defect candidate. That is, the identifying value acquisition unit 46 calculates the luminance contrast by utilizing the above-described Expressions, the representative value of the luminance of the bright portion B, the representative value of the luminance of the dark portion G, and the representative value of the luminance of the defect candidate.

Note that the luminance contrast is used as the identifying value in the present invention. In examples not covered by the claims, additionally, in the luminance distribution illustrated in Fig. 7, the number of pixels at a portion intersecting with luminance distribution of predetermined luminance value LuS may also be used as an identifying value. For example, in Fig. 7, the number of pixels Px1 at a portion intersecting with the large defect DpB and the number of pixels Px2 at a portion intersecting with the small defect DpS may also be used as identifying values for the respective defects. Additionally, an integrated value obtained by integrating a difference between a defect portion and the predetermined luminance value LuS may also be used. Additionally, in a case of using each of such numerical values as an identifying value, a threshold value corresponding to each of these numerical values may be used.

As described above, as for the outer shape of the side surface CP, the shape with respect to the image capturing unit 10 is changed depending on the position with respect to the image capturing unit 10. Even though defect candidates have the same size, luminance of the defect candidates is varied when the positions of the defect candidates on the side surface CP are different. Accordingly, the correction value acquisition unit 47 accesses the correction database 32 in the storage unit 30, refers to the shape information, and acquires a correction value. A correction value is a correction coefficient used to correct luminance contrast that is an identifying value acquired in the identifying value acquisition unit 46.

The correction unit 48 corrects luminance contrast of a defect candidate with a correction value. The identifying unit 49 identifies whether or not the defect candidate is a defect. The larger an outer diameter of the defect candidate is, the larger the luminance contrast is. Therefore, the identifying unit 49 identifies whether or not the defect candidate is a defect by setting a threshold value and comparing the corrected luminance contrast with the threshold value. The control processing unit 40 identifies a defect in the inspection region CP by applying the above processing to a captured image captured by the image capturing unit 10.

Then, the control processing unit 40 generates an identified position display image that indicates a position of a defect located in the inspection region CP and identified by the identifying unit 49.

<Regarding Output Unit 50>

The output unit 50 includes, for example, a display panel such as a liquid crystal panel. The output unit 50 is connected to the control processing unit 40, and the output unit 50 can display: a captured image captured by the image capturing unit 10; and an identified position display image generated by the control processing unit 40. Additionally, a touch panel may also be installed in the output unit 50. Since the touch panel is installed, a worker can operate the defect identifying device A1 and can perform information input and the like by using the touch panel. Additionally, hard keys such as numeric keys may also be provided. Additionally, the output unit 50 is not limited to the above-described configuration and may include a sound notification unit (not illustrated) that issues a notification with a sound. Furthermore, the output unit 50 can widely adopt a mechanism capable of notifying a user of information.

<Regarding Carrying Unit 60>

The carrying unit 60 carries the vehicle CA. The carrying unit 60 carries the vehicle CA such that the side surface CP of the vehicle CA passes across an image capturing range of the image capturing unit 10. The carrying unit 60 is connected to the control processing unit 40, and the carrying unit 60 notifies the control processing unit 40 of a position and a moving speed of the vehicle CA being carried. Note that the control processing unit 40 may also acquire the moving speed and the position of the vehicle CA from a sensor (not illustrated) that detects the position of the carrying unit 60 or the vehicle CA separately provided. Additionally, the moving speed may be acquired from the carrying unit 60 and the position may be acquired from the sensor, or information of the moving speed and the position may be acquired from both the carrying unit and the sensor and interpolated with each other so as to improve accuracy of each of the moving speed and the position of the side surface CP. Furthermore, the carrying unit 60 may move the image capturing unit 10 and the illumination unit 20 along the vehicle while keeping the vehicle CA stopped.

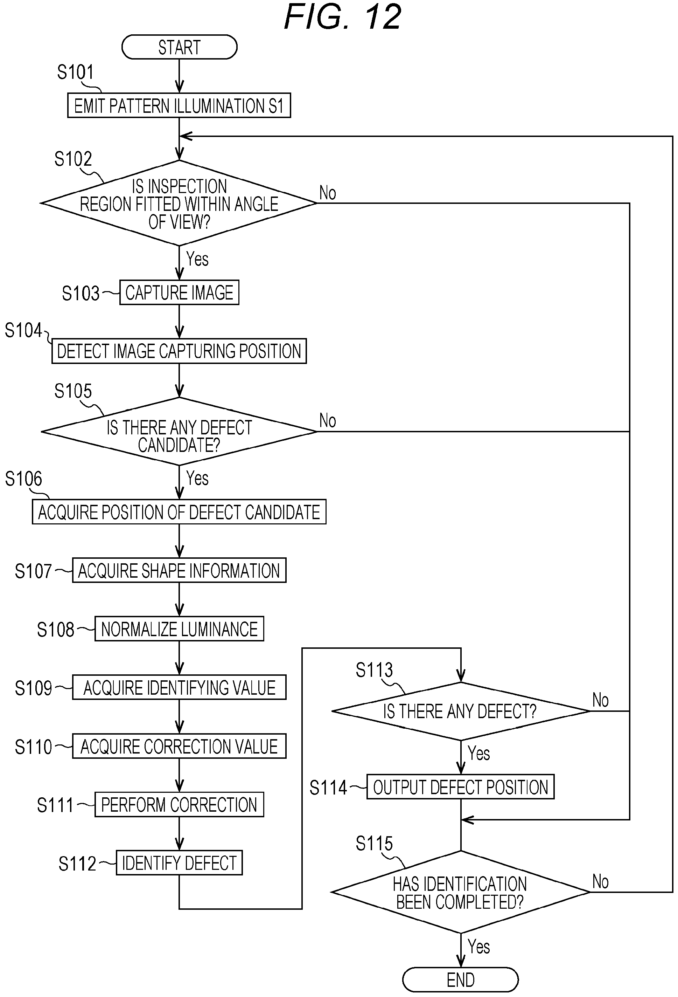

The defect identifying device A1 has the above-described configuration. Next, operation of the defect identifying device A1 will be described with reference to the drawing. Fig. 12 is a flowchart illustrating defect identifying operation of the defect identifying device. As illustrated in Fig. 12, the control processing unit 40 transmits a command to the illumination unit 20 to start irradiation with the pattern illumination S1 (step S101). Then, it is confirmed, on the basis of information from the carrying unit 60, whether or not the vehicle CA is located at a position of detecting a defect, that is, whether or not the vehicle CA is fitted within an angle of view of the image capturing unit 10 (step S102).

In a case where the vehicle CA is not fitted within the angle of view of the image capturing unit 10 (No in step S102), whether or not defect identification to be executed for the vehicle CA has been completed is confirmed (step S115). Whether or not the defect identification to be executed has been completed is determined by, for example, whether or not the defect identification has been performed for an entire portion of the side surface CP of the vehicle CA. In a case where the defect identification has not been completed (in a case of No in step S115), the processing returns to confirmation on whether or not any new portion of the side surface CP has entered the angle of view of the image capturing unit 10 (returns to step S102). Additionally, in a case where the defect identification has been completed (in a case of Yes in step S115), the control processing unit 40 ends the processing of defect identification.

Additionally, when it is confirmed that the vehicle CA is fitted within the angle of view of the image capturing unit 10 (Yes in step S102), the control processing unit 40 transmits a command to the image capturing unit 10 to capture an image of the side surface CP of the vehicle CA, and transmits the captured image Pc1 (electronic data: see Fig. 5) to the control processing unit 40 (step S103: image capturing process).

Note that the captured image Pc1 is digital data. For example, the captured image is data obtained by converting a value (for example, a voltage value) detected in each pixel of an image capturing element of the image capturing unit 10 into a 16-bit digital value. Note that the number of bits for conversion into a digital value is not limited to 16 bits.

The image capturing position detection unit 41 detects, on the basis of a relative position between the image capturing unit 10 and the side surface CP of the vehicle CA, an image capturing position on the side surface CP in the captured image captured by the image capturing unit 10 (step S104: image capturing position detecting process).

The defect candidate detection unit 42 confirms the captured image, and detects presence or absence of a portion (defect candidate) having a possibility to be a defect (step S105: defect candidate detecting process). In the captured image, a defect candidate appears in a color (luminance) different from that of the periphery thereof as illustrated in Fig. 5. For example, in a case where there is a defect in a bright portion B of the captured image, the defect appears darker (having lower luminance) than in a remaining portion of the bright portion B. Additionally, in a case where there is a defect in a dark portion G of the captured image, the defect appears brighter (having higher luminance) than in a remaining portion of the dark portion G. The defect candidate detection unit 42 detects, as a defect candidate, a region where the luminance is changed in the captured image.

In a case where there is no defect candidate (No in step S105), whether or not defect identification to be executed for the vehicle CA has been completed is confirmed (step S115). Whether or not the defect identification to be executed has been completed is determined by, for example, whether or not the defect identification has been performed for the entire portion of the side surface CP of the vehicle CA. In a case where the defect identification has not been completed (in the case of No in step S115), the processing returns to confirmation on whether or not any new portion of the side surface CP has entered the angle of view of the image capturing unit 10 (returns to step S102). Additionally, in a case where the defect identification has been completed (in the case of Yes in step S115), the control processing unit 40 ends the processing of defect identification.

In a case where a defect candidate is detected on the side surface CP by the defect candidate detection unit 42 (Yes in step S105), the position acquisition unit 43 acquires, on the basis of a position of the defect candidate in the captured image and the image capturing position, positional information that is information of the position of the defect candidate on the side surface CP (step S106: position acquiring process).

The shape information acquisition unit 44 acquires, on the basis of the positional information of the defect candidate on the side surface CP of the vehicle CA from the position acquisition unit 43, shape information with respect to the image capturing unit 10 as for a portion of the side surface CP of the vehicle CA where the defect candidate is formed (step S107: shape information acquiring process). As described above, the examples of the shape information include the distance of the side surface CP from the image capturing unit 10, the angle with respect to the image capturing unit 10, and the distance from the focus position.

The normalization unit 45 refers to the normalization database 31 and picks up a parameter corresponding to the image capturing position. Then, luminance of the captured image Pc1 is normalized on the basis of the picked-up parameter (step S108: normalizing process). The normalizing process of normalizing the luminance includes noise removal processing of removing influence on luminance fluctuation in the captured image, other than influence from an uneven portion of a defect candidate. In the noise removal processing, for example, a low pass filter is used to cut off a high-frequency component in luminance variation in the captured image, and a changed component in the luminance caused by a defect or a defect candidate is extracted. Note that the cutoff frequency of the low pass filter is stored in the normalization database 31. Furthermore, not limited to the low pass filter, a bandpass filter that cuts a constant frequency band may also be used.

Additionally, further included is processing of settling a representative value of luminance of a bright portion B, a representative value of luminance of a dark portion G, and a representative value of the luminance of a defect candidate in a captured image. Note that the parameters of the normalization database 31 include not only variables but also an arithmetic expression used in arithmetic processing for each representative value of the luminance in each of the portions.

The identifying value acquisition unit 46 receives the representative value of the luminance of the bright portion B, the representative value of the luminance of the dark portion G, and the representative value of the luminance of the defect candidate from the normalization unit 45, and acquires, as an identifying value, luminance contrast that is a change rate of the luminance of the defect candidate to the luminance of the periphery thereof on the basis of the respective representative values (step S109: identifying value acquiring process). The luminance contrast is obtained from the above-described Expressions.

The correction value acquisition unit 47 receives the shape information from the shape information acquisition unit 44, and further acquires a correction value corresponding to the shape information by referring to the received shape information and the correction database 32 stored in the storage unit 30 (step S110: correction value acquiring process).

The correction unit 48 generates the corrected luminance contrast obtained by correcting the luminance contrast of the defect candidate on the basis of the luminance contrast of the defect candidate from the identifying value acquisition unit 46 and the correction value from the correction value acquisition unit 47 (step S111: correcting process). Note that the correction value indicates a rate of a change in the luminance contrast with respect to a reference shape. Therefore, in the correcting process, corrected luminance contrast is obtained by multiplying the luminance contrast of the defect candidate by the correction value. The corrected luminance contrast thus obtained can have a value equivalent to luminance contrast when each defect candidate is formed in the reference portion.

Furthermore, there may be a case where the shape of the portion where the defect candidate is formed may have two or more variables (here, the distance, the angle, and the distance from the focus point) which are different from those of the reference shape. In such a case, the corrected luminance contrast may be obtained by multiplying the luminance contrast by each of a plurality of correction values. Alternatively, a combined correction value, which is obtained by combining the plurality of correction values, may be calculated on the basis of an arithmetic expression provided separately, and corrected luminance contrast may be obtained by using this combined correction value. As the arithmetic expression, for example, it is possible to exemplify a method in which a correction value based on a shape is weighted to calculate the sum. In this case, the weight may also be stored in the storage unit 30 in advance and read by the correction unit 48.

The identifying unit 49 compares the corrected luminance contrast with a threshold value provided in advance, and identifies whether or not the defect candidate is a defect (identifies a defect) (step S112: identifying process). The identifying unit 49 compares the corrected luminance contrast with the threshold value, and when the corrected luminance contrast exceeds the threshold value, the identifying unit identifies that the defect candidate is a defect. Then, the identifying unit 49 confirms presence or absence of the defect in the captured image (step S113).

In a case where the identifying unit 49 determines that there is no defect (No in step S113), whether or not defect identification to be executed for the vehicle CA has been completed is confirmed (step S115). Whether or not the defect identification to be executed has been completed is determined by, for example, whether or not the defect identification has been performed for the entire portion of the side surface CP of the vehicle CA. In a case where the defect identification has not been completed (in the case of No in step S115), the processing returns to confirmation on whether or not any new portion of the side surface CP has entered the angle of view of the image capturing unit 10 (returns to step S102). Additionally, in a case where the defect identification has been completed (in the case of Yes in step S115), the control processing unit 40 ends the processing of defect identification.

Additionally, in a case of identifying that at least one defect candidate is a defect (Yes in step S113), the control processing unit 40 outputs, to the output unit 50, positional information of the defect candidate determined as a defect on the side surface CP of the vehicle CA, and size information of the defect (step S114).

Then, the control processing unit 40 confirms whether or not the defect identification to be executed for the vehicle CA has been completed (step S115). Whether or not the defect identification to be executed has been completed is determined by, for example, whether or not the defect identification has been performed for the entire portion of the side surface CP of the vehicle CA. In a case where the defect identification has not been completed (in the case of No in step S 115), the processing returns to confirmation on whether or not any new portion of the side surface CP has entered the angle of view of the image capturing unit 10 (returns to step S102). Additionally, in a case where the defect identification has been completed (in the case of Yes in step S115), the control processing unit 40 ends the processing of defect identification.

The defect identifying device A1 identifies a defect in a measurement region of a measurement object by using the defect identifying method including the above-described respective processes. The defect identifying method may be each provided as an electric circuit of the control processing unit 40. Additionally, the defect identifying method may be a program in which the respective processes are collectively or individually stored in the storage unit 30 and called per processing. In a case where the defect identifying method is a program, the program may be provided in a state recorded in a non-temporary recording medium and operated in the defect identifying device A1 including the control processing unit 40.

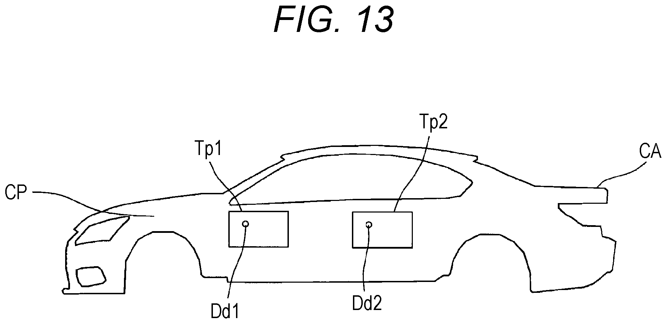

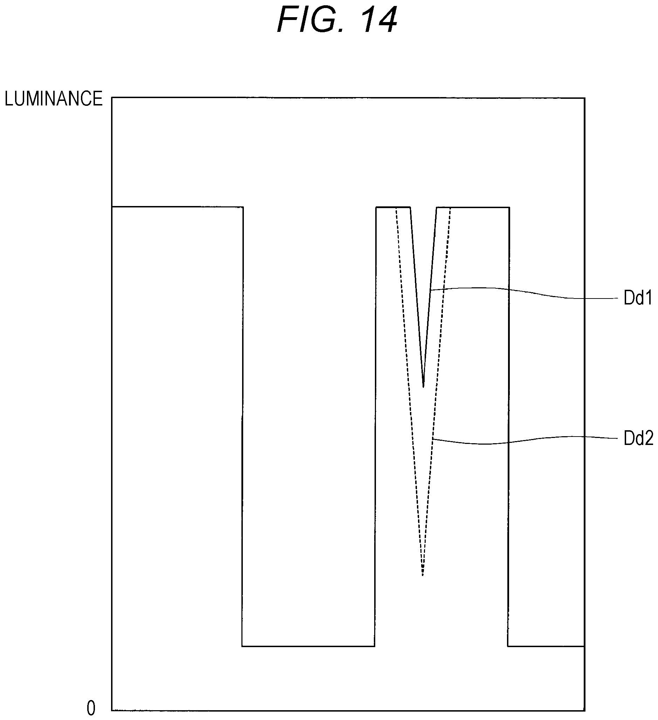

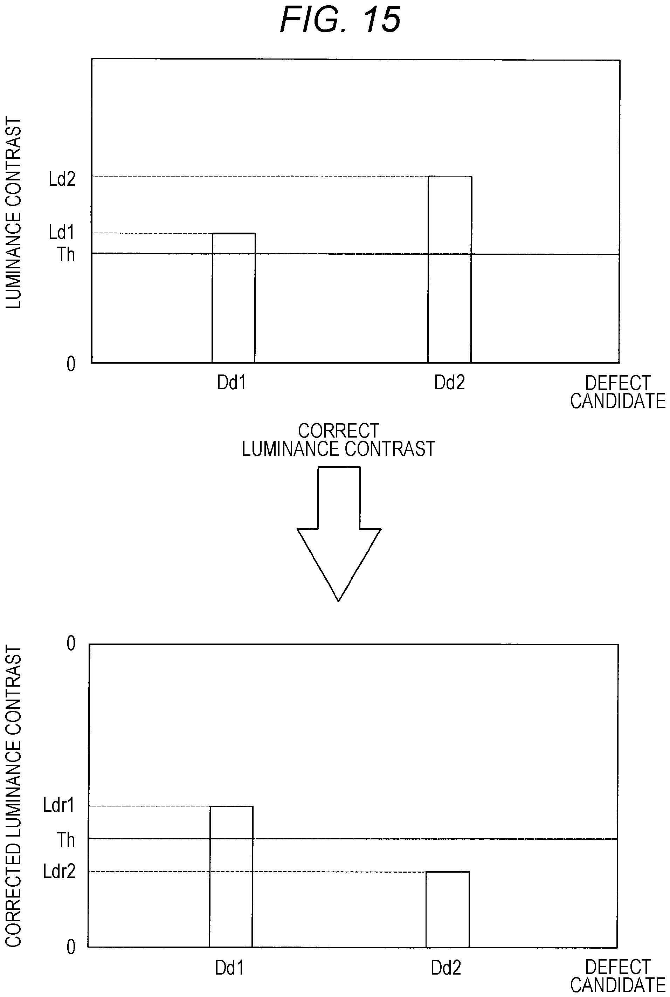

Next, specific operation by the defect identifying device A1 according to the present embodiment at the time of identifying a defect will be described with reference to the drawings. Fig. 13 is a schematic view illustrating a state in which defect candidates are detected at different places of a vehicle. Fig. 14 is a diagram illustrating luminance distribution of the defect candidates detected in the vehicle. Fig. 15 is a diagram illustrating corrected luminance contrast obtained by correcting luminance contrast calculated from the luminance distribution illustrated in Fig. 14. Note that, in Fig. 15, the luminance contrast and the corrected luminance contrast are illustrated in parallel for easy comparison.

In the defect identifying device A1, the vehicle CA is carried by the carrying unit 60. Then, the illumination unit 20 irradiates the carried vehicle CA with the pattern illumination S1. The image capturing unit 10 receives a command from the control processing unit 40 and captures an image of the side surface CP of the vehicle CA at predetermined timing. In Fig. 13, a vehicle front side is defined as a first image capturing region Tp1, and a vehicle rear side is defined as a second image capturing region Tp2. In addition, a defect candidate detected in the first image capturing region Tp1 is defined as a first defect candidate Dd1, and a defect candidate detected in the second image capturing region Tp2 is defined as a second defect candidate Dd2. Assume that the first defect candidate Dd1 has a size identified as a defect, and the second defect candidate Dd2 has a size not identified as a defect.

As illustrated in Fig. 13, a position of the first defect candidate Dd1 on the side surface CP of the vehicle CA is different from a position of the second defect candidate Dd2 on the side surface CP of the vehicle CA. In addition, luminance distribution after applying luminance normalization to the captured image by the normalization unit 45 becomes the luminance distribution as illustrated in Fig. 14. That is, luminance contrast Ld2 (a change amount of luminance) of the second defect candidate Dd2 is larger than luminance contrast Ld1 of the first defect candidate Dd1. This is caused by a fact that a shape of the side surface CP where the first defect candidate Dd1 is formed differs from a shape of the side surface CP where the second defect candidate Dd2 is formed.

Accordingly, the correction value acquisition unit 47 acquires correction values of the positions where the first defect candidate Dd1 and the second defect candidate Dd2 are formed, on the basis of an image capturing position acquired by the image capturing position detection unit 41 and shape information acquired by the shape information acquisition unit 44. Then, corrected luminance contrast from which influence of the shape of the side surface CP is removed is generated by correcting, on the correction values, luminance contrast of each of the first defect candidate Dd1 and the second defect candidate Dd2. The corrected luminance contrast becomes as illustrated in Fig. 15.

As illustrated in Fig. 15, corrected luminance contrast Ldr1 of the first defect candidate Dd1 is larger than corrected luminance contrast Ldr2 of the second defect candidate Dd2. Then, the identifying unit 49 compares each of the corrected luminance contrast Ldr1 of the first defect candidate Dd1 and the corrected luminance contrast Ldr2 of the second defect candidate Dd2 with a threshold value Th. Then, the control processing unit 40 identifies that the first defect candidate Dd1 having the corrected luminance contrast Ldr1 larger than the threshold value Th is a defect. On the other hand, the control processing unit 40 identifies that the second defect candidate Dd2 having the corrected luminance contrast Ldr2 smaller than the threshold value Th is not a defect.

As described above, a correction value is acquired in accordance with a position of a defect candidate, and luminance contrast is corrected with the correction value. Consequently, luminance variation caused by a shape difference with respect to the image capturing unit 10 can be corrected, and defect identification can be correctly performed.

Comparison of an identifying value is simplified by using the luminance contrast as the identifying value. Additionally, even in a case where luminance of a bright portion and luminance of a dark portion are different due to having different coating colors, a defect can be accurately identified by using the luminance contrast. Note that the luminance contrast is obtained as the identifying value in the present embodiment, but not limited thereto. For example, it may also be possible to use a value indicating characteristics of a portion where luminance is changed in luminance distribution, such as a width of a portion where the luminance is changed, an integrated value of change amounts of luminance in a portion where the luminance is changed, and the like.

In the defect identifying device A1 described above, influence on the luminance contrast caused by a shape is removed by correcting the luminance contrast with a correction value of the correction database 32. Here, a method of creating the correction database will be described. In the present embodiment, luminance contrast of a defect of a measurement object model in which the defect having a reference size is formed is actually measured. A correction value is obtained on the basis of the measurement result, and the correction database 32 is created.

First, the control processing unit 40 confirms that a portion of the measurement object model where the defect is formed is located at a position to be a reference state with respect to the image capturing unit 10. The control processing unit 40 controls the illumination unit 20 to irradiate the arranged measurement object model with the pattern illumination S1. The control processing unit 40 controls the image capturing unit 10 to capture an image of the measurement object model. Then, the control processing unit 40 acquires luminance contrast of the defect on the basis of the captured image from the image capturing unit 10, and stores the luminance contrast in the storage unit 30 as a reference value of the luminance contrast. Note that the process of acquiring the luminance contrast is the same as the process of acquiring the luminance contrast at the time of identifying a defect described above.

The control processing unit 40 confirms a change amount (shape variable) from the reference state of the shape (the distance, the angle, and the distance from a focus point) of the measurement object model with respect to the image capturing unit 10. The control processing unit 40 controls the image capturing unit 10 to capture an image of the measurement object model. Then, the control processing unit 40 acquires luminance contrast of a defect on the basis of the captured image from the image capturing unit 10 and stores, as a correction value, a rate of the luminance contrast with respect to the reference value in the correction database 32 in a manner correlated to a shape variable. Then, the control processing unit 40 confirms whether or not correction values corresponding to all of the shape variables set in the correction database 32 are stored in the correction database 32. Then, the control processing unit 40 changes the shape (shape information) of the measurement object model with respect to the image capturing unit 10, acquires the luminance contrast of the defect, and stores the correction value in the correction database 32 in a manner correlated to the shape variable.

As described above, it is possible to create the correction database 32 by actually capturing an image of the measurement object model with the image capturing unit 10 of the defect identifying device A1 and further acquiring luminance contrast of each defect from the captured image. Note that, in the present embodiment, the correction database 32 is created on the basis of an actual measurement value after actually creating the measurement object model and then performing image capturing. However, not limited thereto, the correction database 32 may be created by acquiring a correction value on the basis of luminance contrast of each defect calculated by using optical simulation software.

In a case of creating the correction database 32 by actual measurement, it is possible to remove, from the correction database 32, influence of variation in correction values caused by individual differences of the defect identifying device A1 (for example, differences caused by characteristics of the image capturing unit 10 and characteristics of an electric circuit). Additionally, in a case of creating the correction database 32 by simulation, it is not necessary to create a measurement object model, and a time and labor required for creating the correction database 32 can be omitted.

<First Modified Example>

A modified example of the defect identifying device according to the present embodiment will be described with reference to the drawings. Note that a configuration of the defect identifying device is the same as the above-described configuration, and the substantially same portion will be denoted by the same reference sign, and a detailed description of the same portion will be omitted. As described above, even when defect candidates have the same size, luminance contrast is varied by a shape with respect to the image capturing unit 10. To remove the variation in the luminance contrast caused by the shape, the correction unit 48 may correct, as the correcting process, a threshold value instead of correcting the luminance contrast. In addition, in the identifying process, a defect may be identified by comparing luminance contrast of a defect candidate with the threshold value that has been corrected (hereinafter referred to as a corrected threshold value). Hereinafter, the correcting process will be described in detail with reference to the drawings. Note that operation from the image capturing process to the correction value acquiring process is the same as the flowchart illustrated in Fig. 12.

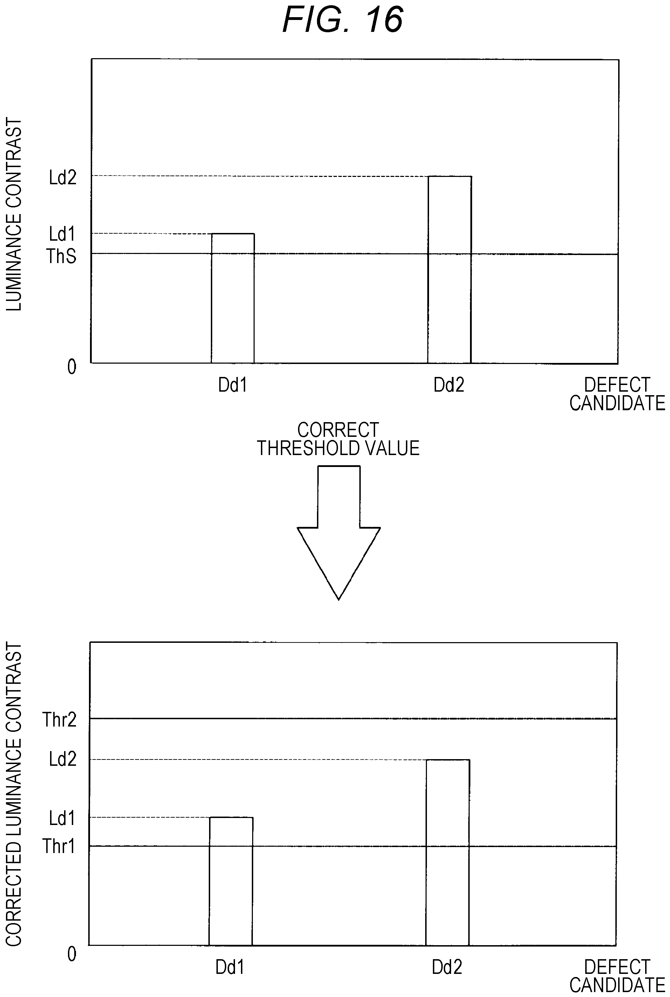

Fig. 16 is a diagram illustrating correction of luminance contrast of each of defect candidates at the time of identifying a defect. Assume that a first defect candidate Dd1 and a second defect candidate Dd2 illustrated in Fig. 16 have the sizes same as those of the first defect candidate Dd1 and the second defect candidate Dd2 illustrated in Fig. 15, respectively, and are formed at the same places respectively on the side surface CP. Additionally, in Fig. 16, the first defect candidate Dd1 and the second defect candidate Dd2 are displayed in parallel for easy comparison.

In the defect identifying device A1, the storage unit 30 stores, as a reference threshold value ThS, a value that is the same or slightly smaller than luminance contrast having a minimum size defect identified as a defect in the reference shape. As illustrated in Fig. 16, luminance contrast Ld1 of the first defect candidate Dd1 and luminance contrast Ld2 of the second defect candidate Dd2 are larger than the reference threshold value ThS.

The correction unit 48 acquires a corrected threshold value obtained by correcting the reference threshold value ThS with a correction value for each defect candidate, in other words, for each shape information of a portion where each defect candidate is formed. As illustrated in Fig. 16, a first corrected threshold value Thr1 corresponding to the first defect candidate Dd1 and a second corrected threshold value Thr2 corresponding to the second defect candidate Dd2 are generated. Then, the identifying unit 49 identifies a defect by comparing luminance contrast of a defect candidate with each corrected threshold value.

More specifically, the luminance contrast Ld1 of the first defect candidate Dd1 is larger than the first corrected threshold value Thr1. Therefore, the identifying unit 49 identifies that the first defect candidate Dd1 is a defect. On the other hand, the luminance contrast Ld2 of the second defect candidate Dd2 is smaller than the second corrected threshold value Thr2. Therefore, the identifying unit 49 identifies that the second defect candidate Dd2 is not a defect.

Thus, similarly to when luminance contrast is corrected, a defect can be correctly identified by correcting a threshold value for evaluation, instead of correcting luminance contrast to be compared. Additionally, a size of a defect candidate to be identified as a defect can be adjusted by changing a value of the reference threshold value ThS. For example, in a case of a place where an uneven portion identified as a defect may have a large size, a size of a defect candidate identified as a defect can be changed by increasing the reference threshold value ThS.

Note that in a case where a shape and a size of the smallest defect candidate to be identified as a defect are prescribed, the correction database may include a corrected threshold value instead of a correction value. In such a case, a time and labor for correcting the threshold value with a correction value can be omitted, and therefore, a time for identifying a defect can be shortened.

Furthermore, the correction database for correcting luminance contrast described above may be used as a correction value as it is. In this case, arithmetic operation reverse to correction of the luminance contrast is to be performed. For example, in a case of calculating corrected luminance contrast by multiplying luminance contrast by a correction value, the luminance contrast is divided by the correction value to calculate a corrected threshold value. Additionally, a correction database to correct luminance contrast may be separately provided.

Luminance of a bright portion B and luminance of a dark portion G in a captured image fluctuate depending on a coating color of the surface of the vehicle CA. For example, in a case of a bright color such as white, silver, or yellow, the luminance of the bright portion B tends to be high, and a luminance difference between the bright portion B and the dark portion G tends to be large. On the other hand, in a case of a dark color such as black or navy blue, the luminance of the bright portion B is low and the luminance difference between the bright portion B and the dark portion G tends to be small. In a case of correcting a threshold value with a correction value, it is possible to use a common correction database even in a case of identifying a defect on the vehicle CA having such a different color. A use region of the storage unit 30 can be reduced by using such a common database. Furthermore, processing by the control processing unit 40 can be reduced because replacement of the correction database is unnecessary.

<Second Modified Example>

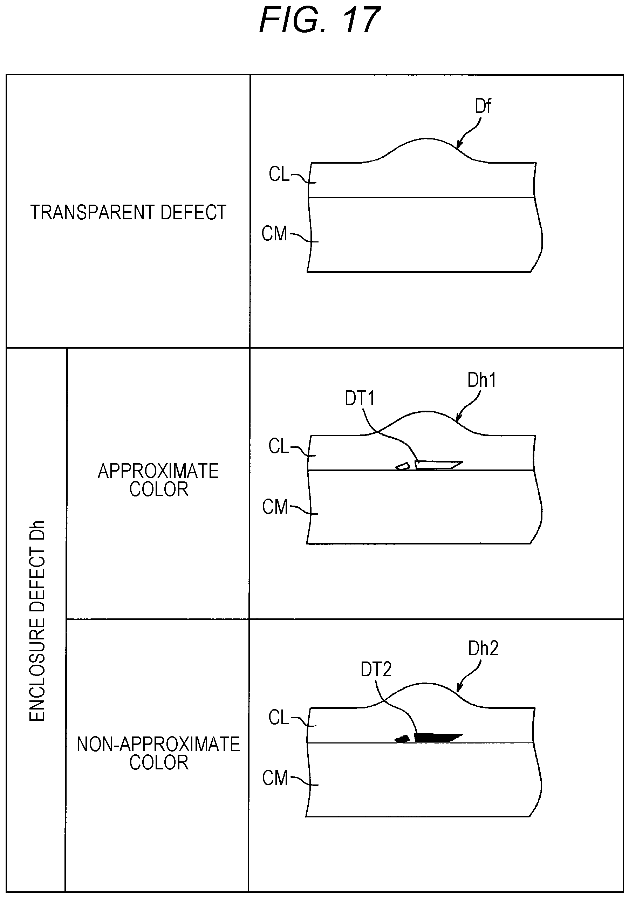

Fig. 17 is a cross-sectional shape of each defect formed on a measurement object. The vehicle CA is exemplified as a measurement object in which a defect is identified by the defect identifying device A1. As illustrated in Fig. 17, the defect includes an uneven portion formed on a surface at the time of coating. Normally, a clear layer CL of a transparent resin is formed on an outermost layer of the coating of the vehicle CA. In addition, one of defects is a protruding portion formed by bulging of the clear layer CL. Note that a defect caused by having many clear layers CL will be referred to as a transparent defect Df. Additionally, a defect is also generated when a foreign matter DT such as dust or dirt is enclosed between the clear layer CL and a metallic layer CM located below the clear layer. A defect caused by the enclosed foreign matter DT will be referred to as an enclosure defect Dh.

The transparent defect Df is formed only by bulging of the transparent clear layer CL and hardly recognizable by a user of the vehicle CA even though the transparent defect is rather large. That is, the transparent defect is hardly identified as a defect. On the other hand, in a case of an enclosure defect Dh, the enclosure defect is more easily recognized by a user than the transparent defect Df because a foreign matter is mixed. In addition, there may be a case where recognizability of the enclosure defect Dh by a user is different depending on a foreign matter DT and a coating color of the vehicle CA. For example, an enclosure defect formed by enclosing a white foreign matter DT in the vehicle CA having white coating (defined as an approximate color enclosure defect Dh1) is hardly recognized as a defect by a user. On the other hand, an enclosure defect formed by enclosing a black foreign matter DT in the vehicle CA having the white coating (defined as a non-approximate color enclosure defect Dh2) is easily recognized as a defect by a user. Thus, in the case of the enclosure defect Dh, recognizability as a defect is different depending on the color of the foreign matter.

Accordingly, in the present modified example, the defect candidate detection unit 42 detects a defect candidate from a captured image Pc1. The defect candidate detection unit 42 determines, in accordance with magnitude of a color change amount, whether or not the defect candidate is a transparent defect Df candidate or an enclosure defect Dh. Furthermore, in a case where the defect candidate is the enclosure defect Dh, whether the enclosure defect Dh is the approximate color enclosure defect Dh1 or the non-approximate color enclosure defect Dh2 is identified.

In the defect identifying device A1 of the present embodiment, the vehicle CA is set as the measurement object and the side surface CP of the vehicle CA is set as the inspection region CP. However, in a case of identifying a defect on the surface of the vehicle CA, defect identification is performed for a portion other than the side surface, for example, a portion such as an engine hood, a bumper, a ceiling, or a car-boot. In the vehicle CA, a size of a defect that can be identified by a user is different depending on a defect position. For example, in a case of a transparent defect Df, when the user gets in the vehicle CA, a transparent defect Df at a position which tends to enter in a line of sight, such as above a door or the engine hood, can be easily recognized by the user even though the transparent defect Df is smaller than that on the ceiling or below the door.

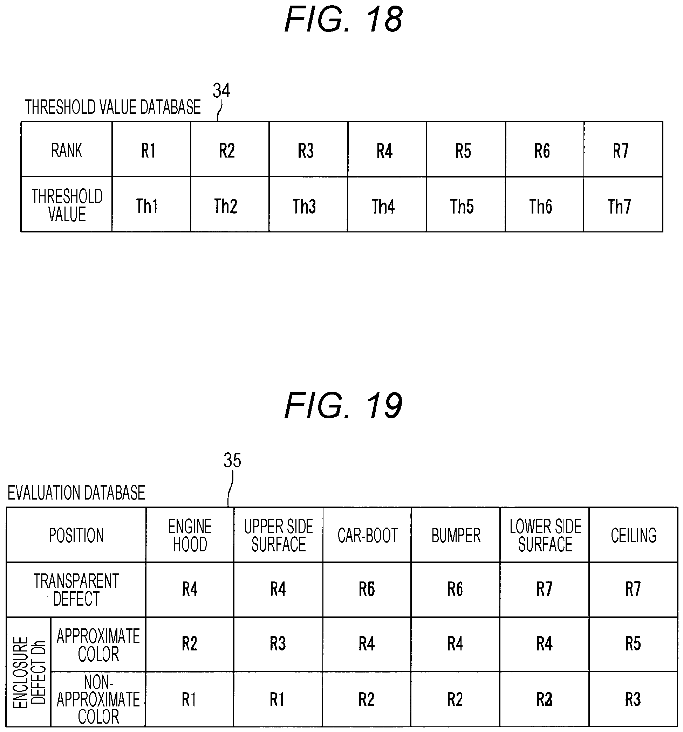

Accordingly, a type and a size of a defect candidate identified as a defect are set differently in each of the regions of the vehicle CA. Consequently, a defect that can be identified by a user can be correctly identified. To change a type and a size of a defect candidate to be identified as a defect as described above, a threshold value is ranked in accordance with a reference defect size in the defect identifying device A1. Here, a threshold value database used for selecting a threshold value will be described with reference to the drawings. Fig. 18 is a diagram illustrating the threshold value database.

As illustrated in Fig. 18, in the threshold value database 34, a size (outer diameter) of a defect at a reference position in the correction database is categorized into ranks. As illustrated in Fig. 18, there are seven kinds of ranks from a first rank R1 to a seventh rank R7 in the threshold value database. In addition, the first rank R1 includes a threshold value Th1 used to identify a defect having a small outer shape. Similarly, the second rank R2 to the seventh rank R7 are provided with threshold values Th2 to Th7. Note that a magnitude relation of the threshold values is Th1 < Th2 < Th3... < Th6 < Th7.

Additionally, the storage unit 30 includes an evaluation database indicating size ranks for detecting a defect. Fig. 19 is a schematic diagram of the evaluation database. In the defect identifying device A1, a size of a defect candidate to be identified as a defect is changed in accordance with: a position in the vehicle CA (an upper side surface, a lower side surface, the engine hood, the bumper, the ceiling, or the car-boot); and a defect type (the transparent defect Df, the approximate color enclosure defect Dh1, or the non-approximate color enclosure defect Dh2). As illustrated in Fig. 19, a size of a defect candidate is categorized into ranks in accordance with a shape and a type thereof.

As illustrated in Fig. 19, the evaluation database 35 has categorized types of the enclosure defect in a vertical direction. Additionally, the evaluation database has categorized positions of the vehicles in a horizontal direction. For example, in the evaluation database 35, the transparent defect Df is ranked in the fourth rank R4 at the upper side surface. Additionally, the approximate color enclosure defect Dh1 is ranked in the second rank R2, and the non-approximate color enclosure defect Dh2 is ranked in the first rank R1.

In addition, the correction unit 48 and the identifying unit 49 refer to the evaluation database 35 from positional information of a defect candidate, and settle a rank of the defect candidate to be identified as a defect. Then, referring to the threshold value database 34, a threshold value based on the settled rank is acquired as a threshold value used to identify that the defect candidate is a defect. For example, in a case where a defect candidate is the approximate color enclosure defect Dh1 and the defect candidate is located at the engine hood, a size rank of a defect is settled by referring to Fig. 19. Then, referring to the threshold value database 34, a threshold value corresponding to the settled rank is settled as a threshold value to be used for defect identification.

In this manner, a threshold value used to identify a defect can be changed in accordance with a position and a type of a defect candidate. Consequently, a defect can be correctly identified while appropriately setting a size of a defect candidate to be identified as a defect in accordance with each position and each type of a defect candidate. Here, the threshold values are categorized into the ranks, but not limited thereto. Similarly to the threshold value database, a database in which weight is set per rank may also be used, and a correction value may be revised by the weight.

<Other Modified Examples>

In the present embodiment, as illustrated in Fig. 12, a normalizing process (step S108) of normalizing luminance of a captured image is provided before the identifying value acquiring process (step S109). However, the present embodiment is not limited thereto. For example, the normalizing process may be omitted, and an identifying value may be directly acquired from data obtained by digitizing the captured image. Since normalization is not performed, the processing can be omitted. Note that, in this case, the normalizing process may be omitted in a case where there is little luminance variation in the captured image caused by a factor other than a defect candidate (an uneven portion), and normalization may be performed in the normalizing process before the identifying value acquiring process in a case where there is large luminance variation in the captured image caused by a factor other than the defect candidate (the uneven portion).

Additionally, in the above-described embodiment, a defect is identified on the basis of a captured image every time one captured image is captured, but not limited thereto. For example, an image is captured and then accumulated every time the vehicle CA that is a measurement object is moved by a certain distance with respect to the image capturing unit 10 and the illumination unit 20. Then, when the vehicle CA is moved by the certain distance or when captured images of the certain number are accumulated, the accumulated images are combined. At this time, a defect candidate can be detected by acquiring a MAX contrast image, a MIN contrast image, and a standard deviation image and combining these images. Note that, as a combining method, for example, a known image combining method such as a MAX-MIN method, a standard deviation method, or a combining method by squaring a difference can be used. Then, image information generated by the combination is normalized by using image processing (for example, a local contrast method).

Here, the local contrast method will be described in detail. A blurred image pictureBlur(i,j) is created by multiplying an image picture(i,j) by movement average of Nx × Ny. An arithmetic expression is Expression 1 provided below.

[Expression 1]

$$pictureBlur(i,j) = \frac{1}{(2 \cdot N_x + 1)(2 \cdot N_y + 1)} \sum_{n=-N_x}^{N_x} \sum_{m=-N_y}^{N_y} picture(i + m, j + n)$$

A local contrast image pictureLC(i,j) is created from the image picture(I,j) and the blurred image pictureBlur(I,j). An arithmetic expression is Expression 2 provided below.

[Expression 2]

$$pictureLC(i,j) = \frac{pictureBlur(i,j) - picture(i,j)}{pictureBlur(i,j)}$$

Note that, as the images to be combined, a plurality of captured images is acquired by moving the vehicle CA and capturing images while fixing the image capturing unit 10 and the illumination unit 20, but not limited thereto. For example, the plurality of captured images may also be acquired by capturing images by moving at least either the image capturing unit 10 or the illumination unit 20. Also, the plurality of captured images may be acquired by capturing images with a plurality of image capturing units 10 by providing the plurality of image capturing units 10 in advance. Note that the normalizing process may be omitted in a case where luminance fluctuation of a defect candidate can be clearly detected by image combination.

<Second Embodiment>

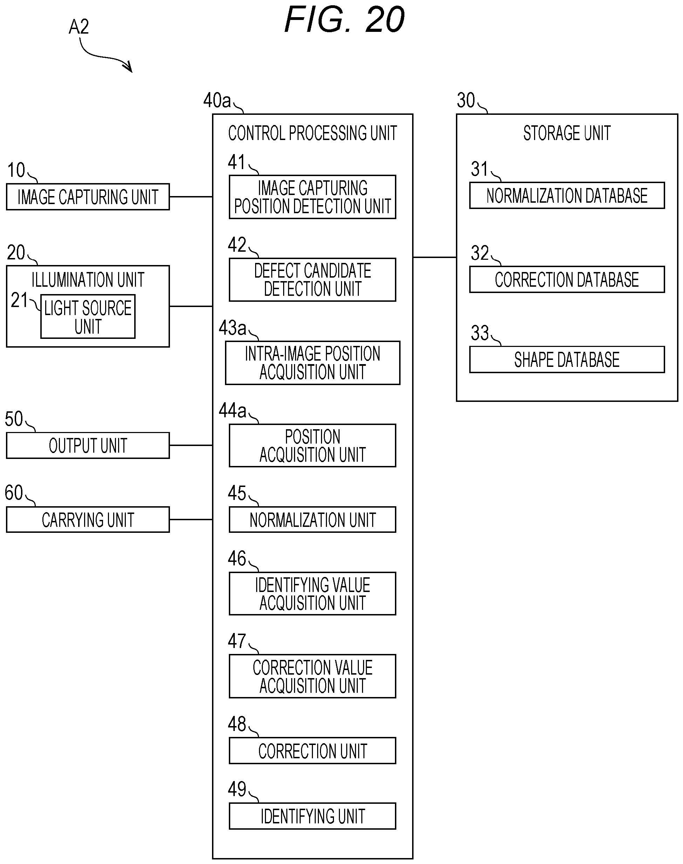

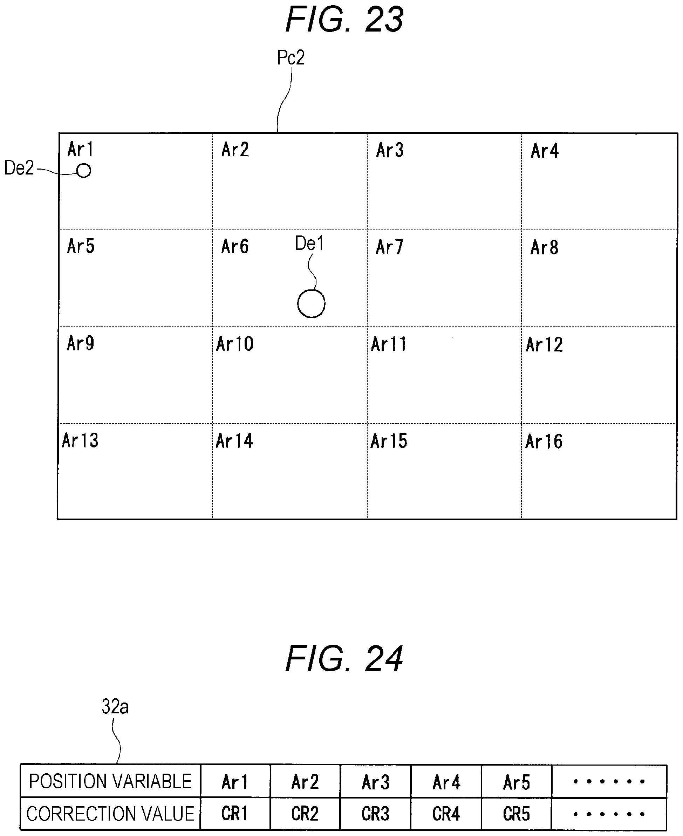

A defect identifying device A2 that is another example according to the present invention will be described with reference to drawings. Fig. 20 is a block diagram illustrating a configuration of another exemplary defect identifying device according to the present embodiment. A control processing unit 40a includes an intra-image position acquisition unit 43a and a position acquisition unit 44a instead of a position acquisition unit 43 and a shape information acquisition unit 44 of a control processing unit 40 illustrated in Fig. 2. A portion in the control processing unit 40a, which is same as that in the control processing unit 40, will be denoted by a same reference sign and a detailed description of the same portion will be omitted. That is, as illustrated in Fig. 20, the control processing unit 40a includes an image capturing position detection unit 41, a defect candidate detection unit 42, the intra-image position acquisition unit 43a, the position acquisition unit 44a, a normalization unit 45, an identifying value acquisition unit 46, a correction value acquisition unit 47, a correction unit 48, and an identifying unit 49. A correction database stored in a storage unit 30 includes a correction database 32a illustrated in Fig. 24 described later.

The intra-image position acquisition unit 43a acquires intra-image positional information that is a position of a defect candidate inside a captured image when the defect candidate detection unit 42 detects the defect candidate. The intra-image positional information may be information per pixel or may be information designating a region while setting, in advance, regions obtained by vertically and horizontally dividing a captured image. Furthermore, a reference point may be preset, and a region may be designated in a polar coordinate system in which a region is represented by a radius and an angle while using the reference point as a center. Additionally, the designation may be made by a method other than these methods.

The position acquisition unit 44a acquires positional information of a defect candidate on a side surface CP of a vehicle CA on the basis of a position of a captured image on the side surface of the vehicle CA and intra-image positional information. A method of acquiring positional information by the position acquisition unit 44a will be further described. As described above, the position of the image capturing unit 10 is preset in the defect identifying device A2. The image capturing unit 10 has a preset angle of view, and acquires a position of a defect candidate in an inspection region CP by combining a position of the defect candidate in a captured image with the angle of view of the image capturing unit 10.

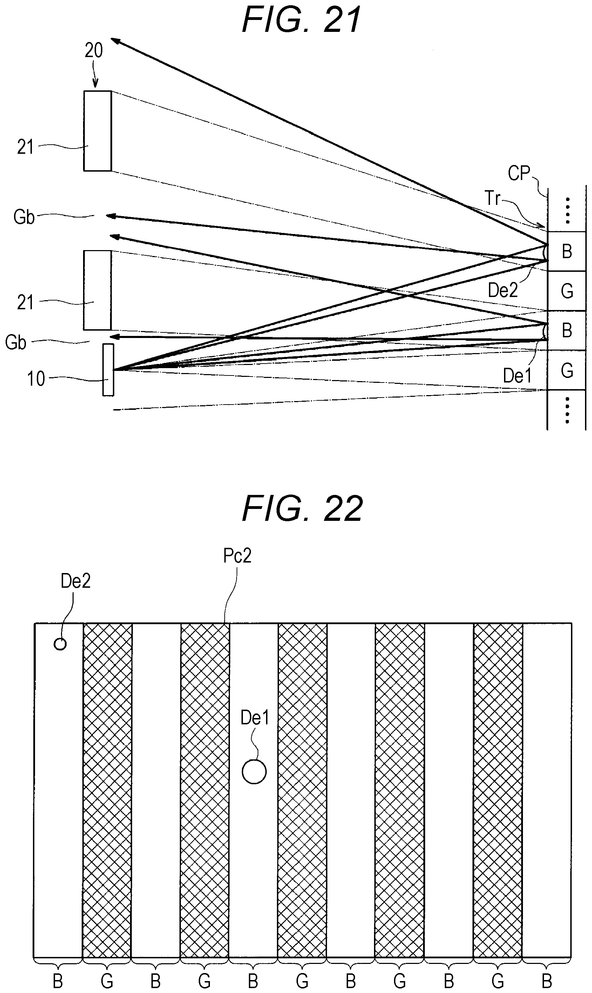

As described above, even though defect candidates have the same size, luminance of the defect candidates is varied when the positions of the defect candidates on a captured image Pc2 are different (see Fig. 22). Accordingly, the correction value acquisition unit 47 accesses the correction database 32a of the storage unit 30 and acquires a correction value by referring to the intra-image positional information. A correction value is a correction coefficient used to correct luminance contrast that is an identifying value acquired in the identifying value acquisition unit 46. The defect identifying device A2 has the above-described configuration.

Luminance of a defect is also varied by a position inside a captured image as for a portion of the inspection region CP where the defect is formed. Hereinafter, a luminance change of a defect candidate caused by a position inside a captured image will be described with reference to the drawings. Fig. 21 is a diagram illustrating a captured image where defect candidates are formed at different positions. Fig. 22 is a schematic plan view illustrating a state of identifying defects in a case where there are defect candidates at different positions inside a captured image. As illustrated in Fig. 21, assume that a first defect candidate De1 is formed in a center portion of the captured image Pc2 and a second defect candidate De2 is formed in an upper left portion thereof.

As illustrated in Fig. 21, the first defect candidate De1 and the second defect candidate De2 have different distances and different angles with respect to the image capturing unit 10 from the respective defect candidates. Therefore, light propagation paths emitted from the image capturing unit 10 and reflected at the respective defect candidates are incident on different regions of an illumination unit 20. That is to say, the first defect candidate De1 and the second defect candidate De2 have different luminance although both defect candidates have the same size. Exemplary reasons that may cause a change of an identifying value depending on a position inside the captured image may include: a difference in a ray angle with respect to a defect; influence of aberration; a positional relation between the image capturing unit, the illumination unit, and a measurement object; and the like, but not limited thereto.

Luminance contrast of a defect candidate is varied by a position inside a captured image. When luminance contrast of a defect candidate is varied by a position inside a captured image, it may be difficult to correctly identify a defect. Accordingly, in the control processing unit 40a according to the present embodiment, the storage unit 30 includes the correction database 32a having a correction value that suppresses variation in luminance contrast caused by a position inside a captured image (an intra-image position). Then, the control processing unit 40a corrects the luminance contrast in accordance with a position of a defect candidate inside a captured image and then identifies a defect.

More specifically, the image capturing unit 10 collects external light onto an image capturing element by a lens and outputs, as a captured image, a picture of the light formed on the image capturing element. Then, the position in the captured image Pc2 corresponds to a position of a defect candidate in an image capturing region Tr of the side surface CP. Accordingly, the correction database 32a of the defect identifying device according to the present embodiment includes a correction value for each intra-image position variable while setting, as an intra-image position variable, a position of a defect candidate in the captured image Pc2. In addition, a correction value corresponding to an intra-image position variable is acquired, and also a defect is identified by correcting luminance contrast with the correction value. Note that most of factors that cause a change of an identifying value can be removed by generating the correction database 32a on the basis of actual measurement values or simulation. Note that a detailed description of normalization will be omitted because of being the same as that in a first embodiment.

Next, the correction database 32a will be described. Fig. 23 is a diagram illustrating, on a captured image, intra-image position variables of the correction database. Fig. 24 is a diagram illustrating an exemplary correction database.

As described above, luminance contrast of a defect candidate is varied by a position in the captured image Pc2, and accordingly, the defect identifying device A2 vertically and horizontally divides the captured image Pc2 into sixteen equal portions as illustrated in Fig. 23, and the divided regions are defined as a first region Ar1 to a sixteenth region Ar16. In addition, the sixteen divided regions from the first region Ar1 to the sixteenth region Ar16 are intra-image position variables of the correction database 32a. Note that, in the present embodiment, the captured image Pc2 is divided into the sixteen equal portions to simplify the description, but not limited thereto. For example, division into smaller regions such as twenty-five equal portions or thirty-six equal portions may also be applicable. Additionally, in the present embodiment, the number of vertical divisions and the number of horizontal divisions are the same, but not limited thereto. For example, a divided region may have a square shape or any arbitrary shape, and the captured image Pc2 may be embedded with divided regions without any gap. That is, it is possible to adopt a wide range of divided regions such that a portion where a defect candidate is formed can be designated.

As illustrated in Fig. 24, in the correction database 32a, the above-described divided regions are listed in an upper row as intra-image position variables, and correction values CRi (a suffix i is an integer of 1 or more) corresponding to the intra-image position variables are listed in a lower row. For example, in a case of an intra-image position variable Ar6, the correction value is CR6. That is, in the captured image Pc2, luminance contrast of a defect in the sixth region Ar6 (see Fig. 23) corresponding to the intra-image position variable Ar6 is corrected by using the correction value CR6.

Note that using such divided regions as illustrated in Fig. 23 as the intra-image position variables of the correction database 32a is an example, and the intra-image position variables are not limited thereto.

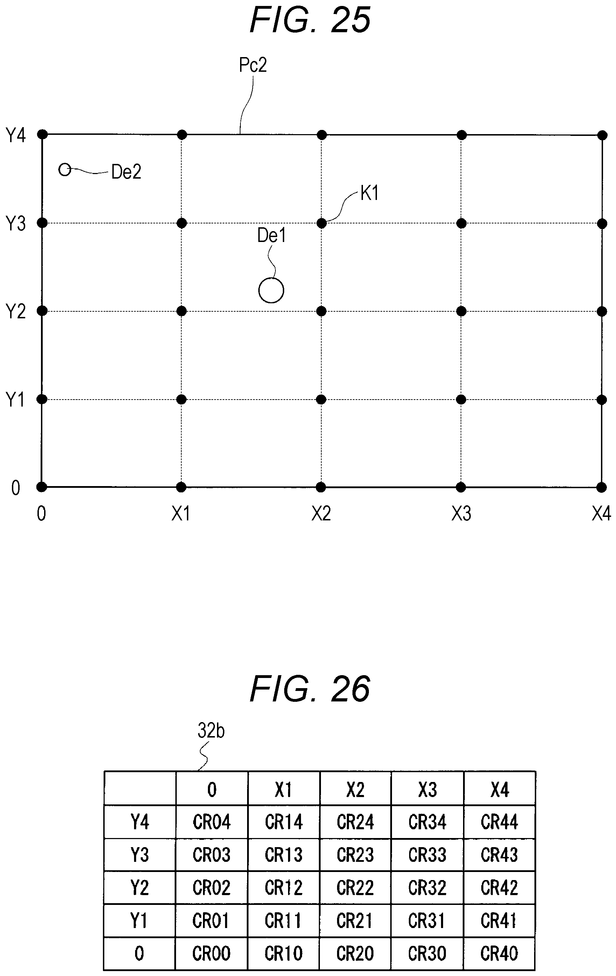

Other examples of intra-image position variables and the correction database will be described with reference to the drawings. Fig. 25 is a diagram illustrating intra-image position variables in a captured image of the correction database. Fig. 26 is a diagram illustrating another exemplary correction database.

As illustrated in Fig. 25, a corner portion in lower-left of the captured image Pc2 is defined as an original (0, 0), and a horizontal side and a vertical side of the captured image Pc2 are equally divided. Here, the captured image is equally divided into four in both vertically and horizontally. Then, points that equally divide the horizontal side of the captured image Pc2 are set as horizontal intra-image position variables and defined as X1, X2, X3, and X4 sequentially from the origin side. Additionally, points that equally divide the vertical side are similarly set as vertical intra-image position variables and defined as Y1, Y2, Y3, and Y4 sequentially from the origin side. That is, an intra-image position variable represents a distance from the origin.

Each of intersections of lines that equally divide the respective sides in Fig. 25 is indicated by using a horizontal intra-image position variable and a vertical intra-image position variable. For example, a point K1 in Fig. 25 is represented as (X2, Y3) by using the intra-image position variables. Then, the correction database 32b includes correction values CRpq (suffixes p and q are integers and variables) in the respective intersections. That is, in the correction database 32b illustrated in Fig. 26, the horizontal intra-image position variables are listed as horizontal items, and the vertical intra-image position variables are listed as vertical items. Then, a correction value at a point indicated by intra-image position variables of a horizontal item and a vertical item is arranged in a square where a horizontal row frame and a vertical column frame intersect with each other. For example, in the case of the point K1 described above, a correction value is a correction value CR23 by referring to a square where a horizontal item X2 and a vertical item Y3 intersect with each other.

The correction database 32b illustrated in Fig. 26 includes correction values at points in the captured image Pc2. It is unusual that a defect candidate to be actually identified overlaps with a point set in the correction database 32b. Accordingly, the intra-image position acquisition unit 43a of the control processing unit 40a acquires positional information of horizontal and vertical positions of a defect candidate while using the lower-left corner of the captured image Pc2 as the origin. Then, correction coefficients at a plurality of intersections in the vicinity of the defect candidate are called on the basis of the positional information. Then, a plurality of correction coefficients in the vicinity of the defect candidate is calculated by arithmetic operation, and used as correction values. Note that, as for a method of calculating a correction coefficient, it is possible to exemplify arithmetic operation using distances, angles, and the like between each of the plurality of intersections and the defect candidate. For example, a correction value may also be calculated on the basis of a rate of a distance from a defect candidate to an intersection. Additionally, a separate arithmetic expression may also be provided.

Note that the horizontal intra-image position variables 1 to 4 and the vertical intra-image position variables 1 to 4 are set, but not limited thereto. The number of the respective intra-image position variables may be more increased, or a horizontal distance and a vertical distance between intersections may be set equal to each other.

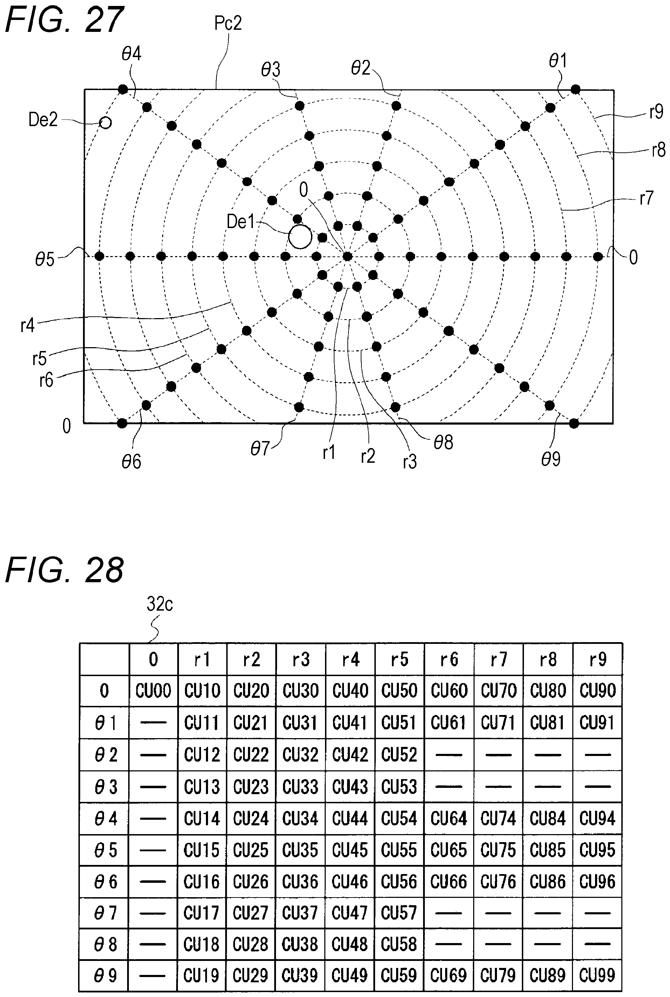

Other examples of intra-image position variables and a correction database will be further described with reference to the drawings. Fig. 27 is a diagram illustrating, on a captured image, intra-image position variables of another exemplary correction database. Fig. 28 is a diagram illustrating still another exemplary correction database. Like a captured image Pc2 illustrated in Fig. 27, intersections of lines that equally divide the captured image Pc2 in a circumferential direction and lines that equally divide the captured image Pc2 in a radial direction may be used as correction points described above. In the captured image Pc2 illustrated in Fig. 27, a center thereof is defined as an origin (0, 0). In addition, the correction database includes, as intra-image position variables, lengths 0 to r9 from the origin and inclination angles 0 to θ9 with respect to a reference line passing through the origin. In addition, as illustrated in Fig. 28, the lengths are arranged as horizontal items, and the angles are arranged as vertical items in a correction database 32c. Then, provided are correction values CUst (suffixes s and t are integers and variables) at intersections at portions where respective items intersect with each other.

For example, a point K2 in the captured image Pc2 illustrated in Fig. 27 is indicated as (r3, θ2) by using the intra-image position variables. Additionally, a correction value at the point K2 is a correction value CU32 on the basis of the correction database 32c in Fig. 28. Note that calculation of a correction value of a defect candidate at a point other than intersections is the same as that at the time of using the correction database 32b of Fig. 26 described above, and a detailed description thereof will be omitted.

Note that, as illustrated in Fig. 28, regions surrounded by circles each centering the origin and straight lines extending from the origin may be set as divided regions, and a correction database configured as illustrated in Fig. 24 may also be adopted.

Also, intra-image positional information of a defect candidate may be acquired from a rectangular coordinate system or a polar coordinate system, and a correction value may be calculated by using a database providing a correction value obtained by an arithmetic expression using the intra-image positional information. In such a case, one arithmetic expression may be used for an entire region of a captured image, or different arithmetic expressions may be used by dividing the captured image into areas or the like.

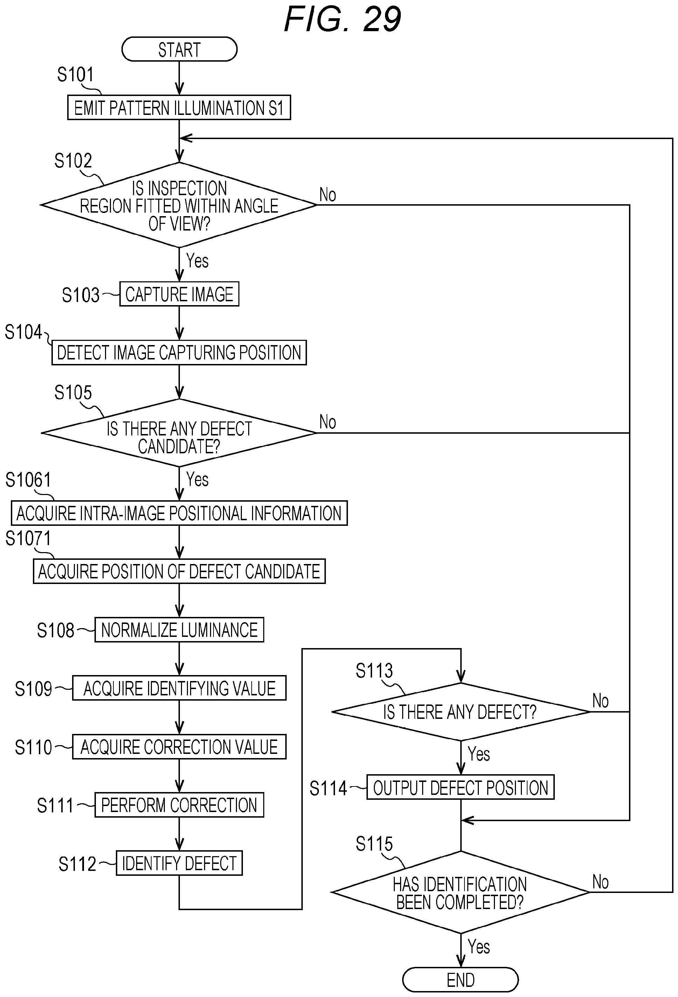

The defect identifying device A2 has the above-described configuration. Next, operation of the defect identifying device A2 will be described with reference to the drawing. Fig. 29 is a flowchart illustrating defect identifying operation of the defect identifying device. The flowchart illustrated in Fig. 29 includes steps S1061 and S1071 instead of steps S106 and S107 in a flowchart illustrated in Fig. 12. Therefore, in the following description, different portions from the flowchart illustrated in Fig. 12 will be described, and a description of common portions will be omitted.

It is confirmed whether or not defect identification to be executed for the vehicle CA has been completed by the defect candidate detection unit 42 (step S105). Then, in a case where a defect candidate is detected on the side surface CP by the defect candidate detection unit 42 (Yes in step S105), the intra-image position acquisition unit 43a acquires intra-image positional information that is information of a position of the defect candidate inside a captured image (step 1061: intra-image position acquiring process). Then, the position acquisition unit 44a acquires positional information that is information of a position of the defect candidate on the side surface CP on the basis of the intra-image positional information and an image capturing position (step S1071: position acquiring process).

The correction value acquisition unit 47 receives the intra-image positional information from the intra-image position acquisition unit 43a, refers to the received intra-image positional information and the correction database 32a stored in the storage unit 30, and acquires a correction value corresponding to the intra-image positional information (step S110: correction value acquiring process).

The defect identifying device A2 identifies a defect in a measurement region of a measurement object by using a defect identifying method including the above-described respective processes. The defect identifying method may be provided as an electric circuit of the control processing unit 40a. Additionally, the defect identifying method may be a program in which the respective processes are collectively or individually stored in the storage unit 30 and called per processing. In a case where the defect identifying method is a program, the program may be provided in a state recorded in a non-temporary recording medium and operated in the defect identifying device A2 including the control processing unit 40a.

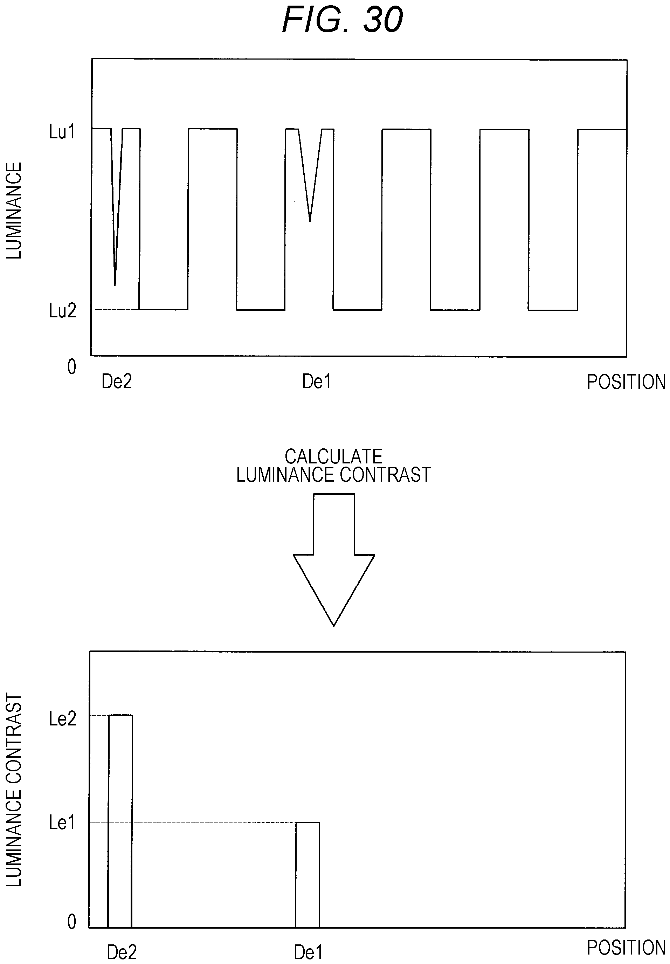

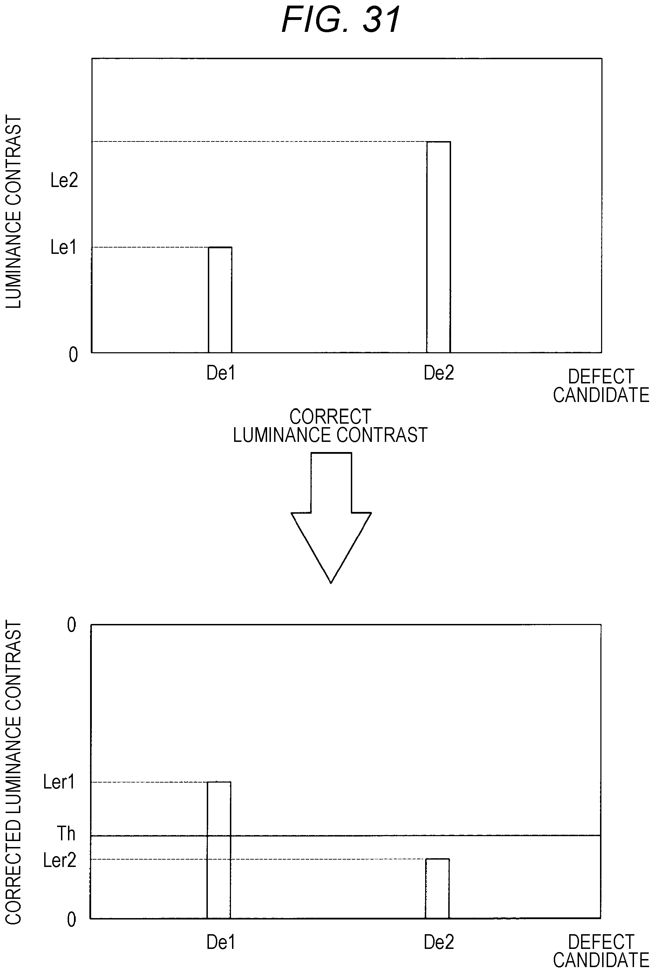

Next, specific operation by the defect identifying device A2 according to the present embodiment at the time of identifying a defect will be described with reference to the drawings. Fig. 30 is a diagram illustrating luminance distribution of the defect candidates of the captured image illustrated in Fig. 22. Fig. 31 is a diagram illustrating corrected luminance contrast obtained by correcting luminance contrast calculated from the luminance distribution illustrated in Fig. 30. In Fig. 31, the first defect candidate De1 and the second defect candidate De2 are displayed in parallel for easy comparison.

For example, the captured image Pc2 captured by the image capturing unit 10 is an image as illustrated in Fig. 22. That is, the first defect candidate De1 is formed at a position near a center of the captured image Pc2, and the second defect candidate De2 is formed at an upper left portion. Note that the first defect candidate De1 has a size identified as a defect, and the second defect candidate De2 has a size not identified as a defect.

As illustrated in Fig. 22, a position of the first defect candidate De1 in the captured image Pc2 is different from a position of the second defect candidate De2 in the captured image Pc2. In addition, the luminance distribution after the normalization unit 45 normalizes the luminance of the captured image becomes as illustrated in Fig. 30. That is, luminance contrast Le2 (a change amount of luminance) of the second defect candidate De2 is larger than luminance contrast Le1 of the first defect candidate De1. This is caused by a fact that the position of the second defect candidate De2 in the captured image Pc2 is closer to an edge than the first defect candidate De1 is, and less light is reflected at the defect candidate and incident on the image capturing unit 10.

Accordingly, the correction value acquisition unit 47 acquires a correction value corresponding to each of the first defect candidate De1 and the second defect candidate De2 on the basis of intra-image positional information acquired by the intra-image position acquisition unit 43a. For example, assume that the defect identifying device A2 uses the correction database 32a. At this time, the first defect candidate De1 is located in the sixth region Ar6. Consequently, the correction value acquisition unit 47 searches the correction database 32a while setting an intra-image position variable as Ar6, and acquires the correction value CR6. Additionally, the second defect candidate De2 is located in the first region Ar1. Therefore, the correction value acquisition unit 47 acquires the correction value CR1 in a similar method.

Then, the correction unit 48 corrects the luminance contrast in each of the first defect candidate De1 and the second defect candidate De2 by using a corresponding correction value, and generates a corrected luminance contrast from which influence of a shape of the side surface CP is removed. The corrected luminance contrast is as illustrated in Fig. 31.

As illustrated in Fig. 31, corrected luminance contrast Ler1 of the first defect candidate De1 is larger than corrected luminance contrast Ler2 of the second defect candidate De2. Then, the identifying unit 49 compares each of the corrected luminance contrast Ler1 of the first defect candidate De1 and the corrected luminance contrast Ler2 of the second defect candidate De2 with a threshold value Th. Then, the control processing unit 40a identifies that the first defect candidate De1 having the corrected luminance contrast Ler1 larger than the threshold value Th is a defect. On the other hand, the control processing unit 40a identifies that the second defect candidate Dd2 having the corrected luminance contrast Ler2 smaller than the threshold value Th is not a defect.

As described above, a correction value is acquired in accordance with a position of a defect candidate inside a captured image, and luminance contrast is corrected with the correction value. Consequently, luminance variation caused by a position of each defect candidate inside the captured image can be corrected, and defect identification can be correctly performed.

Comparison of an identifying value is simplified by using the luminance contrast as an identifying value. Additionally, even in a case where luminance of a bright portion and luminance of a dark portion are different due to having different coating colors, a defect can be accurately identified by using the luminance contrast. Note that the luminance contrast is obtained as the identifying value in the present embodiment, but not limited thereto. For example, it may also be possible to use a value indicating characteristics of a portion where luminance is changed in luminance distribution, such as a width of a portion where the luminance is changed, an integrated value of change amounts of luminance in a portion where the luminance is changed, and the like.

In the defect identifying device A2 described above, influence of luminance contrast caused by a shape is removed by correcting the luminance contrast with a correction value of the correction database 32a. Here, a method of creating the correction database will be described. In the present embodiment, luminance contrast of a defect of a measurement object model in which the defect having a reference size is formed is actually measured. A correction value is obtained on the basis of the measurement result, and the correction database 32a is created.

First, the control processing unit 40a confirms that a portion of the measurement object model where the defect is formed is located at a position to be a reference state with respect to the image capturing unit 10. The control processing unit 40a controls the illumination unit 20 to irradiate the measurement object model with pattern illumination S1. The control processing unit 40a controls the image capturing unit 10 to capture an image of the measurement object model. Then, the control processing unit 40a acquires luminance contrast of a defect on the basis of a captured image from the image capturing unit 10, and stores the luminance contrast in the storage unit 30 as a reference value of the luminance contrast. Note that the process of acquiring the luminance contrast is the same as the process of acquiring the luminance contrast at the time of identifying a defect described above.

After that, the measurement object model is moved to a position where a defect appears at a prescribed position in the captured image (an intra-image position). The control processing unit 40a controls the image capturing unit 10 to capture an image of the measurement object model. Then, the control processing unit 40a acquires luminance contrast of a defect on the basis of the captured image from the image capturing unit 10 and stores, as a correction value, a rate of the luminance contrast with respect to the reference value in the correction database 32a in a manner correlated to an intra-image position variable. Then, the control processing unit 40a confirms whether or not the correction values corresponding to all of the shape variables set in the correction database 32a are stored in the correction database 32a. Then, the control processing unit 40a changes a position of a defect in the captured image (intra-image positional information) to acquire luminance contrast of the defect, and stores a correction value in the correction database 32a in a manner correlated to an intra-image position variable.

<First Modified Example>

A modified example of the defect identifying device according to the present embodiment will be described with reference to the drawings. Note that a configuration of the defect identifying device is the same as the above-described configuration, and the substantially same portion will be denoted by the same reference sign, and a detailed description of the same portion will be omitted. As described above, even when defect candidates have the same size, luminance contrast is varied by a position thereof inside a captured image. To remove the variation in the luminance contrast caused by the position inside the captured image, the correction unit 48 may correct a threshold value instead of correcting luminance contrast as the correcting process. In addition, in the identifying process, a defect may be identified by comparing luminance contrast of a defect candidate with the threshold value that has been corrected (hereinafter referred to as a corrected threshold value). Hereinafter, the correcting process will be described in detail with reference to the drawings. Note that operation from an image capturing process to the correction value acquiring process is the same as the flowchart illustrated in Fig. 29.

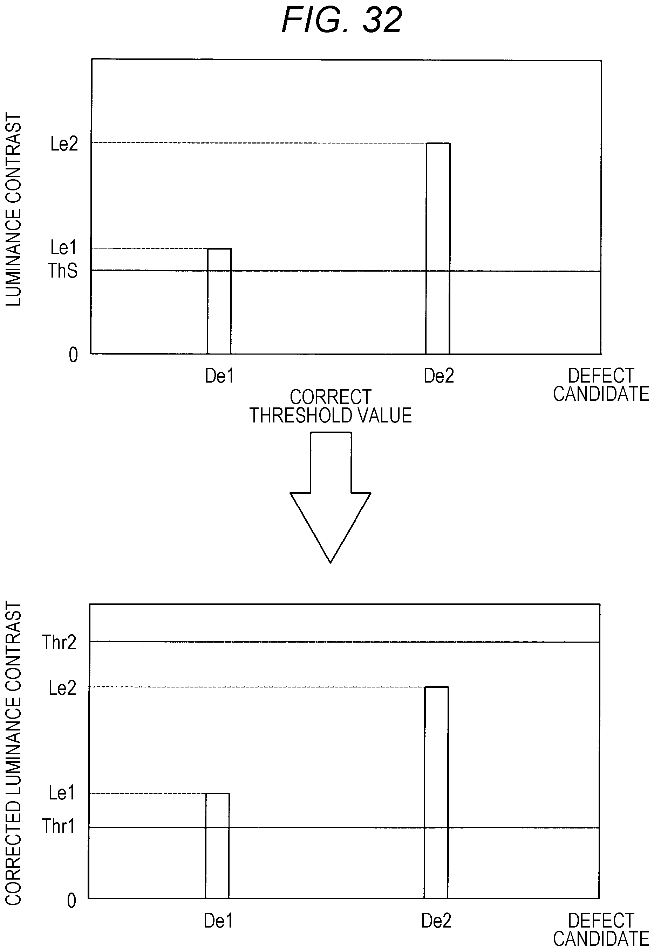

Fig. 32 is a diagram illustrating correction of luminance contrast of each of defect candidates at the time of identifying a defect. Assume that the first defect candidate De1 and the second defect candidate De2 have the sizes same as those illustrated in Fig. 21 and are formed at the same places respectively on the side surface CP. Additionally, in Fig. 32, the first defect candidate De1 and the second defect candidate De2 are displayed in parallel for easy comparison.

In the defect identifying device A2, the storage unit 30 stores, as a reference threshold value ThS, a value that is the same as or slightly smaller than luminance contrast of a minimum size defect identified as a defect in a reference position inside a captured image. As illustrated in Fig. 32, the luminance contrast Le1 of the first defect candidate De1 and the luminance contrast Le2 of the second defect candidate De2 are larger than the reference threshold value ThS.

The correction unit 48 acquires a corrected threshold value obtained by correcting the reference threshold value ThS with a correction value for each defect candidate, in other words, for each position inside the captured image Pc2 in a portion where a defect candidate is formed. As illustrated in Fig. 32, a first corrected threshold value Thr1 corresponding to the position of the first defect candidate De1 and a second corrected threshold value Thr2 corresponding to the position of the second defect candidate De2 are generated. Then, the identifying unit 49 identifies a defect by comparing luminance contrast of a defect candidate with each corrected threshold value.

More specifically, the luminance contrast Le1 of the first defect candidate De1 is larger than the first corrected threshold value Thr1. Therefore, the identifying unit 49 identifies that the first defect candidate De1 is a defect. On the other hand, the luminance contrast Le2 of the second defect candidate De2 is smaller than the second corrected threshold value Thr2. Therefore, the identifying unit 49 determines that the second defect candidate De2 is not a defect.

Thus, similarly to when luminance contrast is corrected, a defect can be correctly identified by correcting a threshold value for evaluation, instead of correcting luminance contrast to be compared. Additionally, a size of a defect candidate to be identified as a defect can be adjusted by changing a value of the reference threshold value ThS. For example, in a case of a place where an uneven portion identified as a defect may have a large size, a size of a defect candidate identified as a defect can be changed by increasing the reference threshold value ThS.

<Third Embodiment>

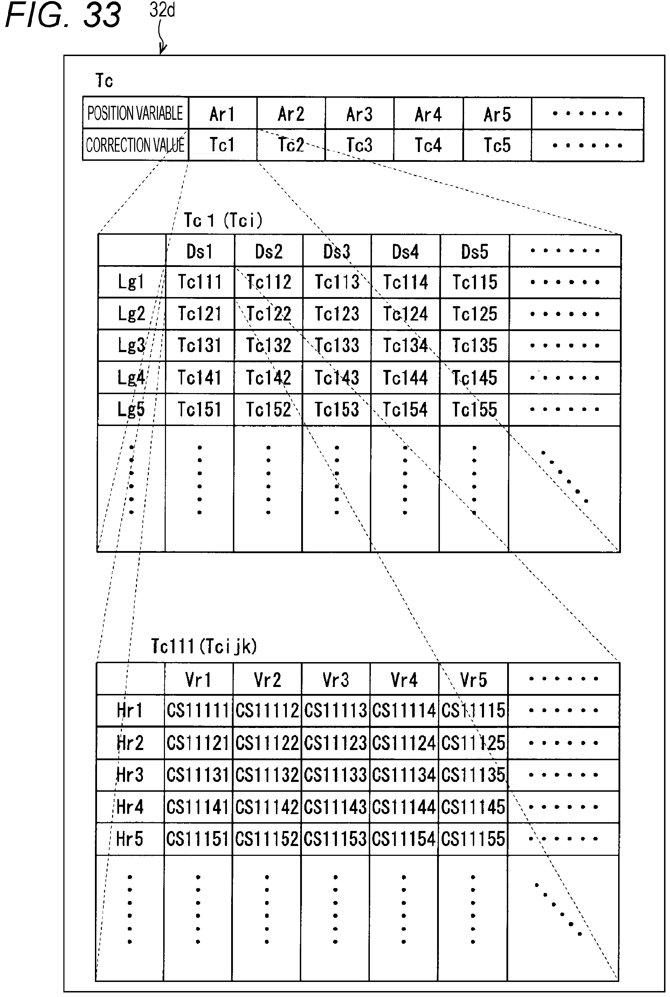

Another example of a defect identifying device according to the present invention will be described. Luminance variation in each defect includes not only variation caused by a position inside a captured image as described above but also variation caused by a shape with respect to an image capturing unit 10 as for a place where a defect is formed. Accordingly, the defect identifying device of the present embodiment uses a correction database 32d in which a shape of a defect candidate with respect to the image capturing unit 10 is added as an intra-image position variable. A new correction database will be described with reference to the drawings. Fig. 33 is a diagram illustrating another exemplary correction database. In the correction database, a correction value includes, as intra-image position variables, a distance variable Lg, a horizontal angle variable Hr, a vertical angle variable Vr, and a distance variable Ds from a focus point (see Fig. 10).

As illustrated in Fig. 33, a correction database 32d includes correction values corresponding to the intra-image position variables. The correction database 32d illustrated in Fig. 33 includes three tables. First, in a main table Tc, a secondary data table Tci (a suffix i is an integer) is correlated to each of divided regions illustrated in Fig. 22. That is, a secondary data table Tc1 is correlated to a first region Ar1, a secondary data table Tc2 is correlated to a second region Ar2,..., a secondary data table Tc16 is correlated to a sixteenth region Ar16.

As illustrated in Fig. 33, a correction database 32d includes correction values corresponding to the intra-image position variables. The correction database 32d illustrated in Fig. 33 includes three tables. First, in a main table Tb, a secondary data table Tci (a suffix i is an integer) is correlated to each of divided regions illustrated in Fig. 22. That is, a secondary data table Tc1 is correlated to a first region Ar1, a secondary data table Tc2 is correlated to a second region Ar2,..., a secondary data table Tc16 is correlated to a sixteenth region Ar16.

The secondary data table Tci (Tc1 in Fig. 33) is a table in which distance variables Lg are listed as vertical items, and distance variables Ds from the focus point are listed as horizontal items. In addition, each record cell of the secondary data table Tci includes a second table Tcijk in which correction values CSijkmn (suffixes i, j, k, m, and n are integers) correlated to the horizontal angle variables Hr and the vertical angle variables Vr are stored. Note that the suffix i is a variable indicating a divided region. The suffixes j and k are variables indicating the distance variables Lg and the distance variables Ds from the focus point, respectively. The suffixes m and n are variables indicating the horizontal angle variables Hr and the vertical angle variables Vr.

Thus, the correction values CSijkmn is settled on the basis of five intra-image position variables, that is, divided regions (positions inside a captured image), the distance variables Lg, the distance variables Ds from the focus point, the horizontal angle variables Hr, and the vertical angle variables Vr. Note that, as for each correction value CSijkmn, it may be possible to use luminance contrast actually acquired by a defect identifying device A2 while using, as an inspection region CP, a flat plate or the like where a defect is formed. Also, it may be possible to utilize luminance contrast calculated by optical simulation by creating a model for each shape variable. Note that the correction database 32d has a configuration as illustrated in Fig. 33 for easy understanding, but the configuration is not limited thereto as far as provided is a database that can simultaneously change the five variables.

Furthermore, there may be a case where a correction value CSijkmn is hardly acquired directly from the correction database 32d on the basis of actual positional information. In such a case, a correction value may be acquired by performing interpolation using a correction value of shape information close to the actual shape information. Note that the correction database 32d illustrated in Fig. 33 is an exemplary database and not limited thereto. For example, a correction value may be provided as an arithmetic expression using a correction coefficient. Furthermore, a table as illustrated in Fig. 26 or 28 may also be used as the main table Tc.

It is possible to acquire a correction value in accordance a state of a defect candidate by using such a correction database 32d. Consequently, variation in luminance contrast of a defect candidate can be removed. Consequently, a defect can be more correctly identified.

<Fourth Embodiment>

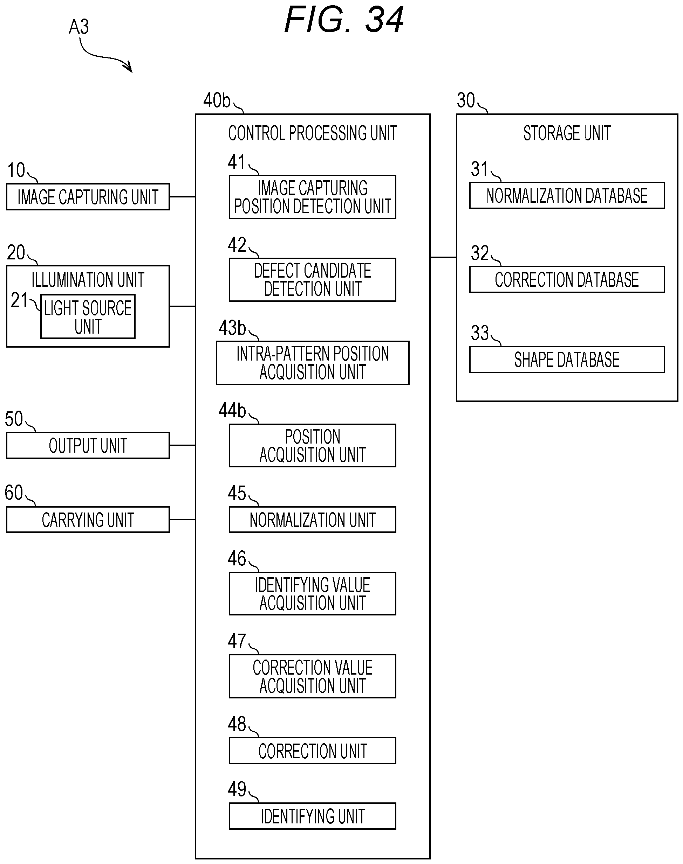

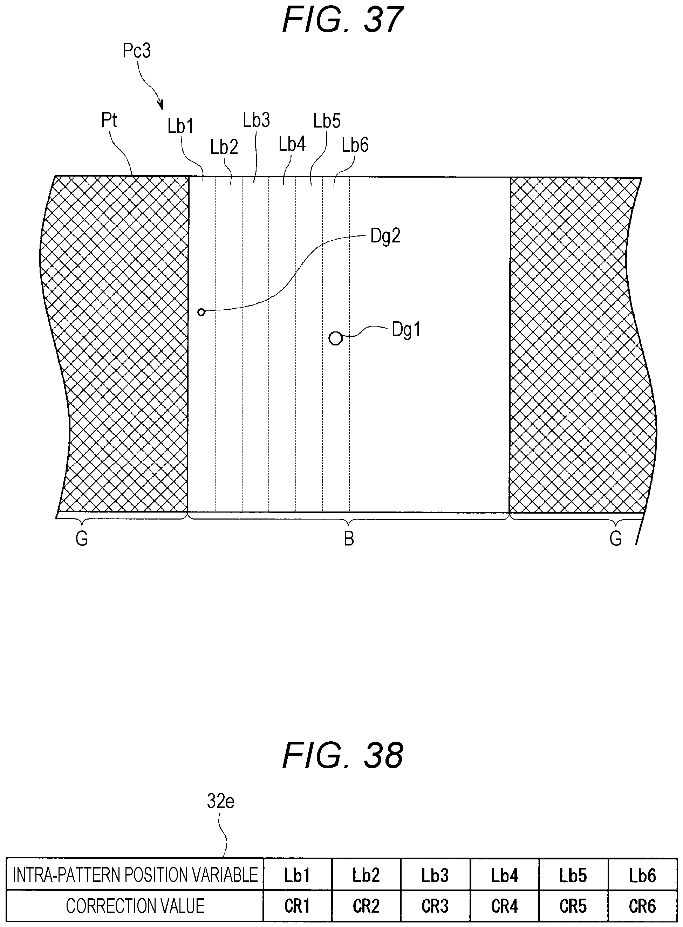

A defect identifying device A3 that is another example according to the present invention will be described with reference to the drawings. Fig. 34 is a block diagram illustrating a configuration of another exemplary defect identifying device according to the present embodiment. Note that, in the following description, a correction database 32e illustrated in Fig. 38 described later is used in a case where a correction database stored in a storage unit 30 is not particularly designated. A control processing unit 40b includes an intra-pattern position acquisition unit 43b and a position acquisition unit 44b instead of a position acquisition unit 43 and a shape information acquisition unit 44 of a control processing unit 40 illustrated in Fig. 2. A portion of the control processing unit 40b, which is the same as that in the control processing unit 40, will be denoted by a same reference sign, and a detailed description of the same portion will be omitted. That is, as illustrated in Fig. 34, the control processing unit 40b includes an image capturing position detection unit 41, a defect candidate detection unit 42, the intra-pattern position acquisition unit 43b, the position acquisition unit 44b, a normalization unit 45, an identifying value acquisition unit 46, a correction value acquisition unit 47, a correction unit 48, and an identifying unit 49.

The intra-pattern position acquisition unit 43b acquires intra-pattern positional information that is a position of a defect candidate in a bright-and-dark pattern Pt when the defect candidate detection unit 42 detects the defect candidate. The intra-pattern positional information may be information per pixel, or may be information designating a region while setting, in advance, regions obtained by vertically and horizontally dividing the bright-and-dark pattern Pt. Furthermore, a reference point may be preset, and a region may be designated in a polar coordinate system in which a region is represented by a radius and an angle while using the reference point as a center. Additionally, the designation may be made by a method other than these methods.

The position acquisition unit 44b acquires positional information of a defect candidate on a side surface CP of a vehicle CA on the basis of a position of a captured image on the side surface of the vehicle CA and intra-image positional information. A method of acquiring positional information by the position acquisition unit 44b will be further described. As described above, the position of the image capturing unit 10 is preset in the defect identifying device A3. The image capturing unit 10 has a preset angle of view, and acquires a position of a defect candidate in an inspection region CP by combining a position of the defect candidate in a captured image with the angle of view of the image capturing unit 10.

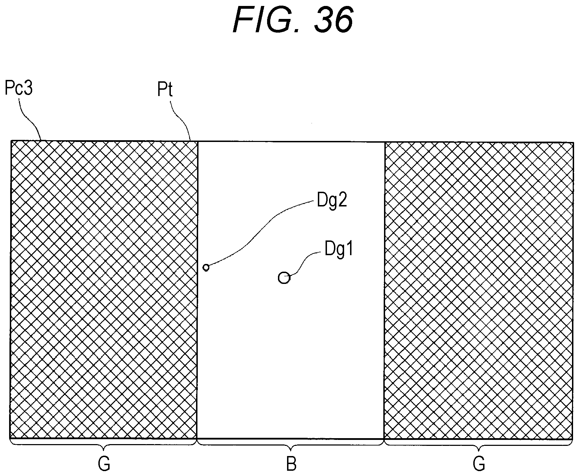

As described above, even though defect candidates have the same size, luminance of the defect candidates is varied when the positions of the defect candidates on the bright-and-dark pattern Pt are different (see Fig. 36). Accordingly, the correction value acquisition unit 47 accesses the correction database 32 of the storage unit 30, refers to the intra-pattern positional information, and acquires a correction value. A correction value is a correction coefficient used to correct luminance contrast that is an identifying value acquired in the identifying value acquisition unit 46. The defect identifying device A3 has the above-described configuration.

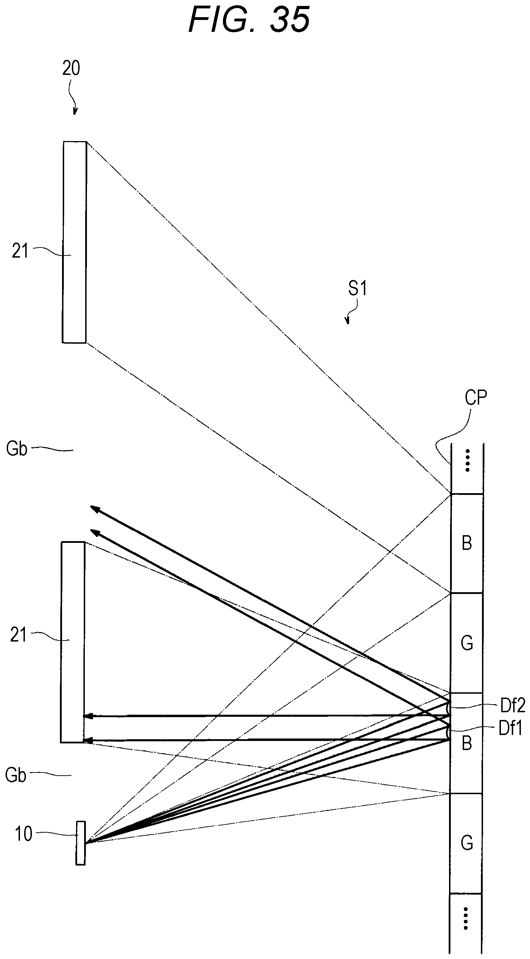

Luminance of a defect is also varied by a position inside the bright-and-dark pattern as for a portion of the inspection region CP where the defect is formed. Hereinafter, a luminance change in a defect candidate caused by a position inside the bright-and-dark pattern will be described with reference to the drawings. Fig. 35 is a schematic plan view illustrating a state in which defect identifying is performed in the defect identifying device. Fig. 36 is a diagram illustrating positions of defect candidates in a bright portion of the bright-and-dark pattern of a captured image. Note that Fig. 35 illustrates light propagation paths. Fig. 36 illustrates a bright-and-dark pattern Pt of a captured image Pc3. As illustrated in Fig. 36, a first defect candidate Dg1 is formed in a center portion of a bright portion B, and a second defect candidate Dg2 is formed in a portion closer to a dark portion G than the first defect candidate Dg1 of the bright portion B in the bright-and-dark pattern Pt of the captured image.

The image capturing unit 10 collects external light on an image capturing element by a lens and outputs, as a captured image, a picture of the light formed on the image capturing element. In addition, the bright-and-dark pattern Pt in the captured image Pc3 corresponds to a position of pattern illumination S1 in an image capturing region Tr on the side surface CP.

Since the first defect candidate Dg1 is formed in the center portion of the bright portion, a light propagation path is mainly incident on a light source unit 21 even in a case of being irregularly reflected. Even in a case where the defect candidate is not formed in a portion close to a boundary between a bright portion B and a dark portion G, a light propagation path is incident on a portion close to a dark band Gb of the light source unit 21. Therefore, the light propagation path irregularly reflected at the second defect candidate Dg2 is incident on the dark band Gb more than the light propagation path reflected at the first defect candidate Dg1. That is, even when defect candidates have the same size, luminance contrast is changed by a position inside the bright portion B, that is, a distance from the dark portion G. Note that luminance contrast is similarly changed also in a case where there is a defect candidate in a dark portion G. That is, luminance contrast of a defect candidate fluctuates depending on a position from the boundary portion between the bright portion B and the dark portion G, regardless of whether the defect candidate is in the bright portion B or the dark portion G.

As illustrated in Fig. 35, the first defect candidate Dg1 and the second defect candidate Dd2 have different distances from the boundary between the bright portion B and the dark portion G. Therefore, the first defect candidate Dg1 and the second defect candidate Dg2 have different luminance despite a fact that the sizes are the same.

Accordingly, the correction database 32e of the defect identifying device according to the present embodiment includes the correction database 32e including a correction value per intra-pattern position variable while using, as an intra-pattern position variable, a position of a defect candidate in the bright-and-dark pattern Pt of the captured image Pc3. In addition, a correction value corresponding to an intra-pattern position variable is acquired, and also luminance contrast is corrected with the correction value to identify a defect. Note that a detailed description of normalization will be omitted because of being the same as that in a first embodiment.

Next, the correction database 32e will be described. Fig. 37 is a diagram illustrating, on a captured image, intra-pattern position variables of the correction database in a bright portion of the bright-and-dark pattern. Fig. 38 is a diagram illustrating an exemplary correction database. Note that the bright-and-dark pattern Pt illustrated in Fig. 37 illustrates a vicinity of defect candidates in the captured image Pc3 in an enlarged manner.

As described above, luminance contrast of a defect candidate is varied by a distance of the defect candidate from the boundary between the bright portion B and the dark portion G. Accordingly, as illustrated in Fig. 37, a length from the boundary between the bright portion B and the dark portion G in the bright-and-dark pattern Pt to a center of the bright portion B is divided into six phases Lb1 to Lb6. Note that the bright portion B and the dark portion G are formed by a light source unit 21 of the illumination unit 20 and a dark band Gb. In addition, the illumination unit 20 is point-symmetrical with respect to a center of the image capturing unit 10 and is line-symmetrical with respect to a line passing through the image capturing unit 10 and orthogonal to an array direction of the light source units 21 and the dark bands Gb. Therefore, the distance from the boundary between the bright portion B and the dark portion G is symmetrical or substantially symmetrical interposing the center portion of the bright portion B. Therefore, in the present embodiment, a length obtained by dividing a distance from the boundary between the bright portion B and the dark portion G to the center portion is set as an intra-pattern position variable.

As illustrated in Fig. 38, in the correction database 32e, the phases obtained by equally dividing the distance from the boundary between the bright portion B and the dark portion G to the center of the bright portion B are used as the intra-pattern position variables. In addition, in the correction database 32e, the phases are listed in an upper row as the intra-pattern position variables, and correction values CRi (a suffix i is an integer of 1 or more) corresponding to the intra-pattern position variables are listed in a lower row. For example, in a case where an intra-pattern position variable is Lb3, a correction value is CR3. That is, in the captured image Pc3, luminance contrast of a defect located at the third phase Lb3 corresponding to the intra-pattern position variable Lb3 (see Fig. 37) is corrected by using the correction value CR3.

Note that using, as the intra-pattern position variables of the correction database 32e, the distances obtained by dividing the distance from the boundary between the bright portion B and the dark portion G to the center of the bright portion B as illustrated in Fig. 37 is an example, and not limited thereto.

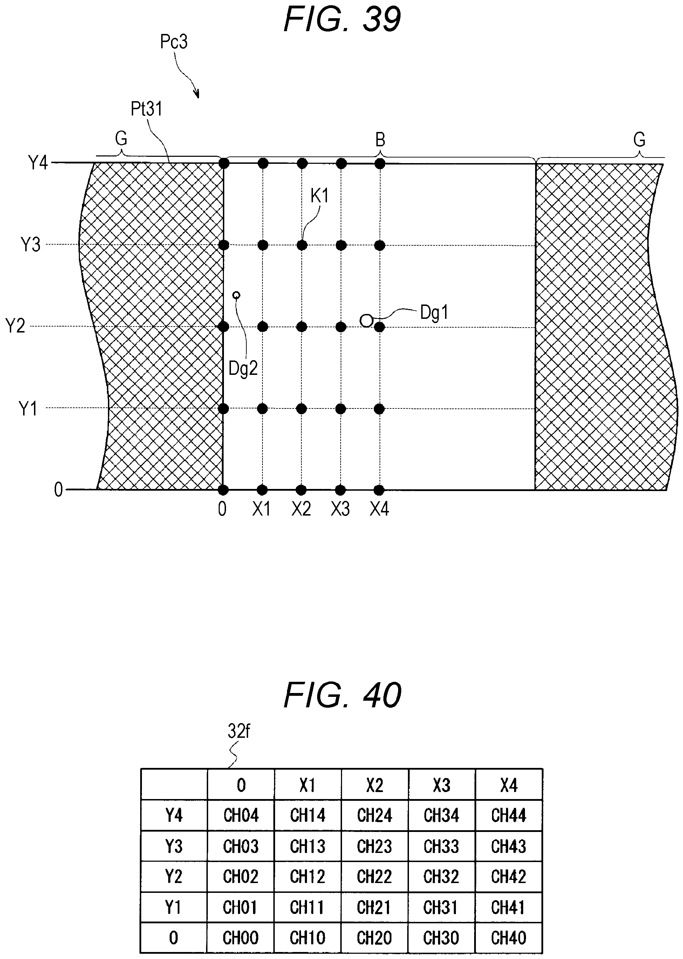

Other examples of intra-pattern position variables and the correction database will be described with reference to the drawings. Fig. 39 is a diagram illustrating, in a bright-and-dark pattern, intra-pattern position variables of the correction database. Fig. 40 is a diagram illustrating another exemplary correction database.

As illustrated in Fig. 39, a boundary portion between a bright portion B and a dark portion G of a bright-and-dark pattern Pt31 is set as an origin (0, 0), and a horizontal side and a vertical side are each equally divided. Here, the captured image is equally divided into four in both vertically and horizontally. Then, points that equally divide the horizontal side of the captured image Pc3 are set as horizontal intra-pattern position variables and defined as X1, X2, X3, and X4 sequentially from the origin side. Additionally, points that equally divide the vertical side are similarly set as vertical intra-pattern position variables and defined as Y1, Y2, Y3, and Y4 sequentially from the origin side. That is, an intra-pattern position variable is a distance from the origin.

Each of intersections of lines that equally divide the respective sides in Fig. 39 is indicated by a horizontal intra-pattern position variable and a vertical intra-pattern position variable. For example, a point K1 in Fig. 39 is represented as (X2, Y3) by using an intra-pattern position variable. In addition, a correction database 32f includes correction values CHpq (suffixes p and q are integers and variables) at the respective intersections. That is, in the correction database 32f illustrated in Fig. 40, the horizontal intra-pattern position variables are listed as horizontal items, and the vertical intra-pattern position variables are listed as vertical items. In addition, a correction value at a point indicated by intra-pattern position variables of a horizontal item and a vertical item is arranged in a square where a horizontal row frame and a vertical column frame intersect with each other. For example, in the case of the point K1 described above, a correction value is a correction value CH23 by referring to a square where a horizontal item X2 and a vertical item Y3 intersect with each other.

The correction database 32f illustrated in Fig. 40 includes the correction values at respective points in the bright-and-dark pattern Pt31. It is unusual that a defect candidate to be actually identified overlaps with a point set in the correction database 32f. Accordingly, the intra-pattern position acquisition unit 43b of the control processing unit 40b acquires positional information of a position of a defect candidate in the bright-and-dark pattern Pt31. Then, correction coefficients at a plurality of intersections in the vicinity of the defect candidate are called on the basis of the positional information. Then, a plurality of correction coefficients in the vicinity of the defect candidate is calculated by arithmetic operation, and used as correction values. Note that, as for a method of calculating a correction coefficient, it is possible to exemplify arithmetic operation using distances, angles, and the like between each of the plurality of intersections and the defect candidate. For example, a correction value may also be calculated on the basis of a rate of a distance from a defect candidate to an intersection. Additionally, a separate arithmetic expression may also be provided.

Note that the horizontal intra-pattern position variables 1 to 4 and the vertical intra-pattern position variables 1 to 4 are set, but not limited thereto. The number of the respective intra-pattern position variables may be more increased, or a horizontal distance and a vertical distance between intersections may be set equal to each other.

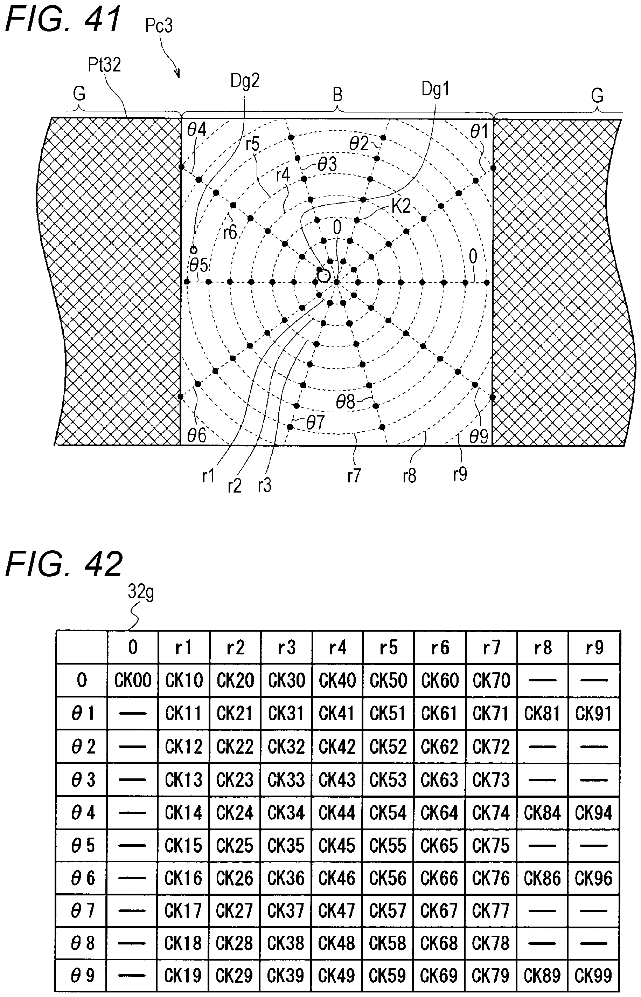

Different exemplary intra-pattern position variables will be described with reference to the drawings. Fig. 41 is a diagram illustrating, on a captured image, intra-pattern position variables of another exemplary correction database. Fig. 42 is a diagram illustrating still another exemplary correction database. Like a bright-and-dark pattern Pt32 illustrated in Fig. 41, a correction point described above can be set at each of intersection points between lines that equally divide the bright-and-dark pattern Pt32 in a circumferential direction and lines that equally divide the bright-and-dark pattern Pt32 in a radial direction. In the bright-and-dark pattern Pt32 illustrated in Fig. 41, a center is set as an origin (0, 0). In addition, the correction database includes, as intra-pattern position variables, lengths 0 to r9 from the origin and inclination angles 0 to θ9 with respect to a reference line passing through the origin. In addition, in a correction database 32g, the lengths are listed as horizontal items, and the angles are listed as vertical items as illustrated in Fig. 42. In addition, provided are correction values CKst (suffixes s and t are integers and variables) at the intersections at portions where respective items intersect with each other.

For example, a point K2 in a bright-and-dark pattern Pt22 illustrated in Fig. 41 is represented as (r3, θ2) by using the intra-pattern position variables. Additionally, a correction value at the point K2 is a correction value CK32 on the basis of the correction database 32g in Fig. 42. Note that calculation of a correction value of a defect candidate at a point other than the intersections is the same as that at the time of using the correction database 32f of Fig. 40 described above, and a detailed description thereof will be omitted.

Note that, as illustrated in Fig. 41, it may be possible to adopt the correction database as illustrated in Fig. 38 while using, as divided regions, regions surrounded by circles each centering the origin and straight lines extending from the origin.

Also, intra-pattern positional information of a defect candidate may be acquired from a rectangular coordinate system or a polar coordinate system while using a pixel as a reference, and a correction value may be calculated by using a database providing a correction value by an arithmetic expression using the intra-image positional information. In such a case, one arithmetic expression may be used for an entire region of a captured image, or different arithmetic expressions may be used by dividing the captured image into areas or the like. Note that each of the regions and intersections may be included inside the bright portion B or the dark portion G, or may be provided in a manner stretching over the bright portion B and the dark portion G.

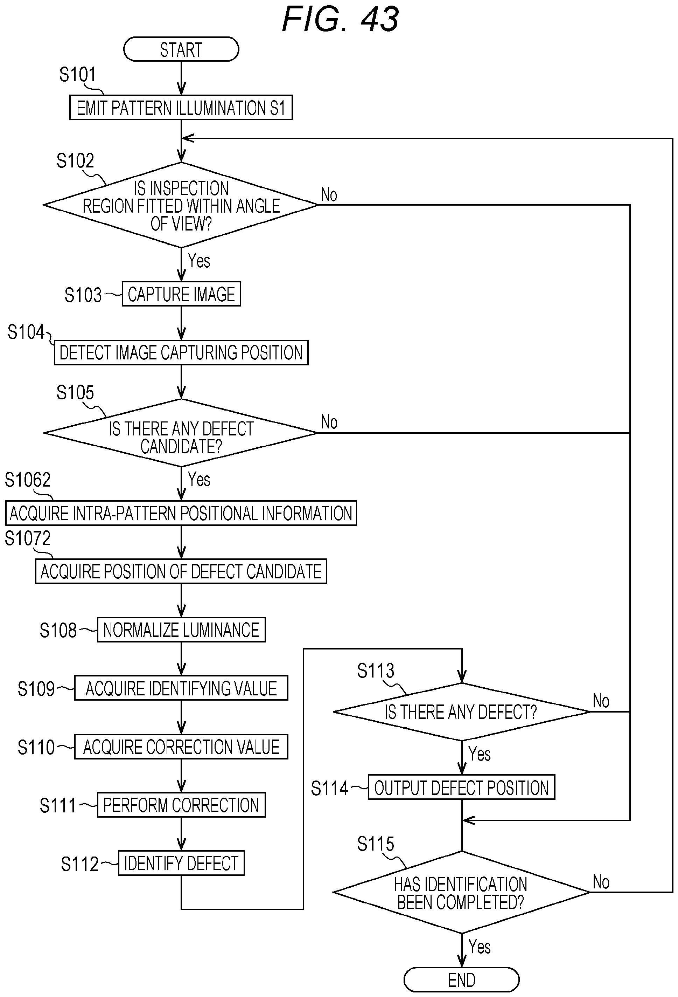

Next, operation of the defect identifying device A3 will be described with reference to the drawing. Fig. 43 is a flowchart illustrating defect identifying operation of the defect identifying device. The flowchart illustrated in Fig. 43 includes steps S1062 and S1072 instead of steps S106 and S107 in a flowchart illustrated in Fig. 12. Therefore, in the following description, different portions from the flowchart illustrated in Fig. 12 will be described, and a description of common portions will be omitted.

It is confirmed whether or not defect identification to be executed for the vehicle CA has been completed by the defect candidate detection unit 42 (step S105). In a case where a defect candidate is detected on the side surface CP by the defect candidate detection unit 42 (Yes in step S105), the intra-pattern position acquisition unit 43b acquires intra-pattern positional information that is information of a position of the defect candidate inside a bright-and-dark pattern Pt (step 1062: intra-pattern position acquiring process). Then, the position acquisition unit 44b acquires positional information that is information of a position of the defect candidate on the side surface CP on the basis of the intra-pattern positional information and an image capturing position (step S1072: position acquiring process).

The correction value acquisition unit 47 receives the intra-pattern positional information from the intra-pattern position acquisition unit 43b, refers to the received intra-pattern positional information and the correction database 32e stored in the storage unit 30, and acquires a correction value corresponding to the intra-pattern positional information (step S110: correction value acquiring process).

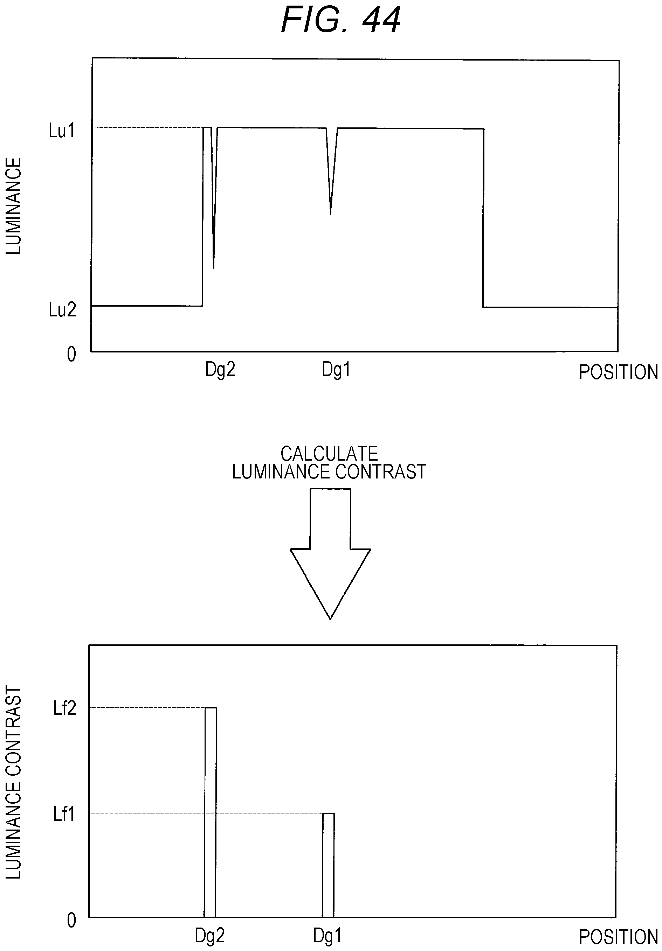

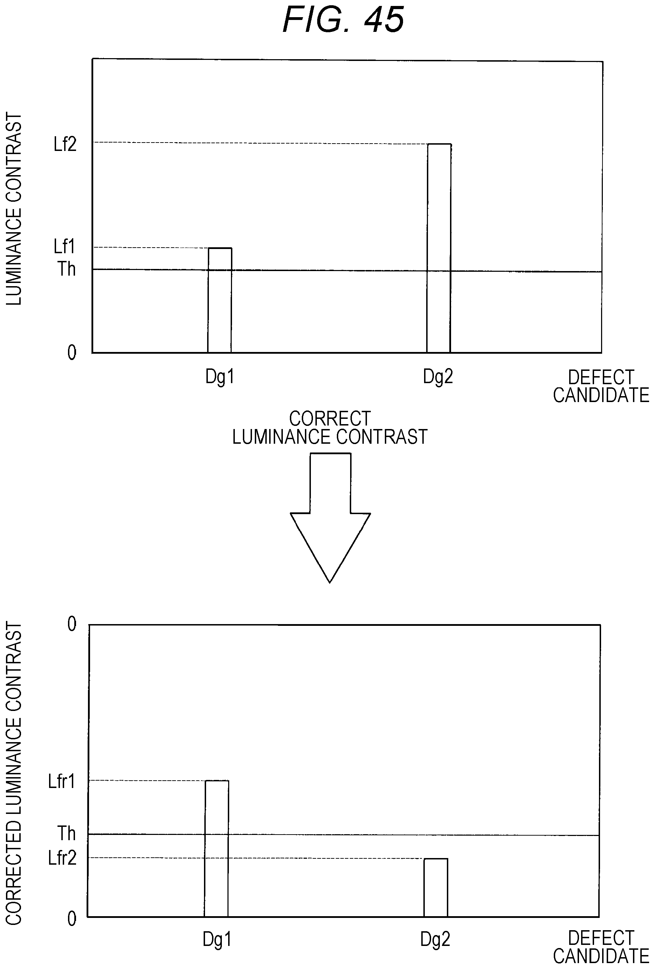

Next, specific operation by the defect identifying device A3 according to the present embodiment at the time of identifying a defect will be described with reference to the drawings. Fig. 44 is a diagram illustrating luminance distribution of the defect candidates in the captured image illustrated in Fig. 36. Fig. 45 is a diagram illustrating corrected luminance contrast obtained by correcting luminance contrast calculated from the luminance distribution illustrated in Fig. 44. In Fig. 45, a first defect candidate Dg1 and a second defect candidate Dg2 are displayed in parallel for easy comparison.

For example, the bright-and-dark pattern Pt of the captured image Pc3 captured by the image capturing unit 10 is the image as illustrated in Fig. 36. That is, the first defect candidate Dg1 is formed at a position near a center of the bright portion B of the captured image Pc3, and the second defect candidate Dg2 is formed on a left side. Note that the first defect candidate Dg1 has a size identified as a defect, and the second defect candidate Dg2 has a size not identified as a defect.

As illustrated in Fig. 36, the position of the first defect candidate Dg1 in the bright-and-dark pattern Pt (bright portion B) and the position of the second defect candidate Dd2 in the bright-and-dark pattern Pt are different. In addition, the luminance distribution after the normalization unit 45 normalizes the luminance of the captured image becomes as illustrated in Fig. 45. That is, luminance contrast Lf2 (a change amount of luminance) of the second defect candidate Dg2 is larger than luminance contrast Lf1 of the first defect candidate Dg1. This is caused by a fact that the position of the second defect candidate Dg2 in the captured image Pc3 is closer to a boundary between the bright portion B and the dark portion G than the first defect candidate Dg1 is, and less light is reflected at the defect candidate and incident on the image capturing unit 10.

Accordingly, the correction value acquisition unit 47 acquires a correction value corresponding to each of the first defect candidate Dg1 and the second defect candidate Dg2 on the basis of the intra-pattern positional information acquired by the intra-pattern position acquisition unit 43b. For example, assume that the defect identifying device A3 uses the correction database 32e. At this time, the first defect candidate Dg1 is located at the sixth phase Lb6. Consequently, the correction value acquisition unit 47 searches the correction database 32e while setting an intra-pattern position variable as Lb6, and acquires a correction value CR6. Additionally, the second defect candidate Dg2 is located at the first phase Lb1. Therefore, the correction value acquisition unit 47 acquires a correction value CR1 in a similar manner.

Then, the correction unit 48 corrects luminance contrast in each of the first defect candidate Dg1 and the second defect candidate Dg2 by using the corresponding correction value, and generates corrected luminance contrast from which influence of a shape of the side surface CP is removed. The corrected luminance contrast becomes as illustrated in Fig. 45.

As illustrated in Fig. 45, corrected luminance contrast Lfr1 of the first defect candidate Dg1 is larger than corrected luminance contrast Lfr2 of the second defect candidate Dg2. Then, the identifying unit 49 compares each of the corrected luminance contrast Lfr1 of the first defect candidate Dg1 and the corrected luminance contrast Lfr2 of the second defect candidate Dg2 with a threshold value Th. Then, the control processing unit 40b identifies that the first defect candidate Dg1 having the corrected luminance contrast Lfr1 larger than the threshold value Th is a defect. On the other hand, the control processing unit 40b identifies that the second defect candidate Dg2 having the corrected luminance contrast Lfr2 smaller than the threshold value Th is not a defect.

As described above, a correction value is acquired in accordance with an intra-pattern position of a defect candidate, and luminance contrast is corrected with the correction value. Consequently, luminance variation caused by a position of a defect candidate inside the pattern can be corrected, and defect identification can be correctly performed.

After that, a measurement object model is moved to a position where a defect appears at a prescribed position in the bright-and-dark pattern Pt (an intra-pattern position). The control processing unit 40b controls the image capturing unit 10 to capture an image of the measurement object model. Then, the control processing unit 40b acquires luminance contrast of a defect on the basis of a captured image from the image capturing unit 10 and stores, as a correction value, a rate of the luminance contrast with respect to a reference value in the correction database 32e in a manner correlated to an intra-pattern position variable. Then, the control processing unit 40b confirms whether or not the correction values corresponding to all of shape variables set in the correction database 32e are stored in the correction database 32e. Then, the control processing unit 40b changes a position of a defect inside the bright-and-dark pattern and acquires luminance contrast of the defect, and stores a correction value in the correction database 32e in a manner correlated to the intra-pattern position variable.

<First Modified Example>

A modified example of the defect identifying device according to the present embodiment will be described with reference to the drawings. Note that a configuration of the defect identifying device is the same as the above-described configuration, and the substantially same portion will be denoted by the same reference sign, and a detailed description of the same portion will be omitted. As described above, even when defect candidates have the same size, luminance contrast is varied by an intra-pattern position. To remove the variation in the luminance contrast caused by the intra-pattern position, the correction unit 48 may correct a threshold value instead of correcting the luminance contrast as a correcting process. In addition, in the identifying process, a defect may be identified by comparing luminance contrast of a defect candidate with the threshold value that has been corrected (hereinafter referred to as a corrected threshold value). Hereinafter, the correcting process will be described in detail with reference to the drawings. Note that operation from an image capturing process to the correction value acquiring process is the same as the flowchart illustrated in Fig. 43.

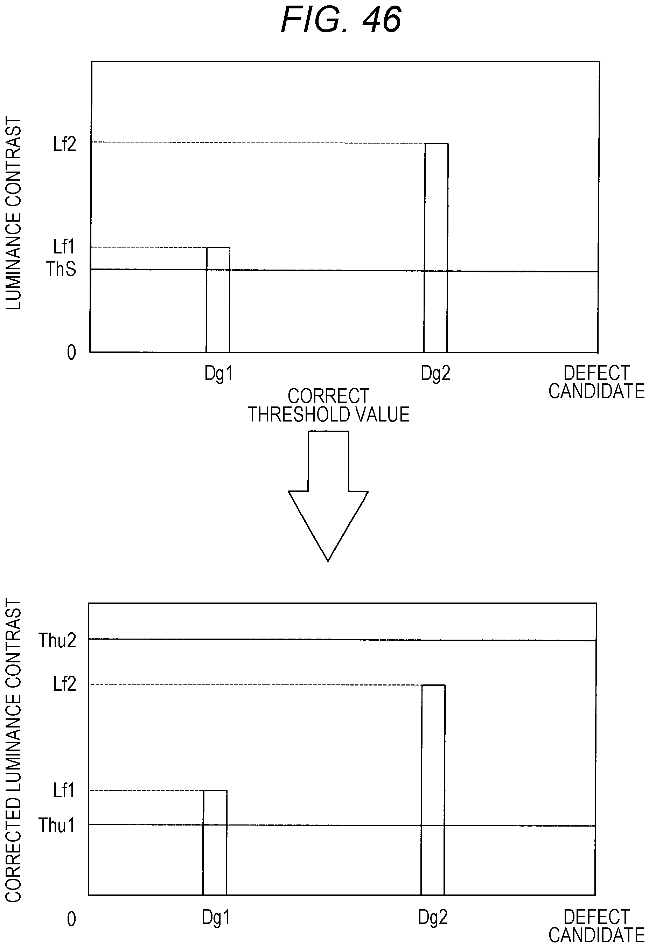

Fig. 46 is a diagram illustrating correction of luminance contrast of each of defect candidates at the time of identifying a defect. Assume that the first defect candidate Dg1 and the second defect candidate Dg2 have the sizes same as those illustrated in Fig. 36 and are formed at the same places on the side surface CP. Additionally, in Fig. 46, the first defect candidate Dg1 and the second defect candidate Dg2 are displayed in parallel for easy comparison.

In the defect identifying device A3, the storage unit 30 stores, as a reference threshold value ThS, a value that is the same as or slightly smaller than luminance contrast of a minimum size defect identified as a defect in a reference position inside a pattern. As illustrated in Fig. 46, the luminance contrast Lf1 of the first defect candidate Dg1 and the luminance contrast Lf2 of the second defect candidate Dg2 are larger than the reference threshold value ThS.

The correction unit 48 acquires a corrected threshold value obtained by correcting the reference threshold value ThS with a correction value for each defect candidate, in other words, for each position inside the bright-and-dark pattern Pt in a portion where the defect candidate is formed. As illustrated in Fig. 46, a first corrected threshold value Thu1 corresponding to the first defect candidate Dg1 and a second corrected threshold value Thu2 corresponding to the second defect candidate Dg2 are generated. Then, the identifying unit 49 identifies a defect by comparing luminance contrast of a defect candidate with each corrected threshold value.

More specifically, the luminance contrast Lf1 of the first defect candidate Dd1 is larger than the first corrected threshold value Thu1. Therefore, the identifying unit 49 identifies that the first defect candidate Dg1 is a defect. On the other hand, the luminance contrast Lf2 of the second defect candidate Dg2 is smaller than the second corrected threshold value Thu2. Therefore, the identifying unit 49 identifies that the second defect candidate Dg2 is not a defect.

Thus, similarly to when luminance contrast is corrected, a defect can be correctly identified by correcting a threshold value for evaluation, instead of correcting luminance contrast to be compared. Additionally, a size of a defect candidate to be identified as a defect can be adjusted by changing a value of the reference threshold value ThS. For example, in a case of a place where an uneven portion identified as a defect may have a large size, a size of a defect candidate identified as a defect can be changed by increasing the reference threshold value ThS.

<Fifth Embodiment>

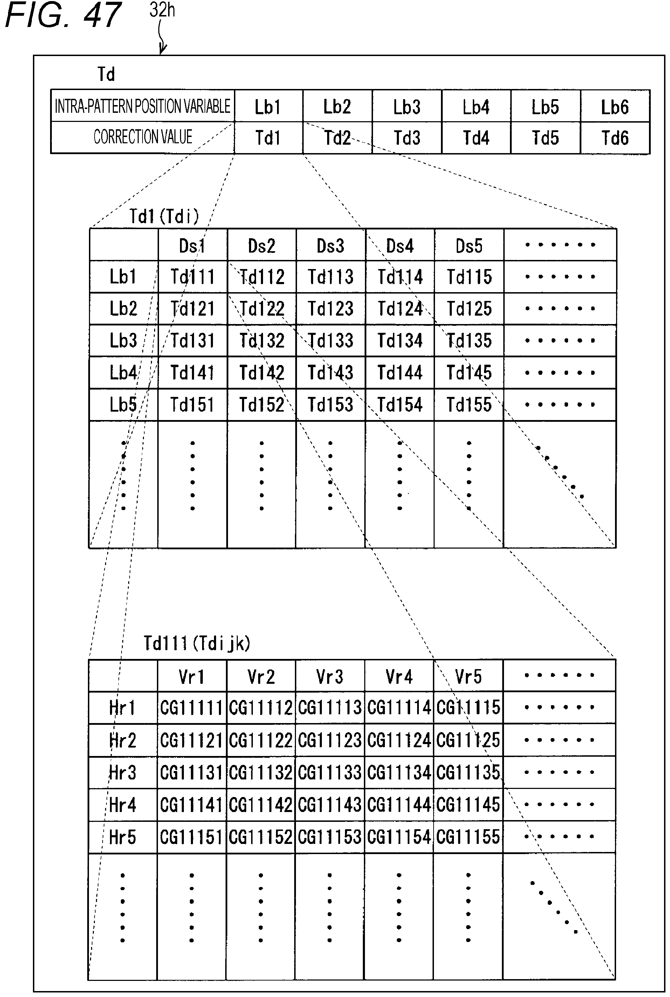

Another example of a defect identifying device according to the present invention will be described. Luminance variation in a defect includes not only variation caused by a position inside a pattern as described above but also variation caused by a shape with respect to an image capturing unit 10 as for a place where a defect is formed. Accordingly, the defect identifying device of the present embodiment uses a correction database 32 in which a shape of a defect candidate with respect to the image capturing unit 10 is added as an intra-pattern position variable. Accordingly, the defect identifying device of the present embodiment uses a correction database 32h in which a shape of a defect candidate with respect to the image capturing unit 10 is added as an intra-image position variable. A new correction database will be described with reference to the drawings. Fig. 47 is a diagram illustrating still another exemplary correction database. In the correction database, a correction value includes, as intra-image position variables, a distance variable Lg, a horizontal angle variable Hr, a vertical angle variable Vr, and a distance variable Ds from a focus point (see Fig. 10).

Then, as illustrated in Fig. 47, the correction database 32h includes correction values correlated to the intra-pattern position variables. The correction database 32h illustrated in Fig. 47 includes three tables. First, in a main table Td, a secondary data table Tdi (a suffix i is an integer) is correlated to each of phases illustrated in Fig. 37. That is, a secondary data table Td1 is correlated to a first phase Lb1, a secondary data table Td2 is correlated to a second phase Lb2,..., and a secondary table Td6 is correlated to a sixth phase Lb6.

The secondary data table Tdi (Td1 in Fig. 47) is a table in which distance variables Lg are listed as vertical items, and distance variables Ds from a focus point are listed as horizontal items. In addition, each record cell of the secondary data table Tdi includes a second table Tbijk in which correction values CGijkmn (suffixes i, j, k, m, and n are integers) correlated to the horizontal angle variables Hr and the vertical angle variables Vr are stored. Note that the suffix i is a variable indicating a divided region. The suffixes j and k are variables indicating the distance variables Lg and the distance variables Ds from the focus point, respectively. The suffixes m and n are variables indicating the horizontal angle variables Hr and the vertical angle variables Vr.

Thus, the correction values CGijkmn is settled on the basis of five intra-pattern position variables, that is, divided regions (positions inside a pattern), the distance variables Lg, the distance variables Ds from the focus point, the horizontal angle variables Hr, and the vertical angle variables Vr. Note that, as for each correction value CGijkmn, it may be possible to use luminance contrast actually acquired by a defect identifying device A3 while using, as an inspection region CP, a flat plate or the like where a defect is formed. Also, it may be possible to utilize luminance contrast calculated by optical simulation by creating a model for each shape variable. Note that the correction database 32h has a configuration as illustrated in Fig. 47 for easy understanding, but the configuration is not limited thereto as far as provided is a database that can simultaneously change the five variables.

Furthermore, there may be a case where a correction value CGijkmn is hardly acquired directly from the correction database 32h on the basis of actual positional information. In such a case, a correction value may be acquired by performing interpolation using a correction value of shape information close to the actual shape information. Note that the correction database 32h illustrated in Fig. 47 is an exemplary database and not limited thereto. For example, a correction value may be provided as an arithmetic expression using a correction coefficient. Furthermore, a table as illustrated in Fig. 40 or 42 may also be used as the main table Td.

It is possible to acquire a correction value in accordance a state of a defect candidate by using such a correction database 32h. Consequently, variation in luminance contrast of a defect candidate can be removed. Consequently, a defect can be more correctly identified.

In each of the embodiments described above, the measurement object in which a defect is identifies is a vehicle, but not limited thereto. For example, each of the embodiments can be widely adopted for home appliances such as a refrigerator and a washing machine which require identification of a defect on a surface.

Additionally, in each of the embodiments described above, the measurement object is movable in a state in which the image capturing unit and the illumination unit are stopped, but not limited thereto. For example, the image capturing unit and the illumination unit may be movable in a state in which a measurement object is stopped. With such a configuration, it is possible to inspect surfaces of a large article such as an aircraft or a ship.

Furthermore, as a configuration in which a plurality of image capturing units captures an entire measurement object, a plurality of captured images may be captured at the same time. In addition, in a case of having the configuration in which the plurality of image capturing units capture images of the entire measurement object or in a case of having the configuration in which one image capturing unit can capture an image of the entire measurement object, a defect can be identified in a state in which the measurement object as well as the image capturing unit and the illumination unit are stopped.

Furthermore, each of the above-described embodiments adopts, as pattern illumination, the so-called stripe-shaped pattern illumination in which long bright portions B and long dark portions G are alternately arrayed in a short direction, but not limited thereto. For example, it may be possible to adopt so-called checker-shaped pattern illumination in which a rectangular bright portion B and a rectangular dark portion G are alternately arrayed in a vertical direction, or radial-shaped pattern illumination in which concentric circles are drawn from a predetermined point such as a center and a bright portion B or a dark portion G are alternately set in the respective rings thereof, or the like. Note that it is preferable to adopt an optimal pattern illumination in accordance with a shape of an inspection region of a measurement object. Also, a pattern of the pattern illumination may be changed in accordance with a shape of an inspection region in one measurement object.

Reference Signs List

10     Image capturing unit

20     Illumination unit
21     Light source unit
30     Storage unit
31     Normalization database
32     Correction database
32a    Correction database
32b    Correction database
32c    Correction database
32d    Correction database
32e    Correction database
32f    Correction database

32g     Correction database
33      Shape database
34      Threshold value database
35      Evaluation database
40      Control processing unit
40a     Control processing unit
40b     Control processing unit
41      Image capturing position detection unit
42      Defect candidate detection unit
43      Position acquisition unit
43a     Intra-image position acquisition unit
43b     Intra-pattern position acquisition unit
44      Shape information acquisition unit
44a     Position acquisition unit
44b     Position acquisition unit
45      Normalization unit
46      Identifying value acquisition unit
47      Correction value acquisition unit
48      Correction unit
49      Identifying unit
50      Output unit
311     Noise removal parameter
312     Bright portion finding parameter
313     Dark portion finding parameter
314     Changed portion finding parameter
A1      Defect identifying device
A2      Defect identifying device
A3      Defect identifying device

**Claims**

1.  A computer-implemented defect identifying method of identifying presence or absence of a defect on a surface of a measurement object by capturing, with an image capturing unit (10), an image of the surface of the measurement object irradiated with pattern illumination (S1) in which a bright portion (B) and a dark portion (G) having luminance lower than luminance of the bright portion (B) are arrayed in a predetermined pattern, the method comprising:

    an image capturing process (S103) of acquiring a captured image by capturing, via the image capturing unit (10), an image of at least a part of a region of the measurement object irradiated with the pattern illumination (S1);
    a defect candidate detecting process (S105) of detecting a defect candidate having a possibility to be a defect on the basis of the captured image;
    a shape information acquiring process (S107) of acquiring shape information that is information of a shape with respect to the image capturing unit (10) as for a position on a surface of the measurement object where a defect candidate is detected;
    an identifying value acquiring process (S109) of acquiring a luminance of the captured image and a luminance contrast which is used to identify a defect of the defect candidate,
    wherein the luminance contrast is a change rate between luminance of the defect candidate and luminance of a periphery of the defect candidate;
    a correction value acquiring process (S110) of acquiring a correction value corresponding to the shape information by referring to a correction database (32) including a correction value while using, as a shape variable, a shape of the surface of the measurement object with respect to the image capturing unit (10);
    a correcting process (S111) of correcting either the luminance contrast or a threshold value on the basis of the correction value; and
    an identifying process (S112) of identifying whether or not the defect candidate is a defect by comparing the corrected luminance contrast with the non-corrected threshold value or comparing the non-corrected luminance contrast with the corrected threshold value.

2.  The defect identifying method according to claim 1, wherein the correction database (32) uses, as the shape variable, at least one of a distance from the image capturing unit (10) to the surface of the measurement object, an angle with respect to the image capturing unit (10), and a deviation distance from a focus position, and the correction database (32) includes, as the correction value, a rate of the luminance contrast at the time of having the defect in a shape indicated by the shape variable to the luminance contrast at the time of having the defect in a reference shape, or wherein

the correction database (32) further includes, as the shape variable, a position in the captured image, and in the correction value acquiring process (S110), a position of a defect candidate in the captured image is acquired, and the correction value is also acquired by using the shape information including the acquired position of the defect candidate, wherein

the correction database (32) further includes, as the shape variable, a position of a defect in the bright portion (B) or the dark portion (G) included in the captured image, and

in the correction value acquiring process (S110), a position of a defect candidate in the bright portion (B) or the dark portion (G) is acquired, and the correction value is also acquired by using the shape information including the acquired position of the defect candidate,

further comprising a normalizing process (S108) of normalizing the captured image by referring to a normalization database (31) used to normalize the captured image,

wherein a luminance contrast is acquired on the basis of the normalized captured image in the identifying value acquiring process (S109), wherein the normalization database (31) includes a parameter to remove noise, a parameter to find a representative value of a bright portion (B), a parameter to find a representative value of a dark portion (G), and a parameter to find a representative value of the defect candidate, wherein

in the correcting process (S111) and the identifying process (S112), a threshold value is acquired from a threshold value database (34) including a threshold value for each defect rank settled on the basis of a size of the defect, and in the correcting process (S111) and the identifying process (S112), the defect rank is settled on the basis of a position of a defect candidate in a measurement object, and a threshold value is acquired on the basis of the settled defect rank.

3. A computer-implemented defect identifying method of identifying presence or absence of a defect on a surface of a measurement object by capturing, with an image capturing unit (10), an image of the surface of the measurement object irradiated with pattern illumination (S1) in which a bright portion (B) and a dark portion (G) having luminance lower than luminance of the bright portion (B) are arrayed in a predetermined pattern, the method comprising:

an image capturing process (S103) of acquiring a captured image by capturing, via the image capturing unit (10), an image of at least a part of a region of the measurement object irradiated with the pattern illumination (S1);
a defect candidate detecting process (S105) of detecting a defect candidate having a possibility to be a defect on the basis of the captured image;
an intra-image position acquiring process (S1061) of acquiring an intra-image positional information that is information of a position of the defect candidate in the captured image;
an identifying value acquiring process (S109) of acquiring a luminance of the captured image and a luminance contrast which is used to identify a defect of the defect candidate;
wherein the luminance contrast is a change rate between luminance of the defect candidate and luminance of a periphery of the defect candidate;
a correction value acquiring process (S110) of acquiring a correction value corresponding to the intra-image positional information by referring to a correction database (32a, 32b, 32c, 32d) including a correction value while using, as an intra-image position variable, a position in the captured image;
a correcting process (S111) of correcting either the luminance contrast or a threshold value on the basis of the correction value; and
an identifying process (S112) of identifying whether or not the defect candidate is a defect by comparing the corrected luminance contrast with the non-corrected threshold value or comparing the non-corrected luminance contrast with the corrected threshold value.

4. The defect identifying method according to claim 3, wherein, in the correction database (32a, 32b), divided regions are set by dividing the captured image in a lattice shape, and each of the divided regions is used as the intra-image position variable, or wherein, in the correction database (32c), a distance and an angle from a prescribed reference point inside the captured image are used as the intra-image position variables, wherein

the correction database (32d) further includes, as the intra-image position variable, a shape of the surface of the measurement object with respect to the image capturing unit (10), and
in the correction value acquiring process (S110), a shape of a portion where the defect candidate is detected on the surface of the measurement object is acquired, and the correction value is also acquired by using the intra-image positional information including the acquired shape of the defect candidate, wherein

the correction database (32a, 32b, 32c, 32d) further includes, as the intra-image position variable, a position of a defect in the bright portion (B) or the dark portion (G) included in the captured image, and

in the correction value acquiring process (S110), a position of a defect candidate in the bright portion (B) or the dark portion (G) is acquired, and the correction value is also acquired by using the intra-image positional information including the acquired position of the defect candidate,

further comprising a normalizing process (S108) of normalizing the captured image by referring to a normalization database (31) used to normalize the captured image,

wherein a luminance contrast is acquired on the basis of the normalized captured image in the identifying value acquiring process (S109), wherein the normalization database (31) includes a parameter to remove noise, a parameter to find a representative value of a bright portion (B), a parameter to find a representative value of a dark portion (G), and a parameter to find a representative value of the defect candidate, wherein

in the correcting process (S111) and the identifying process (S112), a threshold value is acquired from a threshold value database (34) including a threshold value for each defect rank settled on the basis of a size of the defect, and

in the correcting process (S111) and the identifying process (S112), the defect rank is settled on the basis of a position of a defect candidate in a measurement object, and a threshold value is acquired on the basis of the settled defect rank.

5. A computer-implemented defect identifying method of identifying presence or absence of a defect on a surface of a measurement object by capturing, with an image capturing unit (10), an image of the surface of the measurement object irradiated with pattern illumination (S1) in which a bright portion (B) and a dark portion (G) having luminance lower than luminance of the bright portion (B) are arrayed in a predetermined pattern, the method comprising:

an image capturing process (S103) of acquiring a captured image by capturing, via the image capturing unit (10), an image of at least a part of a region of the measurement object irradiated with the pattern illumination (S1);

a defect candidate detecting process (S105) of detecting a defect candidate having a possibility to be a defect on the basis of the captured image;

an intra-pattern position acquiring process (S1062) of acquiring an intra-pattern positional information that is information of a position of the defect candidate inside the bright portion (B) or the dark portion (G) of the captured image;

an identifying value acquiring process (S109) of acquiring a luminance of the captured image and a luminance contrast which is used to identify a defect of the defect candidate;

wherein the luminance contrast is a change rate between luminance of the defect candidate and luminance of a periphery of the defect candidate;

a correction value acquiring process (S110) of acquiring a correction value corresponding to the intra-pattern positional information by referring to a correction database (32e, 32f, 32g, 32h) including a correction value while using, as an intra-pattern position variable, a position inside the bright portion (B) or the dark portion (G) in the captured image;

a correcting process (S111) of correcting either the luminance contrast or a threshold value on the basis of the correction value; and

an identifying process (S112) of identifying whether or not the defect candidate is a defect by comparing the corrected luminance contrast with the non-corrected threshold value or comparing the non-corrected luminance contrast with the corrected threshold value.

6. The defect identifying method according to claim 5, wherein, in the correction database (32e, 32f), divided regions are set by dividing the bright portion (B) or the dark portion (G) in a lattice shape, and each of the divided regions is used as the intra-pattern position variable, or wherein, in the correction database (32g), a distance and an angle from a prescribed reference point inside the bright portion (B) or the dark portion (G) are used as the intra-pattern position variables, wherein

the correction database (32h) further includes, as the intra-pattern position variable, a shape of the surface of the measurement object with respect to the image capturing unit (10), and

in the correction value acquiring process (S110), a shape of a portion where the defect candidate is detected on the surface of the measurement object is acquired, and the correction value is also acquired by using the intra-pattern positional information including the acquired shape of the defect candidate, wherein

the correction database (32e, 32f, 32g, 32h) further includes a position in the captured image as the intra-pattern position variable, and

in the correction value acquiring process, a position of a defect candidate in the captured image is acquired, and the correction value is also acquired by using the intra-pattern positional information including the acquired position of the defect candidate, further comprising a normalizing process (S108) of normalizing the captured image by referring to a normalization database (31) used to normalize the captured image,

wherein a luminance contrast is acquired on the basis of the normalized captured image in the identifying value acquiring process (S109), wherein the normalization database (31) includes a parameter to remove noise, a parameter to find a representative value of a bright portion (B), a parameter to find a representative value of a dark portion (G), and a parameter to find a representative value of the defect candidate, wherein

in the correcting process (S111) and the identifying process (S112), a threshold value is acquired from a threshold value database (34) including a threshold value for each defect rank settled on the basis of a size of the defect, and in the correcting process (S111) and the identifying process (S112), the defect rank is settled on the basis of a position of a defect candidate in a measurement object, and a threshold value is acquired on the basis of the settled defect rank.

7. A defect identifying device (A1) comprising:

an illumination unit (20) configured to irradiate a surface of a measurement object with pattern illumination (S1) in which a bright portion (B) and a dark portion (G) having luminance lower than luminance of the bright portion (B) are arrayed in a predetermined pattern;

an image capturing unit (10) configured to acquire a captured image by capturing an image of at least a part of a region of the measurement object irradiated with the pattern illumination (S1);

a storage unit (30) configured to store a correction database (32) including a correction value using, as a shape variable, a shape of the surface of the measurement object with respect to the image capturing unit (10); and a control processing unit (40),

wherein the control processing unit (40) includes:

a defect candidate detection unit (42) configured to detect a defect candidate having a possibility to be a defect on the basis of the captured image;

a shape information acquisition unit (44) configured to acquire shape information that is information of a shape with respect to the image capturing unit (10) as for a position on the surface of the measurement object where the defect candidate is detected;

an identifying value acquisition unit (46) configured to acquire a luminance of the captured image and a luminance contrast which is used to identify a defect of the defect candidate,

wherein the luminance contrast is a change rate between luminance of the defect candidate and luminance of a periphery of the defect candidate;

a correction value acquisition unit (47) configured to acquire a correction value corresponding to the shape information by referring to the correction database (32);

a correction unit (48) configured to correct either the luminance contrast or a threshold value on the basis of the correction value; and

an identifying unit (49) configured to identify whether or not the defect candidate is a defect by comparing the corrected luminance contrast with the non-corrected threshold value or comparing the non-corrected luminance contrast with the corrected threshold value.

8. The defect identifying device (A1) according to claim 7, wherein the correction database (32) uses, as the shape variable, at least one of a distance from the image capturing unit (10) to the surface of the measurement object, an angle with respect to the image capturing unit (10), and a deviation distance from a focus position, and the correction database (32) includes, as the correction value, a rate of the luminance contrast at the time of having the defect in a shape indicated by the shape variable to the luminance contrast at the time of having the defect in a reference shape, or wherein

the correction database (32) further includes, as the shape variable, a position in the captured image, and the correction value acquisition unit (47) acquires a position of a defect candidate in the captured image and also acquires the correction value by using the shape information including the acquired position of the defect candidate, wherein

the correction database (32) further includes, as the shape variable, a distance from a boundary between the bright portion (B) or the dark portion (G) to a defect candidate, and

the correction value acquisition unit (47) acquires a position of the defect candidate in the bright portion (B) or the dark portion (G) and also acquires the correction value by using the shape information including the acquired position of the defect candidate, wherein

the storage unit (30) further includes a normalization database (31) including a parameter to normalize luminance in the captured image,

the control processing unit (40, 40a, 40b) further includes a normalization unit (45) configured to normalize the captured image by referring to the normalization database (31), and

the identifying value acquisition unit (46) acquires the luminance contrast on the basis of a normalized captured image, wherein the normalization database (31) includes a parameter to remove noise, a parameter to find a representative value of a bright portion (B), a parameter to find a representative value of a dark portion (G), and a parameter to find a representative value of the defect candidate, wherein

the storage unit (30) further includes a threshold value database (34) including a threshold value for each defect rank settled on the basis of a size of the defect, and

the correction unit (48) and the identifying unit (49) settle the defect rank on the basis of a position of a defect candidate in a measurement object, and further acquire a threshold value on the basis of the settled defect rank.

9. A defect identifying device (A2) comprising:

an illumination unit (20) configured to irradiate a surface of a measurement object with pattern illumination (S1) in which a bright portion (B) and a dark portion (G) having luminance lower than luminance of the bright portion (B) are arrayed in a predetermined pattern;

an image capturing unit (10) configured to acquire a captured image by capturing an image of at least a part of a region of the measurement object irradiated with the pattern illumination (S1);

a storage unit (30) including a correction database (32a, 32b, 32c, 32d) including a correction value while using, as an intra-image position variable, a position in the captured image; and

a control processing unit (40a),

wherein the control processing unit (40a) includes:

a defect candidate detection unit (42) configured to detect a defect candidate having a possibility to be a defect on the basis of the captured image;

an intra-image position acquisition unit (43a) configured to acquire intra-image positional information that is information of a position of the defect candidate in the captured image;

an identifying value acquisition unit (46) configured to acquire a luminance of the captured image and a luminance contrast which is used to identify a defect of the defect candidate;

wherein the luminance contrast is a change rate between luminance of the defect candidate and luminance of a periphery of the defect candidate;

a correction value acquisition unit (47) configured to acquire a correction value corresponding to the intra-image positional information by referring to the correction database (32a, 32b, 32c, 32d);

a correction unit (48) configured to correct either the luminance contrast or a threshold value on the basis of the correction value; and

an identifying unit (49) configured to identify whether or not the defect candidate is a defect by comparing the corrected luminance contrast with the non-corrected threshold value or comparing the non-corrected luminance contrast with the corrected threshold value.

10. The defect identifying device (A2) according to claim 9, wherein, in the correction database (32a, 32b), divided regions are set by dividing the captured image in a lattice shape, and each of the divided regions is used as the intra-image position variable, or wherein, in the correction database (32c), a distance and an angle from a prescribed reference point inside the captured image are used as the intra-image position variables, wherein

the correction database (32d) further includes, as the intra-image position variable, a shape of the surface of the measurement object with respect to the image capturing unit (10), and

the correction value acquisition unit (47) acquires a shape of a portion where the defect candidate is detected on the surface of the measurement object, and also acquires the correction value by using the intra-image positional information including the acquired shape of the defect candidate, wherein

the correction database (32a, 32b, 32c, 32d) further includes, as the intra-image position variable, a position of a defect in the bright portion (B) or the dark portion (G) included in the captured image, and

the correction value acquisition unit (47) acquires a position of a defect candidate in the bright portion (B) or the dark portion (G), and also acquires the correction value by using the intra-image positional information including the acquired position of the defect candidate.

**11.** A defect identifying device (A3) comprising:

an illumination unit (20) configured to irradiate a surface of a measurement object with pattern illumination (S1) in which a bright portion (B) and a dark portion (G) having luminance lower than luminance of the bright portion (B) are arrayed in a predetermined pattern;

an image capturing unit (10) configured to acquire a captured image by capturing an image of at least a part of a region of the measurement object irradiated with the pattern illumination (S1);

a storage unit (30) including a correction database (32e, 32f, 32g, 32h) including a correction value while using, as an intra-pattern position variable, a position inside the bright portion (B) or the dark portion (G); and

a control processing unit (40b),

wherein the control processing unit (40b) includes:

a defect candidate detection unit (42) configured to detect a defect candidate having a possibility to be a defect on the basis of the captured image;

an intra-pattern position acquisition unit (43b) configured to acquire intra-pattern positional information that is information of a position of the defect candidate in the bright portion (B) or the dark portion (G) in the captured image;

an identifying value acquisition unit (46) configured to acquire a luminance of the captured image and a luminance contrast which is used to identify a defect of the defect candidate;

wherein the luminance contrast is a change rate between luminance of the defect candidate and luminance of a periphery of the defect candidate;

a correction value acquisition unit (47) configured to acquire a correction value corresponding to the intra-pattern positional information by referring to the correction database (32e, 32f, 32g, 32h);

a correction unit (48) configured to correct either the luminance contrast or a threshold value on the basis of the correction value; and

an identifying unit (49) configured to identify whether or not the defect candidate is a defect by comparing the corrected luminance contrast with the non-corrected threshold value or comparing the non-corrected luminance contrast with the corrected threshold value.

**12.** The defect identifying device (A3) according to claim 11, wherein, in the correction database (32e, 32f), divided regions are set by dividing the bright portion (B) or the dark portion (G) in a lattice shape, and each of the divided regions is used as the intra-pattern position variable, or wherein, in the correction database (32g), a distance and an angle from a prescribed reference point inside the bright portion (B) or the dark portion (G) are used as the intra-pattern position variables, wherein

the correction database (32h) further includes, as the intra-pattern position variable, a shape of the surface of the measurement object with respect to the image capturing unit (10), and

the correction value acquisition unit (47) acquires a shape of a portion where the defect candidate is detected on the surface of the measurement object, and also acquires the correction value by using the intra-pattern positional information including the acquired shape of the defect candidate, wherein

the correction database (32e, 32f, 32g, 32h) further includes a position of a defect in the captured image as the intra-pattern position variable, and

the correction value acquisition unit (47) acquires a position of a defect candidate in the captured image, and also acquires correction value by using the intra-pattern positional information including the acquired position of the defect candidate wherein

the storage unit (30) further includes a normalization database (31) including a parameter to normalize luminance in the captured image,

the control processing unit (40, 40a, 40b) further includes a normalization unit (45) configured to normalize the captured image by referring to the normalization database (31), and

the identifying value acquisition unit (46) acquires the luminance contrast on the basis of a normalized captured image, wherein the normalization database (31) includes a parameter to remove noise, a parameter to find a representative value of a bright portion (B), a parameter to find a representative value of a dark portion (G), and a parameter to find a representative value of the defect candidate, wherein

the storage unit (30) further includes a threshold value database (34) including a threshold value for each defect rank settled on the basis of a size of the defect, and

the correction unit (48) and the identifying unit (49) settle the defect rank on the basis of a position of a defect candidate in a measurement object, and further acquire a threshold value on the basis of the settled defect rank.

**13.** A defect identifying program executed in a defect identifying device (A1) including: an illumination unit (20) configured to emit pattern illumination (S1) in which a bright portion (B) and a dark portion (G) having luminance lower than luminance of the bright portion (B) are arrayed in a predetermined pattern; an image capturing unit (10) configured to capture an image of a surface of a measurement object irradiated with the pattern illumination (S1); a storage unit (30) including a normalization database (31) including parameters to remove noise and find luminance in the captured image and a correction database (32) including a correction value while using, as a shape variable, a shape of a surface of the measurement object with respect to the image capturing unit (10); and a control processing unit (40), the program comprising:

an image capturing process (S103) of acquiring a captured image by capturing, via the image capturing unit (10), an image of at least a part of a region of the measurement object irradiated with the pattern illumination (S1);
a defect candidate detecting process (S105) of detecting a defect candidate having a possibility to be a defect on the basis of the captured image;
an identifying value acquiring process (S109) of acquiring a luminance of the captured image and a luminance contrast which is used to identify a defect of the defect candidate;
wherein the luminance contrast is a change rate between luminance of the defect candidate and luminance of a periphery of the defect candidate;
a shape information acquiring process (S107) of acquiring shape information that is information of a shape with respect to the image capturing unit (10) as for a position on the surface of the measurement object where a defect candidate is detected;
a correction value acquiring process (S110) of acquiring a correction value corresponding to the shape information by referring to a correction database (32) including a correction value while using, as a shape variable, a shape of the surface of the measurement object with respect to the image capturing unit (10);
a correcting process (S111) of correcting either the luminance contrast or a threshold value on the basis of the correction value; and
an identifying process (S112) of identifying whether or not the defect candidate is a defect by comparing the corrected luminance contrast with the non-corrected threshold value or comparing the non-corrected luminance contrast with the corrected threshold value.

**14.** A defect identifying program executed in a defect identifying device (A2) including: an illumination unit (20) configured to emit pattern illumination (S1) in which a bright portion (B) and a dark portion (G) having luminance lower than luminance of the bright portion (B) are arrayed in a predetermined pattern; an image capturing unit (10) configured to capture an image of a surface of a measurement object irradiated with the pattern illumination (S1); a storage unit (30) including a correction database (32a, 32b, 32c, 32d) including a correction value while using, as an intra-image position variable, a position in the captured image; and a control processing unit (40a), the program comprising:

an image capturing process (S103) of acquiring a captured image by capturing, via the image capturing unit (10), an image of at least a part of a region of the measurement object irradiated with the pattern illumination (S1);
a defect candidate detecting process (S105) of detecting a defect candidate having a possibility to be a defect on the basis of the captured image;
an intra-image position acquisition process (S1061) of acquiring intra-image positional information that is information of a position of the defect candidate in the captured image;
an identifying value acquiring process (S109) of acquiring a luminance of the captured image and a luminance contrast which is used to identify a defect of the defect candidate,
wherein the luminance contrast is a change rate between luminance of the defect candidate and luminance of a periphery of the defect candidate;
a correction value acquiring process (S110) of acquiring a correction value corresponding to the intra-image positional information by referring to the correction database (32a, 32b, 32c, 32d);
a correcting process (S111) of correcting either the luminance contrast or a threshold value on the basis of the correction value; and
an identifying process (S112) of identifying whether or not the defect candidate is a defect by comparing the corrected luminance contrast with the non-corrected threshold value or comparing the non-corrected luminance contrast with the corrected threshold value.

**15.** A defect identifying program executed in a defect identifying device (A3) including: an illumination unit (20) configured to irradiate a surface of a measurement object with pattern illumination (S1) in which a bright portion (B) and a dark portion (G) having luminance lower than luminance of the bright portion (B) are arrayed in a predetermined pattern; an image capturing unit (10) configured to acquire a captured image by capturing an image of at least a part of a region of the measurement object irradiated with the pattern illumination (S1); a storage unit (30) including a correction database (32e, 32f, 32g, 32h) including a correction value while using, as an intra-pattern position variable, a position inside the bright portion (B) or the dark portion (G) in the captured image; and a control processing unit (40b), the program comprising:

an image capturing process (S103) of acquiring a captured image by capturing, via the image capturing unit (10), an image of at least a part of a region of the measurement object irradiated with the pattern illumination (S1); a defect candidate detecting process (S105) of detecting a defect candidate having a possibility to be a defect on the basis of the captured image;

an intra-pattern position acquiring process (S1062) of acquiring intra-pattern positional information that is information of a position of the defect candidate inside the bright portion (B) or the dark portion (G) in the captured image;

an identifying value acquiring process (S109) of acquiring a luminance of the captured image and a luminance contrast which is used to identify a defect of the defect candidate,

wherein the luminance contrast is a change rate between luminance of the defect candidate and luminance of a periphery of the defect candidate;

a correction value acquiring process of acquiring a correction value corresponding to the intra-pattern positional information by referring to the correction database (32e, 32f, 32g, 32h);

a correcting process (S111) of correcting either the luminance contrast or a threshold value on the basis of the correction value; and

an identifying process (S112) of identifying whether or not the defect candidate is a defect by comparing the corrected luminance contrast with the non-corrected threshold value or comparing the non-corrected luminance contrast with the corrected threshold value.

## Patentansprüche

1. Computerimplementiertes Verfahren zur Defektidentifizierung, das darin besteht, das Vorliegen oder Nichtvorliegen eines Defekts auf einer Oberfläche eines Messobjekts zu erkennen, indem, mittels einer Bilderfassungseinheit (10), ein Bild der Oberfläche des Messobjekts erfasst wird, welche mit einer Musterbeleuchtung (S1) bestrahlt wird, in der ein heller Bereich (B) und ein dunkler Bereich (G) mit einer geringeren Leuchtdichte als die Leuchtdichte des hellen Bereichs (B) in einem vorgegebenen Muster angeordnet sind, wobei das Verfahren umfasst:

einen Bilderfassungsvorgang (S103) bestehend in der Erfassung eines erfassten Bildes durch Erfassen, mittels der Bilderfassungseinheit (10), eines Bildes von wenigstens einem Teil eines mit der Musterbeleuchtung (S1) bestrahlten Bereichs des Messobjekts;

einen Defektkandidatenerfassungsvorgang (S105) bestehend in der Erfassung eines Defektkandidaten, der möglicherweise ein Defekt ist, auf der Grundlage des erfassten Bildes;

einen Forminformationserfassungsvorgang (S107) bestehend in der Erfassung von Forminformationen, die Informationen über eine Form in Bezug auf die Bilderfassungseinheit (10) bezüglich einer Position auf einer Oberfläche des Messobjekts, an der ein Defektkandidat erfasst wird, sind;

einen Identifizierungswerterfassungsvorgang (S109) bestehend in der Erfassung einer Leuchtdichte des erfassten Bildes und eines Leuchtdichtekontrasts, der verwendet wird, um einen Defekt des Defektkandidaten zu identifizieren,

wobei der Leuchtdichtekontrast eine Änderungsrate zwischen der Leuchtdichte des Defektkandidaten und der Leuchtdichte eines Randbereichs des Defektkandidaten ist;

einen Korrekturwerterfassungsvorgang (S110) bestehend in der Erfassung eines Korrekturwerts, der den Forminformationen entspricht, durch Bezugnahme auf eine Korrekturdatenbank (32), die einen Korrekturwert umfasst während sie als Formvariable eine Form der Oberfläche des Messobjekts in Bezug auf die Bilderfassungseinheit (10) verwendet;

einen Korrekturvorgang (S111) bestehend in der Korrektur entweder des Leuchtdichtekontrasts oder eines Schwellenwerts auf der Grundlage des Korrekturwerts; und

einen Identifizierungsvorgang (S112) bestehend in der Identifizierung, ob der Defektkandidat ein Defekt ist oder nicht, durch Vergleichen des korrigierten Leuchtdichtekontrasts mit dem nicht korrigierten Schwellenwert oder Vergleichen des nicht korrigierten Leuchtdichtekontrasts mit dem korrigierten Schwellenwert.

2. Verfahren zur Defektidentifizierung nach Anspruch 1, wobei die Korrekturdatenbank (32) als Formvariable mindestens eines von einem Abstand von der Bilderfassungseinheit (10) zur Oberfläche des Messobjekts, einem Winkel in Bezug auf die Bilderfassungseinheit (10) und einem Abweichungsabstand von einer Fokusposition verwendet, und die Korrekturdatenbank (32) als Korrekturwert eine Rate des Leuchtdichtekontrasts zum Zeitpunkt des Vorliegens des Defekts in einer durch die Formvariable angegebenen Form zum Leuchtdichtekontrast zum Zeitpunkt des Vorliegens des Defekts in einer Referenzform umfasst, oder wobei

die Korrekturdatenbank (32) ferner als Formvariable eine Position in dem erfassten Bild enthält, und im Korrekturwerterfassungsvorgang (S110) eine Position eines Defektkandidaten in dem erfassten Bild erfasst wird und außerdem der Korrekturwert unter Verwendung der Forminformationen einschließlich der erfassten Position des Defektkandidaten erfasst wird, wobei

die Korrekturdatenbank (32) ferner als Formvariable eine Position eines Defekts in dem hellen Bereich (B) oder dem dunklen Bereich (G) umfasst, die in dem erfassten Bild enthalten sind, und im Korrekturwerterfassungsvorgang (S110) eine Position eines Defektkandidaten im hellen Bereich (B) oder im dunklen Bereich (G) erfasst wird und außerdem der Korrekturwert unter Verwendung der Forminformationen einschließlich der erfassten Position des Defektkandidaten erfasst wird,

ferner umfassend einen Normalisierungsvorgang (S108) bestehend in der Normalisierung des erfassten Bildes durch Bezugnahme auf eine Normalisierungsdatenbank (31), die zum Normalisieren des erfassten Bildes verwendet wird,

wobei ein Leuchtdichtekontrast auf der Grundlage des normalisierten erfassten Bildes in dem Identifizierungswerterfassungsvorgang (S109) erfasst wird, wobei die Normalisierungsdatenbank (31) einen Parameter zum Entfernen von Rauschen, einen Parameter zum Finden eines repräsentativen Wertes eines hellen Bereichs (B), einen Parameter zum Finden eines repräsentativen Wertes eines dunklen Bereichs (G) und einen Parameter zum Finden eines repräsentativen Wertes des Defektkandidaten enthält, wobei

im Korrekturvorgang (S111) und im Identifizierungsvorgang (S112) ein Schwellenwert von einer Schwellenwertdatenbank (34) erfasst wird, die einen Schwellenwert für jede Defektstufe enthält, die auf der Grundlage einer Größe des Defekts festgelegt wird, und

im Korrekturvorgang (S111) und im Identifizierungsvorgang (S112) die Defektstufe auf der Grundlage einer Position eines Defektkandidaten in einem Messobjekt festgelegt wird, und ein Schwellenwert auf der Grundlage der festgelegten Defektstufe erfasst wird.

3. Computerimplementiertes Verfahren zur Defektidentifizierung, das darin besteht, das Vorliegen oder Nichtvorliegen eines Defekts auf einer Oberfläche eines Messobjekts zu erkennen, indem, mittels einer Bilderfassungseinheit (10), ein Bild der Oberfläche des Messobjekts erfasst wird, welche mit einer Musterbeleuchtung (S1) bestrahlt wird, in der ein heller Bereich (B) und ein dunkler Bereich (G) mit einer geringeren Leuchtdichte als die Leuchtdichte des hellen Bereichs (B) in einem vorgegebenen Muster angeordnet sind, wobei das Verfahren umfasst:

einen Bilderfassungsvorgang (S103) bestehend in der Erfassung eines erfassten Bildes durch Erfassen, mittels der Bilderfassungseinheit (10), eines Bildes von wenigstens einem Teil eines mit der Musterbeleuchtung (S1) bestrahlten Bereichs des Messobjekts;

einen Defektkandidatenerfassungsvorgang (S105) bestehend in der Erfassung eines Defektkandidaten, der möglicherweise ein Defekt ist, auf der Grundlage des erfassten Bildes;

ein Intra-Bild-Positionserfassungsvorgang (S1061) bestehend in der Erfassung von Intra-Bild-Positionsinformationen, die Informationen bezüglich einer Position des Defektkandidaten in dem erfassten Bild sind;

einen Identifizierungswerterfassungsvorgang (S109) bestehend in der Erfassung einer Leuchtdichte des erfassten Bildes und eines Leuchtdichtekontrasts, der verwendet wird, um einen Defekt des Defektkandidaten zu identifizieren,

wobei der Leuchtdichtekontrast eine Änderungsrate zwischen der Leuchtdichte des Defektkandidaten und der Leuchtdichte eines Randbereichs des Defektkandidaten ist;

einen Korrekturwerterfassungsvorgang (S110) bestehend in der Erfassung eines Korrekturwerts, der den Intra-Bild-Positionsinformationen entspricht, durch Bezugnahme auf eine Korrekturdatenbank (32a, 32b, 32c, 32d), die einen Korrekturwert enthält, während als Intra-Bild-Positionsvariable eine Position in dem erfassten Bild verwendet wird;

einen Korrekturvorgang (S111) bestehend in der Korrektur entweder des Leuchtdichtekontrasts oder eines Schwellenwerts auf der Grundlage des Korrekturwerts; und

einen Identifizierungsvorgang (S112) bestehend in der Identifizierung, ob der Defektkandidat ein Defekt ist oder nicht, durch Vergleichen des korrigierten Leuchtdichtekontrasts mit dem nicht korrigierten Schwellenwert oder Vergleichen des nicht korrigierten Leuchtdichtekontrasts mit dem korrigierten Schwellenwert.

4. Verfahren zur Defektidentifizierung gemäß Anspruch 3, wobei in der Korrekturdatenbank (32a, 32b) geteilte Bereiche durch Unterteilen des erfassten Bildes in einer Gitterform festgelegt werden und jeder der geteilten Bereiche als die Intra-Bild-Positionsvariable verwendet wird, oder wobei in der Korrekturdatenbank (32c) ein Abstand und ein Winkel bezüglich eines vorgeschriebenen Bezugspunktes innerhalb des erfassten Bildes als die Intra-Bild-Positionsvariablen verwendet werden, wobei

die Korrekturdatenbank (32d) ferner als die Intra-Bild-Positionsvariable eine Form der Oberfläche des Messobjekts in Bezug auf die Bilderfassungseinheit (10) enthält, und
im Korrekturwerterfassungsvorgang (S110) eine Form eines Bereichs, in dem der Defektkandidat auf der Oberfläche des Messobjekts erkannt wird, erfasst wird und außerdem der Korrekturwert unter Verwendung der Intra-Bild-Positionsinformationen einschließlich der erfassten Form des Defektkandidaten, erfasst wird, wobei
die Korrekturdatenbank (32a, 32b, 32c, 32d) ferner als die Intra-Bild-Positionsvariable eine Position eines Defekts in dem hellen Bereich (B) oder dem dunklen Bereich (G), die in dem erfassten Bild enthalten sind, umfasst, und
im Korrekturwerterfassungsvorgang (S110) eine Position eines Defektkandidaten im hellen Bereich (B) oder im dunklen Bereich (G) erfasst wird und außerdem der Korrekturwert unter Verwendung der Intra-Bild-Positionsinformationen einschließlich der erfassten Position des Defektkandidaten erfasst wird,
ferner umfassend einen Normalisierungsvorgang (S108) bestehend in der Normalisierung des erfassten Bildes durch Bezugnahme auf eine Normalisierungsdatenbank (31), die zum Normalisieren des erfassten Bildes verwendet wird,
wobei ein Leuchtdichtekontrast auf der Grundlage des normalisierten erfassten Bildes in dem Identifizierungswerterfassungsvorgang (S109) erfasst wird, wobei die Normalisierungsdatenbank (31) einen Parameter zum Entfernen von Rauschen, einen Parameter zum Finden eines repräsentativen Wertes eines hellen Bereichs (B), einen Parameter zum Finden eines repräsentativen Wertes eines dunklen Bereichs (G) und einen Parameter zum Finden eines repräsentativen Wertes des Defektkandidaten enthält, wobei
im Korrekturvorgang (S111) und im Identifizierungsvorgang (S112) ein Schwellenwert von einer Schwellenwertdatenbank (34) erfasst wird, die einen Schwellenwert für jede Defektstufe enthält, die auf der Grundlage einer Größe des Defekts festgelegt wird, und
im Korrekturvorgang (S111) und im Identifizierungsvorgang (S112) die Defektstufe auf der Grundlage einer Position eines Defektkandidaten in einem Messobjekt festgelegt wird, und ein Schwellenwert auf der Grundlage der festgelegten Defektstufe erfasst wird.

5. Computerimplementiertes Verfahren zur Defektidentifizierung, das darin besteht, das Vorliegen oder Nichtvorliegen eines Defekts auf einer Oberfläche eines Messobjekts zu erkennen, indem, mittels einer Bilderfassungseinheit (10), ein Bild der Oberfläche des Messobjekts erfasst wird, welche mit einer Musterbeleuchtung (S1) bestrahlt wird, in der ein heller Bereich (B) und ein dunkler Bereich (G) mit einer geringeren Leuchtdichte als die Leuchtdichte des hellen Bereichs (B) in einem vorgegebenen Muster angeordnet sind, wobei das Verfahren umfasst:

einen Bilderfassungsvorgang (S103) bestehend in der Erfassung eines erfassten Bildes durch Erfassen, mittels der Bilderfassungseinheit (10), eines Bildes von wenigstens einem Teil eines mit der Musterbeleuchtung (S1) bestrahlten Bereichs des Messobjekts;
einen Defektkandidatenerfassungsvorgang (S105) bestehend in der Erfassung eines Defektkandidaten, der möglicherweise ein Defekt ist, auf der Grundlage des erfassten Bildes;
einen Intra-Muster-Positionserfassungsvorgang (S1062) bestehend in der Erfassung von Intra-Muster-Positionsinformationen, die Informationen bezüglich einer Position des Defektkandidaten innerhalb des hellen Bereichs (B) oder des dunklen Bereichs (G) des erfassten Bildes sind;
einen Identifizierungswerterfassungsvorgang (S109) bestehend in der Erfassung einer Leuchtdichte des erfassten Bildes und eines Leuchtdichtekontrasts, der verwendet wird, um einen Defekt des Defektkandidaten zu identifizieren,
wobei der Leuchtdichtekontrast eine Änderungsrate zwischen der Leuchtdichte des Defektkandidaten und der Leuchtdichte eines Randbereichs des Defektkandidaten ist;
einen Korrekturwerterfassungsvorgang (S110) bestehend in der Erfassung eines Korrekturwerts, der den Intra-Muster-Positionsinformationen entspricht, durch Bezugnahme auf eine Korrekturdatenbank (32e, 32f, 32g, 32h), die einen Korrekturwert umfasst während als Intra-Muster-Positionsvariable eine Position innerhalb des hellen Bereichs (B) oder des dunklen Bereichs (G) in dem erfassten Bild verwendet wird;
einen Korrekturvorgang (S111) bestehend in der Korrektur entweder des Leuchtdichtekontrasts oder eines Schwellenwerts auf der Grundlage des Korrekturwerts; und
einen Identifizierungsvorgang (S112) bestehend in der Identifizierung, ob der Defektkandidat ein Defekt ist oder nicht, durch Vergleichen des korrigierten Leuchtdichtekontrasts mit dem nicht korrigierten Schwellenwert oder Vergleichen des nicht korrigierten Leuchtdichtekontrasts mit dem korrigierten Schwellenwert.

6. Verfahren zur Defektidentifizierung nach Anspruch 5, wobei in der Korrekturdatenbank (32e, 32f) geteilte Bereiche durch Unterteilen des hellen Bereichs (B) oder des dunklen Bereichs (G) in Gitterform festgelegt werden und jeder der geteilten Bereiche als die Intra-Muster-Positionsvariable verwendet wird, oder wobei in der Korrekturdatenbank (32g) ein Abstand und ein Winkel bezüglich eines vorgeschriebenen Bezugspunktes innerhalb des hellen Bereichs (B) oder des dunklen Bereichs (G) als die Intra-Muster-Positionsvariablen verwendet werden, wobei

die Korrekturdatenbank (32h) ferner als die Intra-Muster-Positionsvariable eine Form der Oberfläche des Messobjekts in Bezug auf die Bilderfassungseinheit (10) umfasst, und
im Korrekturwerterfassungsvorgang (S110) eine Form eines Bereichs, in dem der Defektkandidat auf der Oberfläche des Messobjekts erkannt wird, erfasst wird und außerdem der Korrekturwert unter Verwendung der Intra-Muster-Positionsinformationen, einschließlich der erfassten Form des Defektkandidaten, erfasst wird, wobei
die Korrekturdatenbank (32e, 32f, 32g, 32h) ferner eine Position in dem erfassten Bild als die Intra-Muster-Positionsvariable enthält und
im Korrekturwerterfassungsvorgang eine Position eines Defektkandidaten in dem erfassten Bild erfasst wird und außerdem der Korrekturwert unter Verwendung der Intra-Muster-Positionsinformationen einschließlich der erfassten Position des Defektkandidaten erfasst wird, ferner umfassend einen Normalisierungsvorgang (S108) bestehend in der Normalisierung des erfassten Bildes durch Bezugnahme auf eine Normalisierungsdatenbank (31), die zum Normalisieren des erfassten Bildes verwendet wird,
wobei ein Leuchtdichtekontrast auf der Grundlage des normalisierten erfassten Bildes in dem Identifizierungswerterfassungsvorgang (S109) erfasst wird, wobei die Normalisierungsdatenbank (31) einen Parameter zum Entfernen von Rauschen, einen Parameter zum Finden eines repräsentativen Wertes eines hellen Bereichs (B), einen Parameter zum Finden eines repräsentativen Wertes eines dunklen Bereichs (G) und einen Parameter zum Finden eines repräsentativen Wertes des Defektkandidaten umfasst, wobei
im Korrekturvorgang (S111) und im Identifizierungsvorgang (S112) ein Schwellenwert von einer Schwellenwertdatenbank (34) erfasst wird, die einen Schwellenwert für jede Defektstufe enthält, die auf der Grundlage einer Größe des Defekts festgelegt wird, und
im Korrekturvorgang (S111) und im Identifizierungsvorgang (S112) die Defektstufe auf der Grundlage einer Position eines Defektkandidaten in einem Messobjekt festgelegt wird, und ein Schwellenwert auf der Grundlage der festgelegten Defektstufe erfasst wird.

7. Vorrichtung zur Defektidentifizierung (A1), umfassend:

eine Beleuchtungseinheit (20), die so konfiguriert ist, dass sie eine Oberfläche eines Messobjekts mit einer Musterbeleuchtung (S1) bestrahlt, in der ein heller Bereich (B) und ein dunkler Bereich (G) mit einer geringeren Leuchtdichte als die Leuchtdichte des hellen Bereichs (B) in einem vorbestimmten Muster angeordnet sind;
eine Bilderfassungseinheit (10), die so konfiguriert ist, dass sie ein erfasstes Bild durch Erfassen eines Bildes von mindestens einem Teil eines Bereichs des Messobjekts, der mit der Musterbeleuchtung (S1) bestrahlt wird, erfasst;
eine Speichereinheit (30), die so konfiguriert ist, dass sie eine Korrekturdatenbank (32) speichert, die einen Korrekturwert enthält, der als Formvariable eine Form der Oberfläche des Messobjekts in Bezug auf die Bilderfassungseinheit (10) verwendet; und
eine Steuerverarbeitungseinheit (40),
wobei die Steuerverarbeitungseinheit (40) umfasst:

eine Defektkandidatenerfassungseinheit (42), die so konfiguriert ist, dass sie auf der Grundlage des erfassten Bildes einen Defektkandidaten erfasst, der möglicherweise ein Defekt ist;
eine Forminformationserfassungseinheit (44), die so konfiguriert ist, dass sie Forminformationen erfasst, die Informationen über eine Form in Bezug auf die Bilderfassungseinheit (10) bezüglich einer Position auf einer Oberfläche des Messobjekts, an der ein Defektkandidat erfasst wird, sind;
eine Identifizierungswerterfassungseinheit (46), die so konfiguriert ist, dass sie eine Leuchtdichte des erfassten Bildes und einen Leuchtdichtekontrast erfasst, der verwendet wird, um einen Defekt des Defektkandidaten zu identifizieren;
wobei der Leuchtdichtekontrast eine Änderungsrate zwischen der Leuchtdichte des Defektkandidaten und der Leuchtdichte eines Randbereichs des Defektkandidaten ist;

eine Korrekturwerterfassungseinheit (47), die so konfiguriert ist, dass sie einen Korrekturwert, der den Forminformationen entspricht, durch Bezugnahme auf die Korrekturdatenbank (32) erfasst;

eine Korrektureinheit (48), die so konfiguriert ist, dass sie entweder den Leuchtdichtekontrast oder einen Schwellenwert auf der Grundlage des Korrekturwertes korrigiert; und

eine Identifizierungseinheit (49), die so konfiguriert ist, dass sie durch Vergleichen des korrigierten Leuchtdichtekontrasts mit dem nicht korrigierten Schwellenwert oder durch Vergleichen des nicht korrigierten Leuchtdichtekontrasts mit dem korrigierten Schwellenwert identifiziert, ob der Defektkandidat ein Defekt ist oder nicht.

8. Vorrichtung zur Defektidentifizierung (A1) nach Anspruch 7, wobei die Korrekturdatenbank (32) als Formvariable mindestens eines von einem Abstand von der Bilderfassungseinheit (10) zur Oberfläche des Messobjekts, einem Winkel in Bezug auf die Bilderfassungseinheit (10) und einem Abweichungsabstand von einer Fokusposition verwendet, und die Korrekturdatenbank (32) als Korrekturwert eine Rate des Leuchtdichtekontrasts zum Zeitpunkt des Vorliegens des Defekts in einer durch die Formvariable angegebenen Form zum Leuchtdichtekontrast zum Zeitpunkt des Vorliegens des Defekts in einer Referenzform umfasst, oder wobei

die Korrekturdatenbank (32) ferner als Formvariable eine Position in dem erfassten Bild enthält, und die Korrekturwerterfassungseinheit (47) eine Position eines Defektkandidaten in dem erfassten Bild erfasst und außerdem den Korrekturwert unter Verwendung der Forminformationen einschließlich der erfassten Position des Defektkandidaten erfasst, wobei

die Korrekturdatenbank (32) ferner als Formvariable einen Abstand von einem Grenzbereich zwischen dem hellen Bereich (B) oder dem dunklen Bereich (G) zu einem Defektkandidaten enthält, und die Korrekturwerterfassungseinheit (47) eine Position des Defektkandidaten in dem hellen Bereich (B) oder dem dunklen Bereich (G) erfasst und außerdem den Korrekturwert unter Verwendung der Forminformationen einschließlich der erfassten Position des Defektkandidaten erfasst, wobei

die Speichereinheit (30) ferner eine Normalisierungsdatenbank (31) mit einem Parameter zum Normalisieren der Leuchtdichte in dem erfassten Bild umfasst,

die Steuerverarbeitungseinheit (40, 40a, 40b) ferner eine Normalisierungseinheit (45) umfasst, die so konfiguriert ist, dass sie das erfasste Bild unter Bezugnahme auf die Normalisierungsdatenbank (31) normalisiert, und

die Identifizierungswerterfassungseinheit (46) den Leuchtdichtekontrast auf der Grundlage eines normalisierten erfassten Bildes erfasst, wobei die Normalisierungsdatenbank (31) einen Parameter zum Entfernen von Rauschen, einen Parameter zum Finden eines repräsentativen Wertes eines hellen Bereichs (B), einen Parameter zum Finden eines repräsentativen Wertes eines dunklen Bereichs (G) und einen Parameter zum Finden eines repräsentativen Wertes des Defektkandidaten enthält, wobei

die Speichereinheit (30) ferner eine Schwellenwertdatenbank (34) mit einem Schwellenwert für jede Defektstufe umfasst, die auf der Grundlage einer Größe des Defekts festgelegt wird, und

die Korrektureinheit (48) und die Identifizierungseinheit (49) die Defektstufe auf der Grundlage einer Position eines Defektkandidaten in einem Messobjekt festlegen und ferner einen Schwellenwert auf der Grundlage der festgelegten Defektstufe erfassen.

9. Vorrichtung zur Defektidentifizierung (A2), umfassend:

eine Beleuchtungseinheit (20), die so konfiguriert ist, dass sie eine Oberfläche eines Messobjekts mit einer Musterbeleuchtung (S1) bestrahlt, in der ein heller Bereich (B) und ein dunkler Bereich (G) mit einer geringeren Leuchtdichte als die Leuchtdichte des hellen Bereichs (B) in einem vorbestimmten Muster angeordnet sind;

eine Bilderfassungseinheit (10), die so konfiguriert ist, dass sie ein erfasstes Bild durch Erfassen eines Bildes von mindestens einem Teil eines Bereichs des Messobjekts, der mit der Musterbeleuchtung (S1) bestrahlt wird, erfasst;

eine Speichereinheit (30), die eine Korrekturdatenbank (32a, 32b, 32c, 32d) enthält, die einen Korrekturwert enthält, während als Intra-Bild-Positionsvariable eine Position in dem erfassten Bild verwendet wird; und eine Steuerverarbeitungseinheit (40a),

wobei die Steuerverarbeitungseinheit (40a) umfasst:

eine Defektkandidatenerfassungseinheit (42), die so konfiguriert ist, dass sie einen Defektkandidaten, der möglicherweise ein Defekt ist, auf der Grundlage des erfassten Bildes erfasst;

eine Intra-Bild-Positionserfassungseinheit (43a), die so konfiguriert ist, dass sie Intra-Bild-Positionsinformationen erfasst, die Informationen bezüglich einer Position des Defektkandidaten in dem erfassten Bild sind;

eine Identifizierungswerterfassungseinheit (46), die so konfiguriert ist, dass sie eine Leuchtdichte des erfassten Bildes und einen Leuchtdichtekontrast erfasst, der verwendet wird, um einen Defekt des Defektkandidaten zu identifizieren;

wobei der Leuchtdichtekontrast eine Änderungsrate zwischen der Leuchtdichte des Defektkandidaten und der Leuchtdichte eines Randbereichs des Defektkandidaten ist;

eine Korrekturwerterfassungseinheit (47), die so konfiguriert ist, dass sie einen Korrekturwert erfasst, der den Intra-Bild-Positionsinformationen entspricht, indem sie auf die Korrekturdatenbank (32a, 32b, 32c, 32d) Bezug nimmt;

eine Korrektureinheit (48), die so konfiguriert ist, dass sie entweder den Leuchtdichtekontrast oder einen Schwellenwert auf der Grundlage des Korrekturwerts korrigiert; und

eine Identifizierungseinheit (49), die so konfiguriert ist, dass sie durch Vergleichen des korrigierten Leuchtdichtekontrasts mit dem nicht korrigierten Schwellenwert oder durch Vergleichen des nicht korrigierten Leuchtdichtekontrasts mit dem korrigierten Schwellenwert identifiziert, ob der Defektkandidat ein Defekt ist oder nicht.

10. Vorrichtung zur Defektidentifizierung (A2) gemäß Anspruch 9, wobei in der Korrekturdatenbank (32a, 32b) geteilte Bereiche durch Unterteilen des erfassten Bildes in einer Gitterform festgelegt werden und jeder der geteilten Bereiche als die Intra-Bild-Positionsvariable verwendet wird, oder wobei in der Korrekturdatenbank (32c) ein Abstand und ein Winkel bezüglich eines vorgeschriebenen Bezugspunktes innerhalb des erfassten Bildes als die Intra-Bild-Positionsvariablen verwendet werden, wobei

die Korrekturdatenbank (32d) ferner als die Intra-Bild-Positionsvariable eine Form der Oberfläche des Messobjekts in Bezug auf die Bilderfassungseinheit (10) enthält, und

die Korrekturwerterfassungseinheit (47) eine Form eines Bereichs erfasst, in dem der Defektkandidat auf der Oberfläche des Messobjekts erkannt wird, und außerdem den Korrekturwert unter Verwendung der Intra-Bild-Positionsinformationen einschließlich der erfassten Form des Defektkandidaten erfasst, wobei

die Korrekturdatenbank (32a, 32b, 32c, 32d) ferner als die Intra-Bild-Positionsvariable eine Position eines Defekts in dem hellen Bereich (B) oder dem dunklen Bereich (G) enthält, die in dem erfassten Bild enthalten sind, und

die Korrekturwerterfassungseinheit (47) eine Position eines Defektkandidaten in dem hellen Bereich (B) oder dem dunklen Bereich (G) erfasst und außerdem den Korrekturwert unter Verwendung der Intra-Bild-Positionsinformationen einschließlich der erfassten Position des Defektkandidaten erfasst.

11. Vorrichtung zur Defektidentifizierung (A3), umfassend:

eine Beleuchtungseinheit (20), die so konfiguriert ist, dass sie eine Oberfläche eines Messobjekts mit einer Musterbeleuchtung (S1) bestrahlt, in der ein heller Bereich (B) und ein dunkler Bereich (G) mit einer geringeren Leuchtdichte als die Leuchtdichte des hellen Bereichs (B) in einem vorbestimmten Muster angeordnet sind;

eine Bilderfassungseinheit (10), die so konfiguriert ist, dass sie ein erfasstes Bild durch Erfassen eines Bildes von mindestens einem Teil eines Bereichs des Messobjekts, der mit der Musterbeleuchtung (S1) bestrahlt wird, erfasst;

eine Speichereinheit (30), die eine Korrekturdatenbank (32e, 32f, 32g, 32h) umfasst, die einen Korrekturwert enthält, wobei als eine Intra-Muster-Positionsvariable eine Position innerhalb des hellen Bereichs (B) oder des dunklen Bereichs (G) verwendet wird; und

eine Steuerverarbeitungseinheit (40b),

wobei die Steuerverarbeitungseinheit (40b) enthält:

eine Defektkandidatenerfassungseinheit (42), die so konfiguriert ist, dass sie auf der Grundlage des erfassten Bildes einen Defektkandidaten erfasst, der möglicherweise ein Defekt ist;

eine Intra-Muster-Positionserfassungseinheit (43b), die so konfiguriert ist, dass sie Intra-Muster-Positionsinformationen erfasst, die Informationen bezüglich einer Position des Defektkandidaten im hellen Bereich (B) oder im dunklen Bereich (G) in dem erfassten Bild sind;

eine Identifizierungswerterfassungseinheit (46), die so konfiguriert ist, dass sie eine Leuchtdichte des erfassten Bildes und einen Leuchtdichtekontrast erfasst, der verwendet wird, um einen Defekt des Defektkandidaten zu identifizieren;

wobei der Leuchtdichtekontrast eine Änderungsrate zwischen der Leuchtdichte des Defektkandidaten und der Leuchtdichte eines Randbereichs des Defektkandidaten ist;

eine Korrekturwerterfassungseinheit (47), die so konfiguriert ist, dass sie einen Korrekturwert erfasst, der den Intra-Muster-Positionsinformationen entspricht, indem sie auf die Korrekturdatenbank (32e, 32f, 32g, 32h) Bezug nimmt;
eine Korrektureinheit (48), die so konfiguriert ist, dass sie entweder den Leuchtdichtekontrast oder einen Schwellenwert auf der Grundlage des Korrekturwerts korrigiert; und
eine Identifizierungseinheit (49), die so konfiguriert ist, dass sie durch Vergleichen des korrigierten Leuchtdichtekontrasts mit dem nicht korrigierten Schwellenwert oder durch Vergleichen des nicht korrigierten Leuchtdichtekontrasts mit dem korrigierten Schwellenwert identifiziert, ob der Defektkandidat ein Defekt ist oder nicht.

12. Vorrichtung zur Defektidentifizierung (A3) gemäß Anspruch 11, wobei in der Korrekturdatenbank (32e, 32f) geteilte Bereiche durch Unterteilen des hellen Bereichs (B) oder des dunklen Bereichs (G) in Gitterform festgelegt werden und jeder der geteilten Bereiche als die Intra-Muster-Positionsvariable verwendet wird, oder wobei in der Korrekturdatenbank (32g) ein Abstand und ein Winkel bezüglich eines vorgeschriebenen Bezugspunktes innerhalb des hellen Bereichs (B) oder des dunklen Bereich (G) als die Intra-Muster-Positionsvariablen verwendet werden, wobei

die Korrekturdatenbank (32h) ferner als die Intra-Muster-Positionsvariable eine Form der Oberfläche des Messobjekts in Bezug auf die Bilderfassungseinheit (10) enthält, und
die Korrekturwerterfassungseinheit (47) eine Form eines Bereichs erfasst, in dem der Defektkandidat auf der Oberfläche des Messobjekts erkannt wird, und außerdem den Korrekturwert unter Verwendung der Intra-Muster-Positionsinformationen einschließlich der erfassten Form des Defektkandidaten erfasst, wobei
die Korrekturdatenbank (32e, 32f, 32g, 32h) ferner eine Position eines Defekts in dem erfassten Bild als die Intra-Muster-Positionsvariable enthält und
die Korrekturwerterfassungseinheit (47) eine Position eines Defektkandidaten in dem erfassten Bild erfasst und ferner einen Korrekturwert unter Verwendung der Intra-Muster-Positionsinformationen einschließlich der erfassten Position des Defektkandidaten erfasst, wobei
die Speichereinheit (30) ferner eine Normalisierungsdatenbank (31) mit einem Parameter zum Normalisieren der Leuchtdichte in dem erfassten Bild umfasst,
die Steuerverarbeitungseinheit (40, 40a, 40b) ferner eine Normalisierungseinheit (45) umfasst, die so konfiguriert ist, dass sie das erfasste Bild unter Bezugnahme auf die Normalisierungsdatenbank (31) normalisiert, und
die Identifizierungswerterfassungseinheit (46) den Leuchtdichtekontrast auf der Grundlage eines normalisierten erfassten Bildes erfasst, wobei die Normalisierungsdatenbank (31) einen Parameter zum Entfernen von Rauschen, einen Parameter zum Finden eines repräsentativen Wertes eines hellen Bereichs (B), einen Parameter zum Finden eines repräsentativen Wertes eines dunklen Bereichs (G) und einen Parameter zum Finden eines repräsentativen Wertes des Defektkandidaten enthält, wobei
die Speichereinheit (30) ferner eine Schwellenwertdatenbank (34) umfasst, die einen Schwellenwert für jede Defektstufe enthält, die auf der Grundlage einer Größe des Defekts festgelegt wird, und
die Korrektureinheit (48) und die Identifizierungseinheit (49) die Defektstufe auf der Grundlage einer Position eines Defektkandidaten in einem Messobjekt festlegen und ferner einen Schwellenwert auf der Grundlage der festgelegten Defektstufe erfassen.

13. Programm zur Defektidentifizierung, das in einer Vorrichtung zur Defektidentifizierung (A1) ausgeführt wird, die umfasst: eine Beleuchtungseinheit (20), die so konfiguriert ist, dass sie eine Musterbeleuchtung (S1) ausstrahlt, in der ein heller Bereich (B) und ein dunkler Bereich (G), der eine geringere Leuchtdichte als der helle Bereich (B) aufweist, in einem vorbestimmten Muster angeordnet sind; eine Bilderfassungseinheit (10), die so konfiguriert ist, dass sie ein Bild einer Oberfläche eines Messobjekts erfasst, die mit der Musterbeleuchtung (S1) bestrahlt wird; eine Speichereinheit (30), die eine Normalisierungsdatenbank (31) mit Parametern zum Entfernen von Rauschen und zum Auffinden der Leuchtdichte in dem erfassten Bild enthält und eine Korrekturdatenbank (32), die einen Korrekturwert umfasst und als Formvariable eine Form einer Oberfläche des Messobjekts in Bezug auf die Bilderfassungseinheit (10) verwendet; und eine Steuerverarbeitungseinheit (40), wobei das Programm umfasst:

einen Bilderfassungsvorgang (S103) bestehend in der Erfassung eines erfassten Bildes durch Erfassen, mittels der Bilderfassungseinheit (10), eines Bildes von wenigstens einem Teil eines mit der Musterbeleuchtung (S1) bestrahlten Bereichs des Messobjekts;
einen Defektkandidatenerfassungsvorgang (S105) bestehend in der Erfassung eines Defektkandidaten, der möglicherweise ein Defekt ist, auf der Grundlage des erfassten Bildes;
ein Identifizierungswerterfassungsvorgang (S109) bestehend in der Erfassung einer Leuchtdichte des erfassten Bildes und eines Leuchtdichtekontrasts, der verwendet wird, um einen Defekt des Defektkandidaten zu identifizieren;

wobei der Leuchtdichtekontrast eine Änderungsrate zwischen der Leuchtdichte des Defektkandidaten und der Leuchtdichte eines Randbereichs des Defektkandidaten ist;

einen Forminformationserfassungsvorgang (S107) bestehend in der Erfassung von Forminformationen, die Informationen über eine Form in Bezug auf die Bilderfassungseinheit (10) bezüglich einer Position auf einer Oberfläche des Messobjekts, an der ein Defektkandidat erfasst wird, sind;

einen Korrekturwerterfassungsvorgang (S110) bestehend in der Erfassung eines Korrekturwerts, der den Forminformationen entspricht, durch Bezugnahme auf eine Korrekturdatenbank (32), die einen Korrekturwert umfasst während sie als Formvariable eine Form der Oberfläche des Messobjekts in Bezug auf die Bilderfassungseinheit (10) verwendet;

einen Korrekturvorgang (S111) bestehend in der Korrektur entweder des Leuchtdichtekontrasts oder eines Schwellenwerts auf der Grundlage des Korrekturwerts; und

einen Identifizierungsvorgang (S112) bestehend in der Identifizierung, ob der Defektkandidat ein Defekt ist oder nicht, durch Vergleichen des korrigierten Leuchtdichtekontrasts mit dem nicht korrigierten Schwellenwert oder Vergleichen des nicht korrigierten Leuchtdichtekontrasts mit dem korrigierten Schwellenwert.

14. Programm zur Defektidentifizierung, das in einer Vorrichtung zur Defektidentifizierung (A2) ausgeführt wird, die umfasst: eine Beleuchtungseinheit (20), die so konfiguriert ist, dass sie eine Musterbeleuchtung (S1) ausstrahlt, in der ein heller Bereich (B) und ein dunkler Bereich (G), der eine geringere Leuchtdichte als der helle Bereich (B) aufweist, in einem vorgegebenen Muster angeordnet sind; eine Bilderfassungseinheit (10), die so konfiguriert ist, dass sie ein Bild einer Oberfläche eines Messobjekts erfasst, die mit der Musterbeleuchtung (S1) bestrahlt wird; eine Speichereinheit (30), die eine Korrekturdatenbank (32a, 32b, 32c, 32d) umfasst, die einen Korrekturwert enthält und als eine Intra-Bild-Positionsvariable eine Position in dem erfassten Bild verwendet; und eine Steuerverarbeitungseinheit (40a), wobei das Programm umfasst:

einen Bilderfassungsvorgang (S103) bestehend in der Erfassung eines erfassten Bildes durch Erfassen, mittels der Bilderfassungseinheit (10), eines Bildes von wenigstens einem Teil eines mit der Musterbeleuchtung (S1) bestrahlten Bereichs des Messobjekts;

einen Defektkandidatenerfassungsvorgang (S105) bestehend in der Erfassung eines Defektkandidaten, der möglicherweise ein Defekt ist, auf der Grundlage des erfassten Bildes;

einen Intra-Bild-Positionserfassungsvorgang (S1061) bestehend in der Erfassung von Intra-Bild-Positionsinformationen, die Informationen bezüglich einer Position des Defektkandidaten in dem erfassten Bild sind;

einen Identifizierungswerterfassungsvorgang (S109) bestehend in der Erfassung einer Leuchtdichte des erfassten Bildes und eines Leuchtdichtekontrasts, der verwendet wird, um einen Defekt des Defektkandidaten zu identifizieren,

wobei der Leuchtdichtekontrast eine Änderungsrate zwischen der Leuchtdichte des Defektkandidaten und der Leuchtdichte eines Randbereichs des Defektkandidaten ist;

einen Korrekturwerterfassungsvorgang (S110) bestehend in der Erfassung eines Korrekturwerts, der den Intra-Bild- Positionsinformationen entspricht, durch Bezugnahme auf die Korrekturdatenbank (32a, 32b, 32c, 32d);

einen Korrekturvorgang (S111) bestehend in der Korrektur entweder des Leuchtdichtekontrasts oder eines Schwellenwerts auf der Grundlage des Korrekturwerts; und

einen Identifizierungsvorgang (S112) bestehend in der Identifizierung, ob der Defektkandidat ein Defekt ist oder nicht, durch Vergleichen des korrigierten Leuchtdichtekontrasts mit dem nicht korrigierten Schwellenwert oder Vergleichen des nicht korrigierten Leuchtdichtekontrasts mit dem korrigierten Schwellenwert.

15. Programm zur Defektidentifizierung, das in einer Vorrichtung zur Defektidentifizierung (A3) ausgeführt wird, die umfasst: eine Beleuchtungseinheit (20), die so konfiguriert ist, dass sie eine Oberfläche eines Messobjekts mit einer Musterbeleuchtung (S1) bestrahlt, in der ein heller Bereich (B) und ein dunkler Bereich (G) mit einer geringeren Leuchtdichte als die Leuchtdichte des hellen Bereichs (B) in einem vorgegebenen Muster angeordnet sind; eine Bilderfassungseinheit (10), die so konfiguriert ist, dass sie ein erfasstes Bild durch Erfassen eines Bildes von wenigstens einem Teil eines mit der Musterbeleuchtung (S1) bestrahlten Bereichs des Messobjekts erfasst; eine Speichereinheit (30), die eine Korrekturdatenbank (32e, 32f, 32g, 32h) umfasst, die einen Korrekturwert enthält und als eine Intra-Muster-Positionsvariable eine Position innerhalb des hellen Bereichs (B) oder des dunklen Bereichs (G) in dem erfassten Bild verwendet; und eine Steuerverarbeitungseinheit (40b), wobei das Programm umfasst:

einen Bilderfassungsvorgang (S103) bestehend in der Erfassung eines erfassten Bildes durch Erfassen, mittels der Bilderfassungseinheit (10), eines Bildes von wenigstens einem Teil eines mit der Musterbeleuchtung (S1) bestrahlten Bereichs des Messobjekts;

einen Defektkandidatenerfassungsvorgang (S105) bestehend in der Erfassung eines Defektkandidaten, der möglicherweise ein Defekt ist, auf der Grundlage des erfassten Bildes;

einen Intra-Muster-Positionserfassungsvorgang (S1062) bestehend in der Erfassung von Intra-Muster-Positionsinformationen, die Informationen bezüglich einer Position des Defektkandidaten innerhalb des hellen Bereichs (B) oder des dunklen Bereichs (G) in dem erfassten Bild sind;

einen Identifizierungswerterfassungsvorgang (S109) bestehend in der Erfassung einer Leuchtdichte des erfassten Bildes und eines Leuchtdichtekontrasts, der verwendet wird, um einen Defekt des Defektkandidaten zu identifizieren,

wobei der Leuchtdichtekontrast eine Änderungsrate zwischen der Leuchtdichte des Defektkandidaten und der Leuchtdichte eines Randbereichs des Defektkandidaten ist;

einen Korrekturwerterfassungsvorgang bestehend in der Erfassung eines Korrekturwerts, der den Intra-Muster-Positionsinformationen entspricht, durch Bezugnahme auf die Korrekturdatenbank (32e, 32f, 32g, 32h);

einen Korrekturvorgang (S111) bestehend in der Korrektur entweder des Leuchtdichtekontrasts oder eines Schwellenwerts auf der Grundlage des Korrekturwerts; und

einen Identifizierungsvorgang (S112) bestehend in der Identifizierung, ob der Defektkandidat ein Defekt ist oder nicht, durch Vergleichen des korrigierten Leuchtdichtekontrasts mit dem nicht korrigierten Schwellenwert oder Vergleichen des nicht korrigierten Leuchtdichtekontrasts mit dem korrigierten Schwellenwert.

## Revendications

1. Procédé d'identification de défaut mis en œuvre par ordinateur consistant à identifier la présence ou l'absence d'un défaut sur une surface d'un objet de mesure en capturant, à l'aide d'une unité de capture d'image (10), une image de la surface de l'objet de mesure irradiée par un éclairage à motif (S1) où une partie claire (B) et une partie sombre (G) ayant une luminance inférieure à la luminance de la partie claire (B) sont disposées selon un motif prédéterminé, le procédé comprenant:

   un processus de capture d'image (S103) consistant à acquérir une image capturée en capturant, via l'unité de capture d'image (10), une image d'au moins une partie d'une région de l'objet de mesure irradiée par l'éclairage à motif (S1) ;

   un processus de détection de défaut potentiel (S105) consistant à détecter un défaut potentiel susceptible d'être un défaut sur la base de l'image capturée ;

   un processus d'acquisition d'informations de forme (S107) consistant à acquérir des informations de forme qui sont des informations d'une forme par rapport à l'unité de capture d'images (10) quant à une position sur une surface de l'objet de mesure où un défaut potentiel est détecté ;

   un processus d'acquisition de valeur d'identification (S109) consistant à acquérir une luminance de l'image capturée et un contraste de luminance qui est utilisé pour identifier un défaut du défaut potentiel, où le contraste de luminance est un taux de changement entre la luminance du défaut potentiel et la luminance d'une périphérie du défaut potentiel ;

   un processus d'acquisition de valeur de correction (S110) consistant à acquérir une valeur de correction correspondant aux informations de forme en se référant à une base de données de correction (32) comprenant une valeur de correction en utilisant, en tant que variable de forme, une forme de la surface de l'objet de mesure par rapport à l'unité de capture d'images (10) ;

   un processus de correction (S111) consistant à corriger ou le contraste de luminance ou une valeur seuil sur la base de la valeur de correction ; et

   un processus d'identification (S112) consistant à identifier si oui ou non le défaut potentiel est un défaut en comparant le contraste de luminance corrigé à la valeur seuil non corrigée ou en comparant le contraste de luminance non corrigé à la valeur seuil corrigée.

2. Procédé d'identification de défaut selon la revendication 1, dans lequel la base de données de correction (32) utilise, en tant que la variable de forme, au moins l'un des éléments suivants : une distance entre l'unité de capture d'images (10) et la surface de l'objet de mesure, un angle par rapport à l'unité de capture d'images (10) et une distance d'écart d'une position de focus, et la base de données de correction (32) comprend, en tant que valeur de correction, un ratio du contraste de luminance au moment de la présence du défaut dans une forme indiquée par la variable de forme par rapport au contraste de luminance au moment de la présence du défaut dans une forme de référence, ou dans lequel

   la base de données de correction (32) comprend en outre, en tant que la variable de forme, une position dans l'image capturée, et

   dans le processus d'acquisition de valeur de correction (S110), une position d'un défaut potentiel dans l'image capturée est acquise, et la valeur de correction est également acquise en utilisant les informations de forme y compris la position acquise du défaut potentiel, où

la base de données de correction (32) comprend en outre, en tant que la variable de forme, une position d'un défaut dans la partie claire (B) ou la partie sombre (G) comprises dans l'image capturée, et

dans le processus d'acquisition de valeur de correction (S110), une position d'un défaut potentiel dans la partie claire (B) ou la partie sombre (G) est acquise, et la valeur de correction est également acquise en utilisant les informations de forme y compris la position acquise du défaut potentiel,

comprenant en outre un processus de normalisation (S108) consistant à normaliser l'image capturée en se référant à une base de données de normalisation (31) utilisée pour normaliser l'image capturée,

où un contraste de luminance est acquis sur la base de l'image capturée normalisée dans le processus d'acquisition de valeur d'identification (S109), où la base de données de normalisation (31) comprend un paramètre pour éliminer le bruit, un paramètre pour trouver une valeur représentative d'une partie claire (B), un paramètre pour trouver une valeur représentative d'une partie sombre (G), et un paramètre pour trouver une valeur représentative du défaut potentiel, où

dans le processus de correction (S111) et le processus d'identification (S112), une valeur seuil est acquise à partir d'une base de données de valeurs seuil (34) comprenant une valeur seuil pour chaque grade de défaut déterminé sur la base d'une taille du défaut, et

dans le processus de correction (S111) et le processus d'identification (S112), le grade de défaut est déterminé sur la base d'une position d'un défaut potentiel dans un objet de mesure, et une valeur seuil est acquise sur la base du grade de défaut déterminé.

3. Procédé d'identification de défaut mis en œuvre par ordinateur consistant à identifier la présence ou l'absence d'un défaut sur une surface d'un objet de mesure en capturant, à l'aide d'une unité de capture d'images (10), une image de la surface de l'objet de mesure irradiée par un éclairage à motif (S1) où une partie claire (B) et une partie sombre (G) ayant une luminance inférieure à la luminance de la partie claire (B) sont disposées selon un motif prédéterminé, le procédé comprenant :

un processus de capture d'image (S103) consistant à acquérir une image capturée en capturant, via l'unité de capture d'image (10), une image d'au moins une partie d'une région de l'objet de mesure irradiée par l'éclairage à motif (S1) ;

un processus de détection de défaut potentiel (S105) consistant à détecter un défaut potentiel susceptible d'être un défaut sur la base de l'image capturée ;

un processus d'acquisition de position intra-image (S1061) consistant à acquérir des informations de position intra-image qui sont des informations relatives à une position du défaut potentiel dans l'image capturée ;

un processus d'acquisition de valeur d'identification (S109) consistant à acquérir une luminance de l'image capturée et un contraste de luminance qui est utilisé pour identifier un défaut du défaut potentiel ;

où le contraste de luminance est un taux de changement entre la luminance du défaut potentiel et la luminance d'une périphérie du défaut potentiel ;

un processus d'acquisition de valeur de correction (S110) consistant à acquérir une valeur de correction correspondant aux informations de position intra-image en se référant à une base de données de correction (32a, 32b, 32c, 32d) comprenant une valeur de correction en utilisant, en tant que variable de position intra-image, une position dans l'image capturée ;

un processus de correction (S111) consistant à corriger ou le contraste de luminance ou une valeur seuil sur la base de la valeur de correction ; et

un processus d'identification (S112) consistant à identifier si oui ou non le défaut potentiel est un défaut en comparant le contraste de luminance corrigé à la valeur seuil non corrigée ou en comparant le contraste de luminance non corrigé à la valeur seuil corrigée.

4. Procédé d'identification de défaut selon la revendication 3, dans lequel, dans la base de données de correction (32a, 32b), des régions divisées sont définies en divisant l'image capturée en forme de treillis, et chacune des régions divisées est utilisée comme la variable de position intra-image, ou dans lequel, dans la base de données de correction (32c), une distance et un angle par rapport à un point de référence prescrit dans l'image capturée sont utilisés comme les variables de position intra-image, où

la base de données de correction (32d) comprend en outre, en tant que la variable de position intra-image, une forme de la surface de l'objet de mesure par rapport à l'unité de capture d'images (10), et

dans le processus d'acquisition de valeur de correction (S110), une forme d'une partie où le défaut potentiel est détecté sur la surface de l'objet de mesure est acquise, et la valeur de correction est également acquise en utilisant les informations de position intra-image comprenant la forme acquise du défaut potentiel, où la base de données de correction (32a, 32b, 32c, 32d) comprend en outre, en tant que la variable de position intra-image, une position d'un défaut dans la partie claire (B) ou la partie sombre (G) comprises dans l'image capturée, et

dans le processus d'acquisition de valeur de correction (S110), une position d'un défaut potentiel dans la partie claire (B) ou la partie sombre (G) est acquise, et la valeur de correction est également acquise en utilisant les informations de position intra-image comprenant la position acquise du défaut potentiel,

comprenant en outre un processus de normalisation (S108) consistant à normaliser l'image capturée en se référant à une base de données de normalisation (31) utilisée pour normaliser l'image capturée,

où un contraste de luminance est acquis sur la base de l'image capturée normalisée dans le processus d'acquisition de valeur d'identification (S109), où la base de données de normalisation (31) comprend un paramètre pour éliminer le bruit, un paramètre pour trouver une valeur représentative d'une partie claire (B), un paramètre pour trouver une valeur représentative d'une partie sombre (G), et un paramètre pour trouver une valeur représentative du défaut potentiel, où

dans le processus de correction (S111) et le processus d'identification (S112), une valeur seuil est acquise à partir d'une base de données de valeurs seuil (34) comprenant une valeur seuil pour chaque grade de défaut déterminé sur la base d'une taille du défaut, et

dans le processus de correction (S111) et le processus d'identification (S112), le grade de défaut est déterminé sur la base d'une position d'un défaut potentiel dans un objet de mesure, et une valeur seuil est acquise sur la base du grade de défaut déterminé.

5. Procédé d'identification de défaut mis en œuvre par ordinateur consistant à identifier la présence ou l'absence d'un défaut sur une surface d'un objet de mesure en capturant, à l'aide d'une unité de capture d'images (10), une image de la surface de l'objet de mesure irradiée par un éclairage à motif (S1) où une partie claire (B) et une partie sombre (G) ayant une luminance inférieure à la luminance de la partie claire (B) sont disposées selon un motif prédéterminé, le procédé comprenant :

un processus de capture d'image (S103) consistant à acquérir une image capturée en capturant, via l'unité de capture d'image (10), une image d'au moins une partie d'une région de l'objet de mesure irradiée par l'éclairage à motif (S1) ;

un processus de détection de défaut potentiel (S105) consistant à détecter un défaut potentiel susceptible d'être un défaut sur la base de l'image capturée ;

un processus d'acquisition de position intra-motif (S1062) consistant à acquérir des informations de position intra-motif qui sont des informations relatives à une position du défaut potentiel à l'intérieur de la partie claire (B) ou de la partie sombre (G) dans l'image capturée ;

un processus d'acquisition de valeur d'identification (S109) consistant à acquérir une luminance de l'image capturée et un contraste de luminance qui est utilisé pour identifier un défaut du défaut potentiel ;

où le contraste de luminance est un taux de changement entre la luminance du défaut potentiel et la luminance d'une périphérie du défaut potentiel ;

un processus d'acquisition de valeur de correction (S110) consistant à acquérir une valeur de correction correspondant aux informations de position intra-motif en se référant à une base de données de correction (32e, 32f, 32g, 32h) comprenant une valeur de correction en utilisant, en tant que variable de position intra-motif, une position à l'intérieur de la partie claire (B) ou de la partie sombre (G) dans l'image capturée ;

un processus de correction (S111) consistant à corriger ou le contraste de luminance ou la valeur seuil sur la base de la valeur de correction ; et

un processus d'identification (S112) consistant à identifier si oui ou non le défaut potentiel est un défaut en comparant le contraste de luminance corrigé à la valeur seuil non corrigée ou en comparant le contraste de luminance non corrigé à la valeur seuil corrigée.

6. Procédé d'identification de défaut selon la revendication 5, dans lequel, dans la base de données de correction (32e, 32f), des régions divisées sont définies en divisant la partie claire (B) ou la partie sombre (G) en forme de treillis, et chacune des régions divisées est utilisée comme la variable de position intra-motif, ou dans lequel, dans la base de données de correction (32g), une distance et un angle par rapport à un point de référence prescrit à l'intérieur de la partie claire (B) ou de la partie sombre (G) sont utilisés comme variables de position intra-motif, où

la base de données de correction (32h) comprend en outre, en tant que la variable de position intra-motif, une forme de la surface de l'objet de mesure par rapport à l'unité de capture d'images (10), et

dans le processus d'acquisition de valeur de correction (S110), une forme d'une partie où le défaut potentiel est détecté sur la surface de l'objet de mesure est acquise, et la valeur de correction est également acquise en utilisant les informations de position intra-motif comprenant la forme acquise du défaut potentiel, où

la base de données de correction (32e, 32f, 32g, 32h) comprend en outre une position dans l'image capturée en tant que la variable de position intra-motif, et

dans le processus d'acquisition de valeur de correction, une position d'un défaut potentiel dans l'image capturée est acquise, et la valeur de correction est également acquise en utilisant les informations de position intra-motif comprenant la position acquise du défaut potentiel, comprenant en outre un processus de normalisation (S108) consistant à normaliser l'image capturée en se référant à une base de données de normalisation (31) utilisée pour normaliser l'image capturée,

où un contraste de luminance est acquis sur la base de l'image capturée normalisée dans le processus d'acquisition de valeur d'identification (S109), où la base de données de normalisation (31) comprend un paramètre pour éliminer le bruit, un paramètre pour trouver une valeur représentative d'une partie claire (B), un paramètre pour trouver une valeur représentative d'une partie sombre (G), et un paramètre pour trouver une valeur représentative du défaut potentiel, où

dans le processus de correction (S111) et le processus d'identification (S112), une valeur seuil est acquise à partir d'une base de données de valeurs seuil (34) comprenant une valeur seuil pour chaque grade de défaut déterminé sur la base d'une taille du défaut, et

dans le processus de correction (S111) et le processus d'identification (S112), le grade de défaut est déterminé sur la base d'une position d'un défaut potentiel dans un objet de mesure, et une valeur seuil est acquise sur la base du grade de défaut déterminé.

**7.** Dispositif d'identification de défaut (A1) comprenant

une unité d'éclairage (20) configurée pour irradier une surface d'un objet de mesure avec un éclairage à motif (S1) dans lequel une partie claire (B) et une partie sombre (G) ayant une luminance inférieure à la luminance de la partie claire (B) sont disposées selon un motif prédéterminé ;

une unité de capture d'images (10) configurée pour acquérir une image capturée en capturant une image d'au moins une partie d'une région de l'objet de mesure irradiée par l'éclairage à motif (S1) ;

une unité de stockage (30) configurée pour stocker une base de données de correction (32) comprenant une valeur de correction utilisant, comme variable de forme, une forme de la surface de l'objet de mesure par rapport à l'unité de capture d'images (10) ; et

une unité de traitement de contrôle (40),

où l'unité de traitement de contrôle (40) comprend :

une unité de détection de défaut potentiel (42) configurée pour détecter un défaut potentiel susceptible d'être un défaut sur la base de l'image capturée ;

une unité d'acquisition d'informations de forme (44) configurée pour acquérir des informations de forme qui sont des informations d'une forme par rapport à l'unité de capture d'images (10) quant à une position sur la surface de l'objet de mesure où le défaut potentiel est détecté ;

une unité d'acquisition de valeur d'identification (46) configurée pour acquérir une luminance de l'image capturée et un contraste de luminance qui est utilisé pour identifier un défaut du défaut potentiel, où le contraste de luminance est un taux de changement entre la luminance du défaut potentiel et la luminance d'une périphérie du défaut potentiel ;

une unité d'acquisition de valeur de correction (47) configurée pour acquérir une valeur de correction correspondant aux informations de forme en se référant à la base de données de correction (32) ;

une unité de correction (48) configurée pour corriger ou le contraste de luminance ou une valeur seuil sur la base de la valeur de correction ; et

une unité d'identification (49) configurée pour identifier si oui ou non le défaut potentiel est un défaut en comparant le contraste de luminance corrigé à la valeur seuil non corrigée ou en comparant le contraste de luminance non corrigé à la valeur seuil corrigée.

**8.** Dispositif d'identification de défaut (A1) selon la revendication 7, dans lequel la base de données de correction (32) utilise, en tant que la variable de forme, au moins l'un des éléments suivants : une distance entre l'unité de capture d'images (10) et la surface de l'objet de mesure, un angle par rapport à l'unité de capture d'images (10) et une distance d'écart d'une position de focus, et la base de données de correction (32) comprend, en tant que valeur de correction, un ratio du contraste de luminance au moment de la présence du défaut dans une forme indiquée par la variable de forme par rapport au contraste de luminance au moment de la présence du défaut dans une forme de référence, ou dans lequel

la base de données de correction (32) comprend en outre, en tant que la variable de forme, une position dans l'image capturée, et

l'unité d'acquisition de valeur de correction (47) acquiert une position d'un défaut potentiel dans l'image capturée et acquiert également la valeur de correction en utilisant les informations de forme y compris la position acquise du défaut potentiel, où

la base de données de correction (32) comprend en outre, en tant que la variable de forme, une distance d'une limite entre la partie claire (B) ou la partie sombre (G) à un défaut potentiel, et

l'unité d'acquisition de valeur de correction (47) acquiert une position du défaut potentiel dans la partie claire (B) ou la partie sombre (G) et acquiert également la valeur de correction en utilisant les informations de forme y compris la position acquise du défaut potentiel, où

l'unité de stockage (30) comprend en outre une base de données de normalisation (31) comprenant un paramètre pour normaliser la luminance dans l'image capturée,

l'unité de traitement de contrôle (40, 40a, 40b) comprend en outre une unité de normalisation (45) configurée pour normaliser l'image capturée en se référant à la base de données de normalisation (31), et

l'unité d'acquisition de valeur d'identification (46) acquiert le contraste de luminance sur la base d'une image capturée normalisée, où la base de données de normalisation (31) comprend un paramètre pour éliminer le bruit, un paramètre pour trouver une valeur représentative d'une partie claire (B), un paramètre pour trouver une valeur représentative d'une partie sombre (G), et un paramètre pour trouver une valeur représentative du défaut potentiel, où

l'unité de stockage (30) comprend en outre une base de données de valeurs seuils (34) comprenant une valeur seuil pour chaque grade de défaut déterminé sur la base d'une taille du défaut, et

l'unité de correction (48) et l'unité d'identification (49) déterminent le grade de défaut sur la base d'une position d'un défaut potentiel dans un objet de mesure, et acquièrent en outre une valeur seuil sur la base du grade de défaut déterminé.

9.  Dispositif d'identification de défaut (A2) comprenant

une unité d'éclairage (20) configurée pour irradier une surface d'un objet de mesure avec un éclairage à motif (S1) dans lequel une partie claire (B) et une partie sombre (G) ayant une luminance inférieure à la luminance de la partie claire (B) sont disposées selon un motif prédéterminé ;

une unité de capture d'images (10) configurée pour acquérir une image capturée en capturant une image d'au moins une partie d'une région de l'objet de mesure irradiée par l'éclairage à motif (S1) ;

une unité de stockage (30) comprenant une base de données de correction (32a, 32b, 32c, 32d) comprenant une valeur de correction et utilisant, comme variable de position intra-image, une position dans l'image capturée ; et

une unité de traitement de contrôle (40a),

où l'unité de traitement de contrôle (40a) comprend :

une unité de détection de défaut potentiel (42) configurée pour détecter un défaut potentiel susceptible d'être un défaut sur la base de l'image capturée ;

une unité d'acquisition de position intra-image (43a) configurée pour acquérir des informations de position intra-image qui sont des informations relatives à une position du défaut potentiel dans l'image capturée ;

une unité d'acquisition de valeur d'identification (46) configurée pour acquérir une luminance de l'image capturée et un contraste de luminance qui est utilisé pour identifier un défaut du défaut potentiel ;

où le contraste de luminance est un taux de changement entre la luminance du défaut potentiel et la luminance d'une périphérie du défaut potentiel ;

une unité d'acquisition de valeur de correction (47) configurée pour acquérir une valeur de correction correspondant aux informations de position intra-image en se référant à la base de données de correction (32a, 32b, 32c, 32d) ;

une unité de correction (48) configurée pour corriger ou le contraste de luminance ou une valeur seuil sur la base de la valeur de correction ; et

une unité d'identification (49) configurée pour identifier si oui ou non le défaut potentiel est un défaut en comparant le contraste de luminance corrigé à la valeur seuil non corrigée ou en comparant le contraste de luminance non corrigé à la valeur seuil corrigée.

10. Dispositif d'identification de défaut (A2) selon la revendication 9, dans lequel, dans la base de données de correction (32a, 32b), des régions divisées sont définies en divisant l'image capturée en forme de treillis, et chacune des régions divisées est utilisée comme la variable de position intra-image, ou dans lequel, dans la base de données de correction (32c), une distance et un angle par rapport à un point de référence prescrit à l'intérieur de l'image capturée sont utilisés comme variables de position intra-image, où

la base de données de correction (32d) comprend en outre, en tant que la variable de position intra-image, une forme de la surface de l'objet de mesure par rapport à l'unité de capture d'images (10), et

l'unité d'acquisition de valeur de correction (47) acquiert une forme d'une partie où le défaut potentiel est détecté sur la surface de l'objet de mesure, et acquiert également la valeur de correction en utilisant les informations de position intra-image comprenant la forme acquise du défaut potentiel, où

la base de données de correction (32a, 32b, 32c, 32d) comprend en outre, en tant que la variable de position intra-image, la position d'un défaut dans la partie claire (B) ou la partie sombre (G) comprises dans l'image capturée, et

l'unité d'acquisition de valeur de correction (47) acquiert une position d'un défaut potentiel dans la partie claire (B) ou la partie sombre (G), et acquiert également la valeur de correction en utilisant les informations de position intra-image comprenant la position acquise du défaut potentiel.

11. Dispositif d'identification de défaut (A3) comprenant

une unité d'éclairage (20) configurée pour irradier une surface d'un objet de mesure avec un éclairage à motif (S1) où une partie claire (B) et une partie sombre (G) ayant une luminance inférieure à la luminance de la partie claire (B) sont disposées selon un motif prédéterminé ;

une unité de capture d'images (10) configurée pour acquérir une image capturée en capturant une image d'au moins une partie d'une région de l'objet de mesure irradiée par l'éclairage à motif (S1) ;

une unité de stockage (30) comprenant une base de données de correction (32e, 32f, 32g, 32h) comprenant une valeur de correction et utilisant, comme variable de position intra-motif, une position à l'intérieur de la partie lumineuse (B) ou de la partie sombre (G) ; et

une unité de traitement de contrôle (40b),

où l'unité de traitement de contrôle (40b) comprend :

une unité de détection de défaut potentiel (42) configurée pour détecter un défaut potentiel susceptible d'être un défaut sur la base de l'image capturée ;

une unité d'acquisition de position intra-motif (43b) configurée pour acquérir des informations de position intra-motif qui sont des informations relatives à une position du défaut potentiel dans la partie claire (B) ou la partie sombre (G) dans l'image capturée ;

une unité d'acquisition de valeur d'identification (46) configurée pour acquérir une luminance de l'image capturée et un contraste de luminance qui est utilisé pour identifier un défaut du défaut potentiel ;

où le contraste de luminance est un taux de changement entre la luminance du défaut potentiel et la luminance d'une périphérie du défaut potentiel ;

une unité d'acquisition de valeur de correction (47) configurée pour acquérir une valeur de correction correspondant aux informations de position intra-motif en se référant à la base de données de correction (32e, 32f, 32g, 32h) ;

une unité de correction (48) configurée pour corriger ou le contraste de luminance ou une valeur seuil sur la base de la valeur de correction ; et

une unité d'identification (49) configurée pour identifier si oui ou non le défaut potentiel est un défaut en comparant le contraste de luminance corrigé à la valeur seuil non corrigée ou en comparant le contraste de luminance non corrigé à la valeur seuil corrigée.

12. Dispositif d'identification de défaut (A3) selon la revendication 11, dans lequel, dans la base de données de correction (32e, 32f), des régions divisées sont définies en divisant la partie claire (B) ou la partie sombre (G) en forme de treillis, et chacune des régions divisées est utilisée comme la variable de position intra-motif, ou dans lequel, dans la base de données de correction (32g), une distance et un angle par rapport à un point de référence prescrit à l'intérieur de la partie claire (B) ou de la partie sombre (G) sont utilisés comme variables de position intra-motif, où

la base de données de correction (32h) comprend en outre, en tant que la variable de position intra-motif, une forme de la surface de l'objet de mesure par rapport à l'unité de capture d'images (10), et

l'unité d'acquisition de valeur de correction (47) acquiert une forme d'une partie où le défaut potentiel est détecté sur la surface de l'objet de mesure, et acquiert également la valeur de correction en utilisant les informations de position intra-motif comprenant la forme acquise du défaut potentiel, où

la base de données de correction (32e, 32f, 32g, 32h) comprend en outre une position d'un défaut dans l'image capturée en tant que la variable de position intra-motif, et

l'unité d'acquisition de valeur de correction (47) acquiert une position d'un défaut potentiel dans l'image capturée, et acquiert également une valeur de correction en utilisant les informations de position intra-motif comprenant la position acquise du défaut potentiel, où

l'unité de stockage (30) comprend en outre une base de données de normalisation (31) comprenant un paramètre pour normaliser la luminance dans l'image capturée,

l'unité de traitement de contrôle (40, 40a, 40b) comprend en outre une unité de normalisation (45) configurée pour normaliser l'image capturée en se référant à la base de données de normalisation (31), et

l'unité d'acquisition de valeur d'identification (46) acquiert le contraste de luminance sur la base d'une image capturée normalisée, où la base de données de normalisation (31) comprend un paramètre pour éliminer le bruit, un paramètre pour trouver une valeur représentative d'une partie claire (B), un paramètre pour trouver une valeur représentative d'une partie sombre (G), et un paramètre pour trouver une valeur représentative du défaut potentiel, où

l'unité de stockage (30) comprend en outre une base de données de valeurs seuils (34) comprenant une valeur seuil pour chaque grade de défaut déterminé sur la base d'une taille du défaut, et

l'unité de correction (48) et l'unité d'identification (49) déterminent le grade de défaut sur la base d'une position d'un défaut potentiel dans un objet de mesure, et acquièrent en outre une valeur seuil sur la base du grade de défaut déterminé.

13. Programme d'identification de défaut exécuté dans un dispositif d'identification de défaut (A1) comprenant : une unité d'éclairage (20) configurée pour émettre un éclairage à motif (S1) dans lequel une partie claire (B) et une partie sombre (G) ayant une luminance inférieure à la luminance de la partie claire (B) sont disposées selon un motif prédéterminé ; une unité de capture d'image (10) configurée pour capturer une image d'une surface d'un objet de mesure irradiée par l'éclairage à motif (S1) ; une unité de stockage (30) comprenant une base de données de normalisation (31) comprenant des paramètres pour éliminer le bruit et trouver la luminance dans l'image capturée et une base de données de correction (32) comprenant une valeur de correction et utilisant, comme variable de forme, une forme d'une surface de l'objet de mesure par rapport à l'unité de capture d'image (10) ; et une unité de traitement de contrôle (40), le programme comprenant :

un processus de capture d'image (S103) consistant à acquérir une image capturée en capturant, via l'unité de capture d'image (10), une image d'au moins une partie d'une région de l'objet de mesure irradiée par l'éclairage à motif (S1) ;

un processus de détection de défaut potentiel (S105) consistant à détecter un défaut potentiel susceptible d'être un défaut sur la base de l'image capturée ;

un processus d'acquisition de valeur d'identification (S109) consistant à acquérir une luminance de l'image capturée et un contraste de luminance qui est utilisé pour identifier un défaut du défaut potentiel ;

où le contraste de luminance est un taux de changement entre la luminance du défaut potentiel et la luminance d'une périphérie du défaut potentiel ;

un processus d'acquisition d'informations de forme (S107) consistant à acquérir des informations de forme qui sont des informations relatives à une forme par rapport à l'unité de capture d'images (10) quant à une position sur la surface de l'objet de mesure où un défaut potentiel est détecté ;

un processus d'acquisition de valeur de correction (S110) consistant à acquérir une valeur de correction correspondant aux informations de forme en se référant à une base de données de correction (32) comprenant une valeur de correction et utilisant, comme variable de forme, une forme de la surface de l'objet de mesure par rapport à l'unité de capture d'images (10) ;

un processus de correction (S111) consistant à corriger ou le contraste de luminance ou une valeur seuil sur la base de la valeur de correction ; et

un processus d'identification (S112) permettant d'identifier si oui ou non le défaut potentiel est un défaut en comparant le contraste de luminance corrigé à la valeur seuil non corrigée ou en comparant le contraste de luminance non corrigé à la valeur seuil corrigée.

14. Programme d'identification de défaut exécuté dans un dispositif d'identification de défaut (A2) comprenant : une unité d'éclairage (20) configurée pour émettre un éclairage à motif (S1) dans lequel une partie claire (B) et une partie sombre (G) ayant une luminance inférieure à la luminance de la partie claire (B) sont disposées selon un motif prédéterminé ; une unité de capture d'image (10) configurée pour capturer une image d'une surface d'un objet de mesure irradiée par l'éclairage à motif (S1) ; une unité de stockage (30) comprenant une base de données de correction (32a, 32b, 32c, 32d) comprenant une valeur de correction et utilisant, comme variable de position intra-image, une position dans l'image capturée ; et une unité de traitement de contrôle (40a), le programme comprenant :

un processus de capture d'image (S103) consistant à acquérir une image capturée en capturant, via l'unité de capture d'image (10), une image d'au moins une partie d'une région de l'objet de mesure irradiée par l'éclairage à motif (S1) ;

un processus de détection de défaut potentiel (S105) consistant à détecter un défaut potentiel susceptible d'être un défaut sur la base de l'image capturée ;

un processus d'acquisition de position intra-image (S1061) consistant à acquérir des informations de position intra-image qui sont des informations relatives à une position du défaut potentiel dans l'image capturée ;

un processus d'acquisition de valeur d'identification (S109) consistant à acquérir une luminance de l'image capturée et un contraste de luminance qui est utilisé pour identifier un défaut du défaut potentiel,

où le contraste de luminance est un taux de changement entre la luminance du défaut potentiel et la luminance d'une périphérie du défaut potentiel ;

un processus d'acquisition de valeur de correction (S110) consistant à acquérir une valeur de correction correspondant aux informations de position intra-image en se référant à la base de données de correction (32a, 32b, 32c, 32d) ;

un processus de correction (S111) consistant à corriger ou le contraste de luminance ou une valeur seuil sur la base de la valeur de correction ; et

un processus d'identification (S112) consistant à identifier si oui ou non le défaut potentiel est un défaut en comparant le contraste de luminance corrigé à la valeur seuil non corrigée ou en comparant le contraste de luminance non corrigé à la valeur seuil corrigée.

**15.** Programme d'identification de défaut exécuté dans un dispositif d'identification de défaut (A3) comprenant : une unité d'éclairage (20) configurée pour irradier une surface d'un objet de mesure avec un éclairage à motif (S1) dans lequel une partie claire (B) et une partie sombre (G) ayant une luminance inférieure à la luminance de la partie claire (B) sont disposées selon un motif prédéterminé ; une unité de capture d'images (10) configurée pour acquérir une image capturée en capturant une image d'au moins une partie d'une région de l'objet de mesure irradiée avec l'éclairage à motif (S1) ; une unité de stockage (30) comprenant une base de données de correction (32e, 32f, 32g, 32h) comprenant une valeur de correction et utilisant, comme variable de position intra-motif, une position à l'intérieur de la partie claire (B) ou de la partie sombre (G) dans l'image capturée ; et une unité de traitement de contrôle (40b), le programme comprenant :

un processus de capture d'image (S103) consistant à acquérir une image capturée en capturant, via l'unité de capture d'image (10), une image d'au moins une partie d'une région de l'objet de mesure irradiée par l'éclairage à motif (S1) ;

un processus de détection de défaut potentiel (S105) consistant à détecter un défaut potentiel susceptible d'être un défaut sur la base de l'image capturée ;

un processus d'acquisition de position intra-motif (S1062) consistant à acquérir des informations de position intra-motif qui sont des informations relatives à une position du défaut potentiel à l'intérieur de la partie claire (B) ou de la partie sombre (G) dans l'image capturée ;

un processus d'acquisition de valeur d'identification (S109) consistant à acquérir une luminance de l'image capturée et un contraste de luminance qui est utilisé pour identifier un défaut du défaut potentiel,

où le contraste de luminance est un taux de changement entre la luminance du défaut potentiel et la luminance d'une périphérie du défaut potentiel ;

un processus d'acquisition de valeur de correction consistant à acquérir une valeur de correction correspondant aux informations de position intra-motif en se référant à la base de données de correction (32e, 32f, 32g, 32h) ;

un processus de correction (S111) consistant à corriger ou le contraste de luminance ou une valeur seuil sur la base de la valeur de correction ; et

un processus d'identification (S112) consistant à identifier si oui ou non le défaut potentiel est un défaut en comparant le contraste de luminance corrigé à la valeur seuil non corrigée ou en comparant le contraste de luminance non corrigé à la valeur seuil corrigée.

# FIG. 1

# FIG. 2

A1

**40** CONTROL PROCESSING UNIT

**41** IMAGE CAPTURING POSITION DETECTION UNIT

**42** DEFECT CANDIDATE DETECTION UNIT

**43** POSITION ACQUISITION UNIT

**44** SHAPE INFORMATION ACQUISITION UNIT

**45** NORMALIZATION UNIT

**46** IDENTIFYING VALUE ACQUISITION UNIT

**47** CORRECTION VALUE ACQUISITION UNIT

**48** CORRECTION UNIT

**49** IDENTIFYING UNIT

**10** IMAGE CAPTURING UNIT

**20** ILLUMINATION UNIT
**21** LIGHT SOURCE UNIT

**50** OUTPUT UNIT

**60** CARRYING UNIT

**30** STORAGE UNIT

**31** NORMALIZATION DATABASE

**32** CORRECTION DATABASE

**33** SHAPE DATABASE

# FIG. 3

# FIG. 4

## FIG. 5

# FIG. 6

## FIG. 7

## FIG. 8

# FIG. 9

31

NORMALIZATION DATABASE

NOISE REMOVAL PARAMETER

MOVED AMOUNT OF MOVEMENT AVERAGE

CUTOFF FREQUENCY

~311

BRIGHT PORTION FINDING PARAMETER

| AVERAGE VALUE CALCULATION METHOD | MEDIAN VALUE CALCULATION METHOD |
| MODE VALUE CALCULATION METHOD | WEIGHTING COEFFICIENT |
| MAXIMUM VALUE CALCULATION METHOD | WEIGHT ARITHMETIC EXPRESSION |
| MINIMUM VALUE CALCULATION METHOD | |

~312

DARK PORTION FINDING PARAMETER

| AVERAGE VALUE CALCULATION METHOD | MEDIAN VALUE CALCULATION METHOD |
| MODE VALUE CALCULATION METHOD | WEIGHTING COEFFICIENT |
| MAXIMUM VALUE CALCULATION METHOD | WEIGHT ARITHMETIC EXPRESSION |
| MINIMUM VALUE CALCULATION METHOD | |

~313

CHANGED PORTION FINDING PARAMETER

| AVERAGE VALUE CALCULATION METHOD | MEDIAN VALUE CALCULATION METHOD |
| MODE VALUE CALCULATION METHOD | WEIGHTING COEFFICIENT |
| MAXIMUM VALUE CALCULATION METHOD | WEIGHT ARITHMETIC EXPRESSION |
| MINIMUM VALUE CALCULATION METHOD | |

~314

# FIG. 10

| | |
|---|---|
| DISTANCE VARIABLE Lg | |
| DISTANCE VARIABLE Ds FROM FOCUS POINT | |
| HORIZONTAL ANGLE VARIABLE Hr | |
| VERTICAL ANGLE VARIABLE Vr | |

## FIG. 11

32

Tb1

| | Ds1 | Ds2 | Ds3 | Ds4 | Ds5 | · · · · · · · |
|---|---|---|---|---|---|---|
| Lg1 | Tb11 | Tb12 | Tb13 | Tb14 | Tb15 | · · · · · · · |
| Lg2 | Tb21 | Tb22 | Tb23 | Tb24 | Tb25 | · · · · · · · |
| Lg3 | Tb31 | Tb32 | Tb33 | Tb34 | Tb35 | · · · · · · · |
| Lg4 | Tb41 | Tb42 | Tb43 | Tb44 | Tb45 | · · · · · · · |
| Lg5 | Tb51 | Tb52 | Tb53 | Tb54 | Tb55 | · · · · · · · |
| ⋮ | ⋮ | ⋮ | ⋮ | ⋮ | ⋮ | |

Tb11

| | Vr1 | Vr2 | Vr3 | Vr4 | Vr5 | · · · · · · · |
|---|---|---|---|---|---|---|
| Hr1 | CR1111 | CR1112 | CR1113 | CR1114 | CR1115 | · · · · · · · |
| Hr2 | CR1121 | CR1122 | CR1123 | CR1124 | CR1125 | · · · · · · · |
| Hr3 | CR1131 | CR1132 | CR1133 | CR1134 | CR1135 | · · · · · · · |
| Hr4 | CR1141 | CR1142 | CR1143 | CR1144 | CR1145 | · · · · · · · |
| Hr5 | CR1151 | CR1152 | CR1153 | CR1154 | CR1155 | · · · · · · · |
| ⋮ | ⋮ | ⋮ | ⋮ | ⋮ | ⋮ | |

# FIG. 12

```
                    ( START )
                       │
S101                   ▼
        ┌──────────────────────────────┐
        │  EMIT PATTERN ILLUMINATION S1 │
        └──────────────────────────────┘
                       │
S102                   ▼
              ◇ IS INSPECTION ◇
         ◇ REGION FITTED WITHIN ANGLE ◇ ──No──┐
              ◇ OF VIEW? ◇                     │
                       │Yes                     │
S103                   ▼                        │
          [ CAPTURE IMAGE ]                     │
                       │                        │
S104                   ▼                        │
        [ DETECT IMAGE CAPTURING POSITION ]     │
                       │                        │
S105                   ▼                        │
            ◇ IS THERE ANY DEFECT ◇ ──No────────┤
                 ◇ CANDIDATE? ◇                 │
                       │Yes                     │
S106                   ▼                        │
        [ ACQUIRE POSITION OF DEFECT CANDIDATE ]│
                       │                        │
S107                   ▼                        │
        [ ACQUIRE SHAPE INFORMATION ]           │
                       │                        │
S108                   ▼                        │
        [ NORMALIZE LUMINANCE ]                 │
                       │                        │
S109                   ▼                        │
        [ ACQUIRE IDENTIFYING VALUE ]           │
                       │                        │
S110                   ▼                        │
        [ ACQUIRE CORRECTION VALUE ]            │
                       │                        │
S111                   ▼                        │
        [ PERFORM CORRECTION ]                  │
                       │                        │
S112                   ▼                        │
        [ IDENTIFY DEFECT ]                     │
                       │                        │
```

S113  ◇ IS THERE ANY DEFECT? ◇ ──No──┐

│Yes

S114  [ OUTPUT DEFECT POSITION ]

S115  ◇ HAS IDENTIFICATION BEEN COMPLETED? ◇ ──No──┐

│Yes

( END )

# FIG. 13

# FIG. 14

# FIG. 15

# FIG. 16

LUMINANCE CONTRAST

Ld2
Ld1
ThS

0          Dd1                    Dd2                    DEFECT
                                                        CANDIDATE

CORRECT
THRESHOLD VALUE

CORRECTED LUMINANCE CONTRAST

Thr2
Ld2
Ld1
Thr1

0          Dd1                    Dd2                    DEFECT
                                                        CANDIDATE

## FIG. 17

| | | |
|---|---|---|
| TRANSPARENT DEFECT | | |
| ENCLOSURE DEFECT Dh | APPROXIMATE COLOR | |
| | NON-APPROXIMATE COLOR | |

# FIG. 18

THRESHOLD VALUE DATABASE 34

| RANK | R1 | R2 | R3 | R4 | R5 | R6 | R7 |
|------|----|----|----|----|----|----|----|
| THRESHOLD VALUE | Th1 | Th2 | Th3 | Th4 | Th5 | Th6 | Th7 |

# FIG. 19

35

EVALUATION DATABASE

| POSITION | | ENGINE HOOD | UPPER SIDE SURFACE | CAR-BOOT | BUMPER | LOWER SIDE SURFACE | CEILING |
|----------|---|-------------|--------------------|----------|--------|--------------------|---------|
| TRANSPARENT DEFECT | | R4 | R4 | R5 | R6 | R7 | R7 |
| ENCLOSURE DEFECT Dh | APPROXIMATE COLOR | R2 | R3 | R4 | R4 | R4 | R5 |
| | NON-APPROXIMATE COLOR | R1 | R1 | R2 | R2 | R3 | R3 |

# FIG. 20

A2

**CONTROL PROCESSING UNIT** 40a

**STORAGE UNIT** 30

IMAGE CAPTURING UNIT 10

41 IMAGE CAPTURING POSITION DETECTION UNIT

31 NORMALIZATION DATABASE

ILLUMINATION UNIT 20
21 LIGHT SOURCE UNIT

42 DEFECT CANDIDATE DETECTION UNIT

32 CORRECTION DATABASE

43a INTRA-IMAGE POSITION ACQUISITION UNIT

33 SHAPE DATABASE

OUTPUT UNIT 50

44a POSITION ACQUISITION UNIT

CARRYING UNIT 60

45 NORMALIZATION UNIT

46 IDENTIFYING VALUE ACQUISITION UNIT

47 CORRECTION VALUE ACQUISITION UNIT

48 CORRECTION UNIT

49 IDENTIFYING UNIT

## FIG. 21

## FIG. 22

## FIG. 23

Pc2

| Ar1 De2 ○ | Ar2 | Ar3 | Ar4 |
|---|---|---|---|
| Ar5 | Ar6 De1 ○ | Ar7 | Ar8 |
| Ar9 | Ar10 | Ar11 | Ar12 |
| Ar13 | Ar14 | Ar15 | Ar16 |

## FIG. 24

32a

| POSITION VARIABLE | Ar1 | Ar2 | Ar3 | Ar4 | Ar5 | ・・・・・・ |
|---|---|---|---|---|---|---|
| CORRECTION VALUE | CR1 | CR2 | CR3 | CR4 | CR5 | ・・・・・・ |

## FIG. 25

Pc2

Y4

○—De2

K1

De1

Y3

Y2

Y1

0

0   X1   X2   X3   X4

## FIG. 26

32b

| | 0 | X1 | X2 | X3 | X4 |
|---|---|---|---|---|---|
| Y4 | CR04 | CR14 | CR24 | CR34 | CR44 |
| Y3 | CR03 | CR13 | CR23 | CR33 | CR43 |
| Y2 | CR02 | CR12 | CR22 | CR32 | CR42 |
| Y1 | CR01 | CR11 | CR21 | CR31 | CR41 |
| 0 | CR00 | CR10 | CR20 | CR30 | CR40 |

*FIG. 27*

*FIG. 28*

32c

|       | 0    | r1   | r2   | r3   | r4   | r5   | r6   | r7   | r8   | r9   |
|-------|------|------|------|------|------|------|------|------|------|------|
| 0     | CU00 | CU10 | CU20 | CU30 | CU40 | CU50 | CU60 | CU70 | CU80 | CU90 |
| $\theta 1$ | —    | CU11 | CU21 | CU31 | CU41 | CU51 | CU61 | CU71 | CU81 | CU91 |
| $\theta 2$ | —    | CU12 | CU22 | CU32 | CU42 | CU52 | —    | —    | —    | —    |
| $\theta 3$ | —    | CU13 | CU23 | CU33 | CU43 | CU53 | —    | —    | —    | —    |
| $\theta 4$ | —    | CU14 | CU24 | CU34 | CU44 | CU54 | CU64 | CU74 | CU84 | CU94 |
| $\theta 5$ | —    | CU15 | CU25 | CU35 | CU45 | CU55 | CU65 | CU75 | CU85 | CU95 |
| $\theta 6$ | —    | CU16 | CU26 | CU36 | CU46 | CU56 | CU66 | CU76 | CU86 | CU96 |
| $\theta 7$ | —    | CU17 | CU27 | CU37 | CU47 | CU57 | —    | —    | —    | —    |
| $\theta 8$ | —    | CU18 | CU28 | CU38 | CU48 | CU58 | —    | —    | —    | —    |
| $\theta 9$ | —    | CU19 | CU29 | CU39 | CU49 | CU59 | CU69 | CU79 | CU89 | CU99 |

# FIG. 29

```
                    ┌─────────────┐
                    │    START    │
                    └──────┬──────┘
                           │
  S101                     ▼
         ┌──────────────────────────────────┐
         │   EMIT PATTERN ILLUMINATION S1    │◄──────────────────────┐
         └──────────────────┬───────────────┘                        │
                            │                                         │
  S102                     ▼                                         │
              ╱──────────────────────────╲          No               │
            ╱      IS INSPECTION           ╲────────────────────┐     │
           ╱  REGION FITTED WITHIN ANGLE    ╲                   │     │
            ╲       OF VIEW?               ╱                    │     │
              ╲──────────────────────────╱                     │     │
                        │ Yes                                   │     │
                        ▼                                       │     │
  S103 ─┐    ┌──────────────────────┐                          │     │
         └──│   CAPTURE IMAGE        │                          │     │
             └──────────┬───────────┘                          │     │
                        │                                       │     │
  S104 ─┐    ┌──────────▼─────────────────────┐                │     │
         └──│  DETECT IMAGE CAPTURING POSITION │               │     │
             └──────────┬─────────────────────┘                │     │
                        │                                       │     │
  S105                 ▼                         No             │     │
              ╱──────────────────────╲──────────────────┐      │     │
            ╱   IS THERE ANY DEFECT    ╲                 │      │     │
            ╲       CANDIDATE?        ╱                  │      │     │
              ╲──────────────────────╱                   │      │     │
                        │ Yes                            │      │     │
  S1061                ▼                                 │      │     │
   ┌──────────────────────────────────────────────┐     │      │     │
   │ ACQUIRE INTRA-IMAGE POSITIONAL INFORMATION    │     │      │     │
   └──────────────────────┬───────────────────────┘     │      │     │
  S1071                   ▼                              │      │     │
   ┌──────────────────────────────────────────┐         │      │     │
   │  ACQUIRE POSITION OF DEFECT CANDIDATE     │         │      │     │
   └──────────────────────┬───────────────────┘         │      │     │
                          │                              │      │     │
  S108 ─┐   ┌─────────────▼────────────┐                 │      │     │
         └─│   NORMALIZE LUMINANCE      │     S113        │      │     │
            └─────────────┬────────────┘      ┌──────────▼──┐   │     │
                          │                   ╱──────────────╲ No│     │
  S109 ─┐   ┌─────────────▼────────────┐    ╱ IS THERE ANY    ╲──┤     │
         └─│  ACQUIRE IDENTIFYING VALUE │    ╲   DEFECT?      ╱   │     │
            └─────────────┬────────────┘      ╲──────────────╱    │     │
                          │                        │ Yes          │     │
  S110 ─┐   ┌─────────────▼────────────┐    S114 ─┐│              │     │
         └─│  ACQUIRE CORRECTION VALUE  │          └▼─────────────┐     │
            └─────────────┬────────────┘     │ OUTPUT DEFECT POSITION │ │
                          │                   └──────┬─────────────┘     │
  S111 ─┐   ┌─────────────▼────────────┐             │                   │
         └─│   PERFORM CORRECTION       │    S115    ▼                   │
            └─────────────┬────────────┘     ╱──────────────────╲  No    │
                          │                ╱  HAS IDENTIFICATION  ╲──────┘
  S112 ─┐   ┌─────────────▼────────────┐   ╲  BEEN COMPLETED?    ╱
         └─│    IDENTIFY DEFECT         │     ╲──────────────────╱
            └─────────────┬────────────┘              │ Yes
                          │                           ▼
                          └──────────────────→  ┌──────────┐
                                                 │   END    │
                                                 └──────────┘
```

# FIG. 30

CALCULATE
LUMINANCE CONTRAST

# FIG. 31

# FIG. 32

## FIG. 33  32d

**Tc**

| POSITION VARIABLE | Ar1 | Ar2 | Ar3 | Ar4 | Ar5 | · · · · · · |
|---|---|---|---|---|---|---|
| CORRECTION VALUE | Tc1 | Tc2 | Tc3 | Tc4 | Tc5 | · · · · · · |

**Tc 1 (Tci)**

| | Ds1 | Ds2 | Ds3 | Ds4 | Ds5 | · · · · · · |
|---|---|---|---|---|---|---|
| Lg1 | Tc111 | Tc112 | Tc113 | Tc114 | Tc115 | · · · · · · |
| Lg2 | Tc121 | Tc122 | Tc123 | Tc124 | Tc125 | · · · · · · |
| Lg3 | Tc131 | Tc132 | Tc133 | Tc134 | Tc135 | · · · · · · |
| Lg4 | Tc141 | Tc142 | Tc143 | Tc144 | Tc145 | · · · · · · |
| Lg5 | Tc151 | Tc152 | Tc153 | Tc154 | Tc155 | · · · · · · |
| ⋮ | ⋮ | ⋮ | ⋮ | ⋮ | ⋮ | ⋱ |

**Tc111 (Tcijk)**

| | Vr1 | Vr2 | Vr3 | Vr4 | Vr5 | · · · · · · |
|---|---|---|---|---|---|---|
| Hr1 | CS11111 | CS11112 | CS11113 | CS11114 | CS11115 | · · · · · · |
| Hr2 | CS11121 | CS11122 | CS11123 | CS11124 | CS11125 | · · · · · · |
| Hr3 | CS11131 | CS11132 | CS11133 | CS11134 | CS11135 | · · · · · · |
| Hr4 | CS11141 | CS11142 | CS11143 | CS11144 | CS11145 | · · · · · · |
| Hr5 | CS11151 | CS11152 | CS11153 | CS11154 | CS11155 | · · · · · · |
| ⋮ | ⋮ | ⋮ | ⋮ | ⋮ | ⋮ | ⋱ |

# FIG. 34

A3

**CONTROL PROCESSING UNIT** (40b)

- **IMAGE CAPTURING UNIT** (10)
- **ILLUMINATION UNIT** (20)
  - **LIGHT SOURCE UNIT** (21)
- **OUTPUT UNIT** (50)
- **CARRYING UNIT** (60)

Control Processing Unit (40b):
- IMAGE CAPTURING POSITION DETECTION UNIT (41)
- DEFECT CANDIDATE DETECTION UNIT (42)
- INTRA-PATTERN POSITION ACQUISITION UNIT (43b)
- POSITION ACQUISITION UNIT (44b)
- NORMALIZATION UNIT (45)
- IDENTIFYING VALUE ACQUISITION UNIT (46)
- CORRECTION VALUE ACQUISITION UNIT (47)
- CORRECTION UNIT (48)
- IDENTIFYING UNIT (49)

**STORAGE UNIT** (30)
- NORMALIZATION DATABASE (31)
- CORRECTION DATABASE (32)
- SHAPE DATABASE (33)

# FIG. 35

## FIG. 36

# FIG. 37

# FIG. 38

| INTRA-PATTERN POSITION VARIABLE | Lb1 | Lb2 | Lb3 | Lb4 | Lb5 | Lb6 |
|---|---|---|---|---|---|---|
| CORRECTION VALUE | CR1 | CR2 | CR3 | CR4 | CR5 | CR6 |

## FIG. 39

Pc3

Pt31

| | 0 | X1 | X2 | X3 | X4 |
|---|---|---|---|---|---|

## FIG. 40

32f

| | 0 | X1 | X2 | X3 | X4 |
|---|---|---|---|---|---|
| Y4 | CH04 | CH14 | CH24 | CH34 | CH44 |
| Y3 | CH03 | CH13 | CH23 | CH33 | CH43 |
| Y2 | CH02 | CH12 | CH22 | CH32 | CH42 |
| Y1 | CH01 | CH11 | CH21 | CH31 | CH41 |
| 0 | CH00 | CH10 | CH20 | CH30 | CH40 |

## FIG. 41

## FIG. 42

|  | 0 | r1 | r2 | r3 | r4 | r5 | r6 | r7 | r8 | r9 |
|---|---|---|---|---|---|---|---|---|---|---|
| 0 | CK00 | CK10 | CK20 | CK30 | CK40 | CK50 | CK60 | CK70 | — | — |
| θ1 | — | CK11 | CK21 | CK31 | CK41 | CK51 | CK61 | CK71 | CK81 | CK91 |
| θ2 | — | CK12 | CK22 | CK32 | CK42 | CK52 | CK62 | CK72 | — | — |
| θ3 | — | CK13 | CK23 | CK33 | CK43 | CK53 | CK63 | CK73 | — | — |
| θ4 | — | CK14 | CK24 | CK34 | CK44 | CK54 | CK64 | CK74 | CK84 | CK94 |
| θ5 | — | CK15 | CK25 | CK35 | CK45 | CK55 | CK65 | CK75 | — | — |
| θ6 | — | CK16 | CK26 | CK36 | CK46 | CK56 | CK66 | CK76 | CK86 | CK96 |
| θ7 | — | CK17 | CK27 | CK37 | CK47 | CK57 | CK67 | CK77 | — | — |
| θ8 | — | CK18 | CK28 | CK38 | CK48 | CK58 | CK68 | CK78 | — | — |
| θ9 | — | CK19 | CK29 | CK39 | CK49 | CK59 | CK69 | CK79 | CK89 | CK99 |

# FIG. 43

START

S101 — EMIT PATTERN ILLUMINATION S1

S102 — IS INSPECTION REGION FITTED WITHIN ANGLE OF VIEW? — No

Yes

S103 — CAPTURE IMAGE

S104 — DETECT IMAGE CAPTURING POSITION

S105 — IS THERE ANY DEFECT CANDIDATE? — No

Yes

S1062 — ACQUIRE INTRA-PATTERN POSITIONAL INFORMATION

S1072 — ACQUIRE POSITION OF DEFECT CANDIDATE

S108 — NORMALIZE LUMINANCE

S109 — ACQUIRE IDENTIFYING VALUE

S110 — ACQUIRE CORRECTION VALUE

S111 — PERFORM CORRECTION

S112 — IDENTIFY DEFECT

S113 — IS THERE ANY DEFECT? — No

Yes

S114 — OUTPUT DEFECT POSITION

S115 — HAS IDENTIFICATION BEEN COMPLETED? — No

Yes

END

# FIG. 44

# FIG. 45

## FIG. 46

## FIG. 47    32h

**Td**

| INTRA-PATTERN POSITION VARIABLE | Lb1 | Lb2 | Lb3 | Lb4 | Lb5 | Lb6 |
|---|---|---|---|---|---|---|
| CORRECTION VALUE | Td1 | Td2 | Td3 | Td4 | Td5 | Td6 |

**Td1 (Tdi)**

| | Ds1 | Ds2 | Ds3 | Ds4 | Ds5 | · · · · · · |
|---|---|---|---|---|---|---|
| Lb1 | Td111 | Td112 | Td113 | Td114 | Td115 | · · · · · · |
| Lb2 | Td121 | Td122 | Td123 | Td124 | Td125 | · · · · · · |
| Lb3 | Td131 | Td132 | Td133 | Td134 | Td135 | · · · · · · |
| Lb4 | Td141 | Td142 | Td143 | Td144 | Td145 | · · · · · · |
| Lb5 | Td151 | Td152 | Td153 | Td154 | Td155 | · · · · · · |
| ⋮ | ⋮ | ⋮ | ⋮ | ⋮ | ⋮ | ⋱ |

**Td111 (Tdijk)**

| | Vr1 | Vr2 | Vr3 | Vr4 | Vr5 | · · · · · · |
|---|---|---|---|---|---|---|
| Hr1 | CG11111 | CG11112 | CG11113 | CG11114 | CG11115 | · · · · · · |
| Hr2 | CG11121 | CG11122 | CG11123 | CG11124 | CG11125 | · · · · · · |
| Hr3 | CG11131 | CG11132 | CG11133 | CG11134 | CG11135 | · · · · · · |
| Hr4 | CG11141 | CG11142 | CG11143 | CG11144 | CG11145 | · · · · · · |
| Hr5 | CG11151 | CG11152 | CG11153 | CG11154 | CG11155 | · · · · · · |
| ⋮ | ⋮ | ⋮ | ⋮ | ⋮ | ⋮ | ⋱ |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9318337 A
- JP 8086634 A

- JP 2016223911 A